# EUROPEAN PATENT APPLICATION

(11) **EP 4 582 271 A1**
(43) Date of publication of application: **09.07.2025**
(21) Application number: 23869943.3
(22) Date of filing: 21.07.2023
(51) Int. Cl.: B60H 1/00

(54) **HEAT MANAGEMENT SYSTEM AND ELECTRIC VEHICLE**

(30) Priority: 30.09.2022 CN 202211217086
(71) Applicant: Shenzhen Yinwang Intelligent Technologies Co., Ltd., Shenzhen, Guangdong 518129 (CN)
(72) Inventor: HU, Haomang, Shenzhen, Guangdong 518129 (CN); LI, Hao, Shenzhen, Guangdong 518129 (CN); WANG, Jinlong, Shenzhen, Guangdong 518129 (CN)
(74) Representative: Körber, Martin Hans
(86) International application number: PCT/CN2023/108739
(87) International publication number: WO 2024/066696

(57) **Abstract**

A thermal management system is provided, including a thermal system loop, a battery heat exchange loop, an electric-drive heat dissipation loop, and a heater. The heater may be disposed in any one of the thermal system loop, the battery heat exchange loop, and the electric-drive heat dissipation loop. The heater is configured to heat a first cooling medium flowing through a compressor in the thermal system loop, to increase a temperature and a pressure of the first cooling medium entering the compressor. An electric vehicle is provided, including a controller and the thermal management system. In this way, in a low-temperature environment, the compressor can also be turned on normally, so that the thermal management system can heat a passenger compartment of the electric vehicle.

## Description

### CROSS-REFERENCE TO RELATED APPLICATIONS

This application claims priority to Chinese Patent Application No. 202211217086.4, filed with the China National Intellectual Property Administration on September 30, 2022 and entitled "THERMAL MANAGEMENT SYSTEM AND ELECTRIC VEHICLE", which is incorporated herein by reference in its entirety.

### TECHNICAL FIELD

This application relates to the field of thermal management technologies, and in particular, to a thermal management system and an electric vehicle.

### BACKGROUND

In recent years, electric vehicles have been increasingly widely used in the field of power electronics. Electric vehicles store electric energy for endurance and driving, and users can directly implement operations such as charging at home. In comparison with conventional vehicles, the electric vehicles are conducive to environmental protection, and there is no need for the users to go to gas stations to refuel. This helps improve convenience of the users' lives.

As an important part of electric vehicles, an air conditioning system is used to adjust a temperature and humidity in a compartment, to provide a comfortable riding environment for passengers. However, in an environment with a temperature of minus 18 degrees Celsius or lower, because a temperature and a pressure of a cooling medium at an inlet of a compressor are excessively low, the compressor cannot work normally. Consequently, the air conditioning system cannot perform heating. In view of this, in a current phase, thermal management on electric vehicles needs to be further studied.

### SUMMARY

This application provides a thermal management system and an electric vehicle, to implement a heating function in a low-temperature environment.

According to a first aspect, this application provides a thermal management system. The thermal management system includes a first valve body, a water pipeline, a cooler, a compressor, and a heating unit. Specifically, an inlet and an outlet of the water pipeline are separately connected to the first valve body. The cooler has a first path and a second path that are isolated from each other. An inlet of the first path of the cooler is connected to an outlet of the compressor, and an outlet of the first path of the cooler is connected to an inlet of the compressor, to form a first liquid cooling loop. An inlet of the second path of the cooler and an outlet of the second path of the cooler are separately connected to the first valve body. The first valve body may be configured to switch between different connection states. Different connection states may include connecting the second path of the cooler and the water pipeline, to form a first water loop, so that the first water loop and the first liquid cooling loop perform heat exchange. The heating unit may be disposed in the first liquid cooling loop, at the inlet of the second path of the cooler, or on the water pipeline. In the foregoing thermal management system, the heating unit may directly heat the first liquid cooling loop in which the compressor is located, or may heat the second path of the cooler or the water pipeline, to indirectly heat the compressor. In this way, a temperature and a pressure in the compressor can be increased, so that the compressor can also be turned on normally in a low-temperature environment, and the thermal management system can heat a passenger compartment of an electric vehicle.

Specifically, the first valve body may include a first port, a second port, a fifth port, and a sixth port. The thermal management system may further include an air conditioner box in the passenger compartment, a first condenser, and a first pump. The inlet of the second path of the cooler is connected to the fifth port of the first valve body, and the outlet of the second path of the cooler is connected to the sixth port of the first valve body. The first condenser has a first path and a second path that are isolated from each other. The first path of the first condenser is located between the compressor and the first path of the cooler, an inlet of the first path of the first condenser is connected to the outlet of the compressor, and an outlet of the first path of the first condenser is connected to the inlet of the first path of the cooler. The air conditioner box in the passenger compartment has a first path and a second path that are isolated from each other. An inlet of the first path of the air conditioner box in the passenger compartment is connected to the outlet of the compressor, and an outlet of the first path of the air conditioner box in the passenger compartment is connected to the inlet of the compressor, to form a second liquid cooling loop. The water pipeline includes a first pipeline, and the first pipeline sequentially passes through the first pump, the second path of the air conditioner box in the passenger compartment, and the second path of the first condenser. An inlet of the first pump is connected to the second port of the first valve body, and an outlet of the second path of the first condenser is connected to the first port of the first valve body.

In the foregoing embodiment, connecting the second path of the cooler and the water pipeline may specifically include connecting the second path of the cooler and the first pipeline,. In addition, different connection states may further include connecting the first pipeline, so that the first pipeline forms a second water loop by using the first valve body, to implement self-circulation. In this way, the second water loop may perform heat exchange with the first liquid cooling loop via the air conditioner box in the passenger compartment.

In addition, the first valve body may further include a third port and a fourth port. The thermal management system may further include a second pump and a battery. In addition to the first pipeline, the water pipeline may further include a second pipeline. The second pipeline may sequentially pass through the second pump and the battery, where an inlet of the second pump is connected to the third port of the first valve body, an outlet of the second pump is connected to an inlet of the battery, and an outlet of the battery is connected to the fourth port of the first valve body.

In the foregoing embodiment, the water pipeline may further include a second three-way valve. The second three-way valve has a first port, a second port, and a third port. The second three-way valve may divide the second pipeline into two branches. Specifically, the first port of the second three-way valve is connected to the outlet of the second pump, the second port of the second three-way valve is connected to the inlet of the battery, and the third port of the second three-way valve is connected to the fourth port of the first valve body.

In this application, the first pipeline and the second pipeline of the water pipeline may be connected through a first valve body, or may be connected through another valve body. For example, in a specific embodiment, the water pipeline may further include a first three-way valve. The first three-way valve has a first port, a second port, and a third port. The first port of the first three-way valve is connected to an inlet of the second path of the first condenser, the second port of the first three-way valve is connected to an outlet of the first pump, and the third port of the first three-way valve is connected to the inlet of the second pump.

In addition, in the foregoing embodiment, a third one-way valve may be disposed between the inlet of the second pump and the inlet of the second path of the first condenser. The third one-way valve is used for the inlet of the second pump and the inlet of the second path of the first condenser to communicate unidirectionally.

In the foregoing embodiment, when the first valve body is switched to a connection state of connecting the second path of the cooler and the water pipeline, connecting the second path of the cooler and the second pipeline may be specifically included. Certainly, the first valve body may alternatively be switched to another connection state. For example, different connection states may further include separately connecting the first pipeline and the second pipeline to form a third water loop. In the connection state, the first pipeline and the second pipeline may circulate separately, and the first pipeline and the second pipeline may be connected through the first three-way valve, so that the third water loop performs heat exchange with the first liquid cooling loop via the air conditioner box in the passenger compartment. Alternatively, the first pipeline and the second pipeline may be directly connected through the first valve body, that is, different connection states may further include connecting the first pipeline and the second pipeline, to form a fourth water loop, so that the fourth water loop performs heat exchange with the first liquid cooling loop via the air conditioner box in the passenger compartment.

The first valve body may further include a seventh port, an eighth port, and a ninth port. The thermal management system may further include a third pump and an electric-drive apparatus. The water pipeline may further include a third pipeline. The third pipeline passes through the electric-drive apparatus and the third pump, where an inlet of the electric-drive apparatus is connected to the seventh port of the first valve body and/or the ninth port of the first valve body, an outlet of the electric-drive apparatus is connected to an inlet of the third pump, and an outlet of the third pump is connected to the eighth port of the first valve body.

In the foregoing embodiment, when the heating unit is disposed on the third pipeline, the water pipeline may further include a third three-way valve. The third three-way valve has a first port, a second port, and a third port. The first port of the third three-way valve is connected to the seventh port of the first valve body or the ninth port of the first valve body V1. The second port of the third three-way valve is connected to the inlet of the electric-drive apparatus, the third port of the third three-way valve is connected to an inlet of the heating unit, and an outlet of the heating unit is connected to the inlet of the third pump.

In addition, the water pipeline may further include a thermal management assembly in a front compartment, an inlet of the thermal management assembly in the front compartment may be connected to the seventh port of the first valve body, and an outlet of the thermal management assembly in the front compartment is connected to the inlet of the electric-drive apparatus.

In the foregoing embodiment, when the first valve body is switched to a state of connecting the second path of the cooler and the water pipeline, connecting the second path of the cooler and the third pipeline may be specifically included, so that the third pipeline performs heat exchange with the first liquid cooling loop via the second path of the cooler. Alternatively, the connection state may include connecting the second path of the cooler, the second pipeline, and the third pipeline, so that the three pipelines are connected, and a circulation is implemented.

In Embodiment 4, an evaporator may be disposed in the first path of the air conditioner box in the passenger compartment, and a heater core may be disposed in the second path of the air conditioner box in the passenger compartment. Alternatively, an evaporator may be disposed in the first path of the air conditioner box in the passenger compartment, and a second condenser may be disposed in the second path of the air conditioner box in the passenger compartment.

According to a second aspect, this application provides an electric vehicle. The electric vehicle includes a controller and the thermal management system in the first aspect. The controller is connected to a first valve body of the thermal management system. The controller is configured to control the first valve body to switch to different connection states, so that the thermal management system runs in any one of the following modes: a passenger compartment is separately heated, a battery is separately heated, and the passenger compartment and the battery are simultaneously heated. According to the design, the electric vehicle can freely switch to any one of the following modes: the passenger compartment is separately heated, the battery is separately heated, and the passenger compartment and the battery are simultaneously heated. This helps heat the passenger compartment in a low-temperature environment, and improves driving experience of a user.

According to a third aspect, this application provides a thermal management system. The thermal management system includes a thermal system loop and a heater disposed in the thermal system loop. Specifically, the thermal system loop may include a compressor, a cooler, and an air conditioner box in a passenger compartment. The cooler has a first path, and the air conditioner box in the passenger compartment has a first path. An inlet of the first path of the cooler and an inlet of the first path of the air conditioner box in the passenger compartment are separately connected to an outlet of the compressor. An outlet of the first path of the cooler and an outlet of the first path of the air conditioner box in the passenger compartment are separately connected to an inlet of the compressor. In addition, the thermal system loop is provided with a first cooling medium. The first cooling medium circulates between the compressor and the first path of the cooler and between the compressor and the first path of the air conditioner box in the passenger compartment. The heater is configured to heat the first cooling medium.

In the thermal management system, the first cooling medium circulates between the compressor and the cooler to form a first loop; and the first cooling medium circulates between the compressor and the first path of the air conditioner box in the passenger compartment to form a second loop. When the thermal management system performs heating, the heater may heat the first cooling medium in the thermal system loop, to increase a temperature and a pressure of the first cooling medium entering the compressor. In this way, even in a low-temperature environment, the compressor can also be turned on normally, so that the thermal management system can heat the passenger compartment of an electric vehicle.

The thermal system loop may further include a first throttle valve. The first throttle valve is connected between the outlet of the first path of the air conditioner box in the passenger compartment and the inlet of the compressor, and is used for the outlet of the first path of the air conditioner box in the passenger compartment and the inlet of the compressor to communicate or not communicate with each other. When the first throttle valve is opened, the outlet of the first path of the air conditioner box in the passenger compartment and the inlet of the compressor communicate with each other. In other words, the first cooling medium may simultaneously circulate in the first loop and the second loop. When the first throttle valve is closed, the outlet of the first path of the air conditioner box in the passenger compartment does not communicate with the inlet of the compressor. In other words, the first cooling medium circulates only in the first loop. In this way, the first throttle valve is controlled, so that a circulation flow path and a flow rate of the first cooling medium can be controlled.

When the thermal system loop is specifically disposed, the heater may be an independently disposed heating apparatus, that is, may be separately disposed in the thermal system loop. Specifically, the heater may be disposed between the cooler and the compressor, where an inlet of the heater is connected to the outlet of the first path of the cooler, and an outlet of the heater is connected to the inlet of the compressor, so that the heater can heat the first cooling medium in the first loop. Alternatively, the heater may also be disposed at the inlet of the compressor, where an inlet of the heater is connected to the outlet of the first path of the cooler and the outlet of the first path of the air conditioner box in the passenger compartment, and an outlet of the heater is connected to the inlet of the compressor, so that the heater may heat the first cooling medium in the first loop and the second loop.

Alternatively, in another technical solution, the heater may be disposed in the compressor. Specifically, the heater may include a compressor motor and a motor controller that are connected. The compressor may include a compressor body and a scroll disposed on the compressor body. The compressor motor is connected to the scroll. The compressor motor is configured to provide a power source for the compressor. Because the compressor motor generates more heat in a low-efficiency mode than in a normal working state, in the technical solution, the first cooling medium may be heated by using excess heat generated by the compressor motor in the low-efficiency mode, so that a structure of the thermal management system may be simplified.

In the technical solution of this application, the thermal system loop may further include a first condenser, and the first condenser has a first path. An inlet of the first path of the first condenser is connected to the outlet of the compressor, and an outlet of the first path of the first condenser is connected to the inlet of the first path of the cooler and the inlet of the first path of the air conditioner box in the passenger compartment. In this case, the first loop includes the compressor, the first path of the first condenser, and the first path of the cooler; and the second loop includes the compressor, the first path of the first condenser, and the air conditioner box in the passenger compartment. In this technical solution, the first cooling medium flowing out from the outlet of the compressor is a high-temperature and high-pressure liquid, and performs initial heat exchange via the first condenser. The first cooling medium output by the first condenser is a high-temperature and high-pressure liquid, and then the first cooling medium may be divided into two parts: One part flows into the cooler for secondary heat exchange, and the other part flows into the air conditioner box in the passenger compartment through the throttle valve, to implement cooling of the passenger compartment.

In one technical solution, the air conditioner box in the passenger compartment may further have a second path, where the first path and the second path of the air conditioner box in the passenger compartment are isolated from each other. Specifically, an evaporator may be disposed in the first path of the air conditioner box in the passenger compartment, and a heater core may be disposed in the second path of the air conditioner box in the passenger compartment. The first condenser may further have a second path, and the first path and the second path of the first condenser are isolated from each other. In addition, the thermal management system may further include a first valve body. The first valve body includes a first path, and the first path of the first valve body has a first port and a second port. The thermal system loop may further include a first pump. The second port of the first valve body is connected to an inlet of the first pump, an outlet of the first pump is connected to an inlet of the heater core, an outlet of the heater core is connected to an inlet of the second path of the first condenser, and an outlet of the second path of the first condenser is connected to the first port of the first valve body. The thermal system loop is further provided with a second cooling medium, and the first pump is configured to drive the second cooling medium to circulate in a third loop formed between the second path of the first condenser and the heater core. In this manner, heat that is of the second cooling medium and that is exchanged in the first condenser may be blown out through the heater core, to heat air in the passenger compartment.

In an optional technical solution, the thermal system loop may further include a first liquid storage tank. An inlet of the first liquid storage tank is connected to the outlet of the first path of the first condenser, and an outlet of the first liquid storage tank is connected to the inlet of the first path of the cooler and an inlet of the evaporator. The first liquid storage tank may store a specific amount of liquid-state cooling medium in the thermal system loop, to ensure a specific annual leakage amount of the cooling medium.

In another optional technical solution, the thermal system loop may also include a gas-liquid separator. An inlet of the gas-liquid separator is connected to the outlet of the first path of the cooler and the outlet of the evaporator, and an outlet of the gas-liquid separator is connected to the inlet of the compressor. In the design, the gas-liquid separator can be used to implement a liquid storage function, and the gas-liquid separator can be used to retain liquid in a gas-liquid mixture, and only gas is allowed to flow into the compressor, to improve compression effect of the compressor. Certainly, in an optional technical solution, the thermal system loop may also include both the first liquid storage tank and the gas-liquid separator.

In another technical solution, the air conditioner box in the passenger compartment may also have a second path, where the first path of the air conditioner box in the passenger compartment and the second path of the air conditioner box in the passenger compartment are isolated from each other. Specifically, an evaporator is disposed in the first path of the air conditioner box in the passenger compartment, and a second condenser is disposed in the second path of the air conditioner box in the passenger compartment. An inlet of the second condenser is connected to the outlet of the compressor, and an outlet of the second condenser is connected to the inlet of the first path of the cooler and an inlet of the evaporator. The first condenser further has a second path, and the first path of the first condenser and the second path of the first condenser are isolated from each other. In addition, the thermal management system further includes a first valve body. The first valve body includes a first path, and the first path of the first valve body has a first port and a second port. The thermal system loop further includes a first pump. The second port of the first valve body is connected to an inlet of the first pump, an outlet of the first pump is connected to an inlet of the second path of the first condenser, and an outlet of the second path of the first condenser is connected to the first port of the first valve body. The thermal system loop is further provided with a second cooling medium, and the first pump is configured to drive the second cooling medium to circulate in the second path of the first condenser. When the first condenser stops working, the first cooling medium flowing out from the outlet of the compressor may flow into the second condenser. In the air conditioner box in the passenger compartment, a low-temperature and low-pressure first cooling medium in the evaporator performs heat exchange with the high-temperature and high-pressure first cooling medium in the second condenser, so that air blown out from the air conditioner box in the passenger compartment can be maintained at a relatively suitable temperature.

In an optional technical solution, the thermal system loop may further include a second liquid storage tank. An inlet of the second liquid storage tank is connected to the outlet of the first path of the first condenser and the outlet of the second condenser, and an outlet of the second liquid storage tank is connected to the inlet of the first path of the cooler and the inlet of the evaporator. In this way, the first liquid storage tank may store a specific amount of liquid-state cooling medium in the thermal system loop, to ensure a specific annual leakage amount of the cooling medium.

A first one-way valve may be further disposed between the outlet of the first path of the first condenser and the inlet of the second liquid storage tank, and the first one-way valve is used for the outlet of the first path of the first condenser and the inlet of the second liquid storage tank to communicate unidirectionally. A second one-way valve is disposed between the outlet of the second condenser and the inlet of the second liquid storage tank, and the second one-way valve is used for the outlet of the second condenser and the inlet of the second liquid storage tank to communicate unidirectionally. In this way, the first one-way valve and the second one-way valve are controlled, so that a flow path of the first cooling medium in the thermal system loop can be controlled.

In the foregoing technical solution, a specific location of the heater is not limited. In an optional technical solution, the heater may be disposed between the first pump and the second path of the first condenser. Specifically, the inlet of the heater is connected to the outlet of the first pump, and the outlet of the heater is connected to the inlet of the second path of the first condenser. Alternatively, the inlet of the heater is connected to the outlet of the second path of the first condenser, and the outlet of the heater is connected to the inlet of the first pump. In this manner, the heater may directly heat the second cooling medium, and in the first condenser, the second cooling medium performs heat exchange with the first cooling medium, to implement heating of the first cooling medium.

In another optional technical solution, the heater may also be disposed between the first condenser and the air conditioner box in the passenger compartment. Specifically, the inlet of the heater is connected to the outlet of the first path of the first condenser, and the outlet of the heater is connected to the inlet of the first path of the air conditioner box in the passenger compartment. In this way, the heater may directly heat the first cooling medium that enters the first path of the air conditioner box in the passenger compartment. Alternatively, in another optional technical solution, the heater may be disposed between the first condenser and the compressor. Specifically, the inlet of the heater is connected to the outlet of the first path of the first condenser, and the outlet of the heater is connected to the inlet of the compressor. In this manner, a part of the first cooling medium flowing out from the outlet of the first path of the first condenser may directly flow into the inlet of the compressor, and the heater may directly heat this part of the first cooling medium.

In the technical solution of this application, the thermal management system may further include a battery heat exchange loop. The battery heat exchange loop may include a battery and a second pump. The first valve body may further include a second path and a third path. The second path of the first valve body has a third port and a sixth port. The third path of the first valve body has a fourth port and a fifth port. Specifically, the third port of the first valve body is connected to an inlet of the second pump, an outlet of the second pump is connected to an inlet of the battery, and an outlet of the battery is connected to the fourth port of the first valve body. The cooler further has a second path, and the first path of the cooler and the second path of the cooler are isolated from each other. The fifth port of the first valve body is connected to an inlet of the second path of the cooler, and an outlet of the second path of the cooler is connected to the sixth port of the first valve body. The second pump is configured to drive a third cooling medium to circulate between the battery heat exchange loop and the second path of the cooler. In this way, the port of the first valve body is controlled, so that the battery heat exchange loop and the third loop of the thermal system loop can be connected or disconnected.

The first valve body may further include a fourth path and a fifth path. The fourth path of the first valve body has the first port and the third port, and the fifth path of the first valve body has the second port and the fourth port. When the fourth path and the fifth path of the first valve body are connected, the battery heat exchange loop and the third loop of a passenger compartment loop are connected.

The inlet of the second pump is connected to the inlet of the second path of the first condenser. A first three-way valve is disposed between the inlet of the second path of the first condenser and the outlet of the first pump. The first three-way valve has a first port, a second port, and a third port. The first port of the first three-way valve is connected to the inlet of the second path of the first condenser, the second port of the first three-way valve is connected to the outlet of the first pump, and the third port of the first three-way valve is connected to the inlet of the second pump. The ports of the first three-way valve are controlled to communicate or not communicate with each other, so that flow rates of the cooling medium flowing out from the first pump into the first condenser and the second pump separately can be controlled.

In an optional technical solution, a third one-way valve may be disposed between the inlet of the second pump and the inlet of the second path of the first condenser, and the third one-way valve is used for the inlet of the second pump and the inlet of the second path of the first condenser to communicate unidirectionally, to avoid backflow of the cooling medium.

According to a fourth aspect, this application provides an electric vehicle. The electric vehicle includes a controller and the thermal management system in the third aspect. The controller is connected to the thermal management system, and the controller is configured to control the thermal management system to run in a mode in which a passenger compartment is separately heated. According to the design, the electric vehicle can implement the mode in which the passenger compartment is separately heated. This helps heat the passenger compartment in a low-temperature environment, and improves driving experience of a user.

In an optional technical solution, the thermal management system may further include a first valve body and a battery heat exchange loop. The controller may be connected to the first valve body. The controller may be configured to control ports of the first valve body to communicate or not communicate with each other, to implement any one of the following modes: the mode in which the passenger compartment is separately heated, a mode in which a battery is separately heated, and a mode in which the passenger compartment and the battery are simultaneously heated. According to the design, the electric vehicle can freely switch to any one of the following modes: the passenger compartment is separately heated, the battery is separately heated, and the passenger compartment and the battery are simultaneously heated. This helps enable the electric vehicle to meet different requirements of various users, and improves driving experience of the users.

According to a fifth aspect, this application provides a thermal management system. The thermal management system may include a thermal system loop, a first valve body, a battery heat exchange loop, and a heater. The heater is disposed in the battery heat exchange loop. The first valve body includes a second path and a third path. The second path of the first valve body has a third port and a sixth port. The third path of the first valve body has a fourth port and a fifth port. In addition, the thermal system loop includes a compressor and a cooler. The cooler has a first path and a second path that are isolated from each other. Specifically, an inlet of the first path of the cooler is connected to an outlet of the compressor, and an outlet of the first path of the cooler is connected to an inlet of the compressor. An inlet of the second path of the cooler is connected to the fifth port of the first valve body, and an outlet of the second path of the cooler is connected to the sixth port of the first valve body. The thermal system loop is provided with a first cooling medium, and the first cooling medium circulates between the compressor and the first path of the cooler. In addition, the battery heat exchange loop may include a second pump, a second three-way valve, and a battery. The second three-way valve has a first port, a second port, and a third port. An inlet of the second pump is connected to the third port of the first valve body, an outlet of the second pump is connected to the first port of the second three-way valve, the second port of the second three-way valve is connected to an inlet of the battery, and the third port of the second three-way valve and an outlet of the battery are connected to the fourth port of the first valve body. The second pump is configured to drive a third cooling medium to circulate between the battery heat exchange loop and the second path of the cooler. In the thermal management system, the heater is configured to heat the third cooling medium, so that the third cooling medium can perform heat exchange with the first cooling medium in the cooler when circulating in the battery heat exchange loop, and heat the first cooling medium. In this way, a temperature and a pressure of the first cooling medium entering the compressor can be increased. In this way, even in a low-temperature environment, the compressor can also be turned on normally, so that the thermal management system can heat a passenger compartment of an electric vehicle.

When the heater is specifically disposed, a location of the heater is not limited. In an optional technical solution, an inlet of the heater may be connected to the third port of the second three-way valve, and an outlet of the heater may be connected to the fourth port of the first valve body. In another optional technical solution, an inlet of the heater may alternatively be connected to the third port of the second three-way valve and the outlet of the battery, and an outlet of the heater may be connected to the fourth port of the first valve body. In another optional technical solution, an inlet of the heater may alternatively be connected to the fifth port of the first valve body, and an outlet of the heater may be connected to the inlet of the second path of the cooler.

In the foregoing technical solution, the first valve body may further include a first path. The first path of the first valve body has a first port and a second port. The thermal system loop may further include a first condenser, an air conditioner box in the passenger compartment, and a first pump. The first condenser has a first path and a second path that are isolated from each other. The air conditioner box in the passenger compartment includes an evaporator and a heater core. An inlet of the first path of the first condenser is connected to the outlet of the compressor, an outlet of the first path of the first condenser is connected to the inlet of the first path of the cooler and an inlet of the evaporator, and an outlet of the evaporator is connected to the inlet of the compressor. The second port of the first valve body is connected to an inlet of the first pump, an outlet of the first pump is connected to an inlet of the heater core, an outlet of the heater core is connected to an inlet of the second path of the first condenser, and an outlet of the second path of the first condenser is connected to the first port of the first valve body. The thermal system loop is further provided with a second cooling medium, and the first pump is configured to drive the second cooling medium to circulate between the second path of the first condenser and a second path of the air conditioner box in the passenger compartment. In this manner, heat that is of the second cooling medium and that is exchanged in the first condenser may be blown out through the heater core, to heat air in the passenger compartment.

In an optional technical solution, the thermal system loop may further include a first liquid storage tank. An inlet of the first liquid storage tank is connected to the outlet of the first path of the first condenser, and an outlet of the first liquid storage tank is connected to the inlet of the first path of the cooler and the inlet of the evaporator. The first liquid storage tank may store a specific amount of liquid-state cooling medium in the thermal system loop, to ensure a specific annual leakage amount of the cooling medium.

In another optional technical solution, the thermal system loop may also include a gas-liquid separator. An inlet of the gas-liquid separator is connected to the outlet of the first path of the cooler and the outlet of the evaporator, and an outlet of the gas-liquid separator is connected to the inlet of the compressor. In the design, the gas-liquid separator can be used to implement a liquid storage function, and the gas-liquid separator can be used to retain liquid in a gas-liquid mixture, and only gas is allowed to flow into the compressor, to improve compression effect of the compressor. Certainly, in an optional technical solution, the thermal system loop may also include both the first liquid storage tank and the gas-liquid separator.

In the technical solution of this application, the first valve body may also include a first path. The first path of the first valve body has a first port and a second port. The thermal system loop further includes a first condenser, an air conditioner box in a passenger compartment, and a first pump. The first condenser has a first path and a second path that are isolated from each other, and the air conditioner box in the passenger compartment includes an evaporator and a second condenser. The outlet of the compressor is connected to an inlet of the first path of the first condenser and an inlet of the second condenser, an outlet of the first path of the first condenser is connected to the inlet of the first path of the cooler and an inlet of the evaporator, an outlet of the second condenser is connected to the inlet of the first path of the cooler and the inlet of the evaporator, and an outlet of the evaporator is connected to the inlet of the compressor. The second port of the first valve body is connected to an inlet of the first pump, an outlet of the first pump is connected to an inlet of the second path of the first condenser, and an outlet of the second path of the first condenser is connected to the first port of the first valve body. The thermal system loop is further provided with a second cooling medium, and the first pump is configured to drive the second cooling medium to circulate in the second path of the first condenser. When the first condenser stops working, the first cooling medium flowing out from the outlet of the compressor may flow into the second condenser. In the air conditioner box in the passenger compartment, a low-temperature and low-pressure first cooling medium in the evaporator performs heat exchange with the high-temperature and high-pressure first cooling medium in the second condenser, so that air blown out from the air conditioner box in the passenger compartment can be maintained at a relatively suitable temperature.

In an optional technical solution, the thermal system loop further includes a second liquid storage tank. An inlet of the second liquid storage tank is connected to the outlet of the first path of the first condenser and the outlet of the second condenser, and an outlet of the second liquid storage tank is connected to the inlet of the first path of the cooler and the inlet of the evaporator. In this way, the first liquid storage tank may store a specific amount of liquid-state cooling medium in the thermal system loop, to ensure a specific annual leakage amount of the cooling medium.

A first one-way valve is disposed between the outlet of the first path of the first condenser and the inlet of the second liquid storage tank, and the first one-way valve is used for the outlet of the first path of the first condenser and the inlet of the second liquid storage tank to communicate unidirectionally. A second one-way valve is disposed between the outlet of the second condenser and the inlet of the second liquid storage tank, and the second one-way valve is used for the outlet of the second condenser and the inlet of the second liquid storage tank to communicate unidirectionally. In this way, the first one-way valve and the second one-way valve are controlled, so that a flow path of the first cooling medium in the thermal system loop can be controlled.

According to a sixth aspect, this application provides an electric vehicle. The electric vehicle includes a controller and the thermal management system in the fifth aspect. The controller is connected to a first valve body of the thermal management system. The controller is configured to control ports of the first valve body to communicate or not communicate with each other, so that the thermal management system runs in any one of the following modes: a passenger compartment is separately heated, a battery is separately heated, and the passenger compartment and the battery are simultaneously heated. According to the design, the electric vehicle can freely switch to any one of the following modes: the passenger compartment is separately heated, the battery is separately heated, and the passenger compartment and the battery are simultaneously heated. This helps heat the passenger compartment in a low-temperature environment, and improves driving experience of a user.

According to a seventh aspect, this application provides a thermal management system. The thermal management system includes a thermal system loop, a first valve body, an electric-drive heat dissipation loop, and a heater. The heater is disposed in the electric-drive heat dissipation loop. Specifically, the first valve body includes a tenth path, a ninth path, and a twelfth path. The tenth path of the first valve body has a fifth port and an eighth port. The ninth path of the first valve body has a sixth port and a seventh port. The twelfth path of the first valve body has a sixth port and a ninth port. The thermal system loop may include a compressor and a cooler. The cooler has a first path and a second path that are isolated from each other. An inlet of the first path of the cooler is connected to an outlet of the compressor, and an outlet of the first path of the cooler is connected to an inlet of the compressor. An inlet of the second path of the cooler is connected to the fifth port of the first valve body, and an outlet of the second path of the cooler is connected to the sixth port of the first valve body. The thermal system loop is provided with a first cooling medium, and the first cooling medium circulates between the compressor and the first path of the cooler. The electric-drive heat dissipation loop includes an electric-drive apparatus, a third pump, a water tank, and a third three-way valve. An inlet of the electric-drive apparatus is connected to the seventh port of the first valve body and the ninth port of the first valve body, an outlet of the electric-drive apparatus is connected to the water tank and an inlet of the third pump, and an outlet of the heater is connected to the inlet of the third pump. The third pump is configured to drive a fourth cooling medium to circulate between the electric-drive heat dissipation loop and the cooler. The third three-way valve has a first port, a second port, and a third port. The second port of the third three-way valve is connected to the inlet of the electric-drive apparatus, and the third port of the third three-way valve is connected to an inlet of the heater. The first port of the third three-way valve is connected to the ninth port of the first valve body, or the first port of the third three-way valve is connected to the seventh port of the first valve body. In the thermal management system, the heater is configured to heat the fourth cooling medium, so that the fourth cooling medium can perform heat exchange with the first cooling medium in the cooler when circulating between the electric-drive heat dissipation loop and the cooler, and heat the first cooling medium. In this way, a temperature and a pressure of the first cooling medium entering the compressor can be increased. In this way, even in a low-temperature environment, the compressor can also be turned on normally, so that the thermal management system can heat a passenger compartment of an electric vehicle.

In an optional technical solution, the electric-drive heat dissipation loop may further include a thermal management assembly in a front compartment, an inlet of the thermal management assembly in the front compartment is connected to the seventh port of the first valve body, and an outlet of the thermal management assembly in the front compartment is connected to the inlet of the electric-drive apparatus. The second port of the third three-way valve is connected to the inlet of the thermal management assembly in the front compartment; or the second port of the third three-way valve is connected to the outlet of the thermal management assembly in the front compartment and the inlet of the electric-drive apparatus.

According to an eighth aspect, this application provides an electric vehicle. The electric vehicle includes a controller and the thermal management system in the seventh aspect. The controller is connected to the thermal management system, and the control apparatus is configured to control ports of the first valve body to communicate or not communicate with each other, so that the thermal management system runs in a mode in which a passenger compartment is separately heated. According to the design, the electric vehicle can implement the mode in which the passenger compartment is separately heated. This helps heat the passenger compartment in a low-temperature environment, and improves driving experience of a user.

### BRIEF DESCRIPTION OF DRAWINGS

FIG. 1 is a diagram of a structure of a thermal management system according to Embodiment 1 of this application;
FIG. 2 is a diagram of another structure of a thermal management system according to Embodiment 1 of this application;
FIG. 3 is a diagram of another structure of a thermal management system according to Embodiment 1 of this application;
FIG. 4 is a diagram of another structure of a thermal management system according to Embodiment 1 of this application;
FIG. 5 is a diagram of control of a compressor and a heater according to Embodiment 1 of this application;
FIG. 6 is a diagram of another structure of a thermal management system according to Embodiment 1 of this application;
FIG. 7 is a diagram of another structure of a thermal management system according to Embodiment 1 of this application;
FIG. 8 is a diagram of another structure of a thermal management system according to Embodiment 1 of this application;
FIG. 9 is a diagram of another structure of a thermal management system according to Embodiment 1 of this application;
FIG. 10 is a diagram of another structure of a thermal management system according to Embodiment 1 of this application;
FIG. 11 is a diagram of another structure of a thermal management system according to Embodiment 1 of this application;
FIG. 12 is a diagram of another structure of a thermal management system according to Embodiment 1 of this application;
FIG. 13 is a diagram of another structure of a thermal management system according to Embodiment 1 of this application;
FIG. 14 is a diagram of another structure of a thermal management system according to Embodiment 1 of this application;
FIG. 15 is a diagram of a thermal management system in FIG. 6 in a low-temperature start phase;
FIG. 16 is a diagram of a thermal management system in FIG. 15 in a stable phase;
FIG. 17 is a diagram of a thermal management system in FIG. 15 in another stable phase;
FIG. 18 is a diagram of another thermal management system in a stable phase according to an embodiment of this application;
FIG. 19 is a diagram of a thermal management system in FIG. 10 in a stable phase;
FIG. 20 is a diagram of a thermal management system in FIG. 11 in a stable phase;
FIG. 21 is a diagram of a thermal management system in FIG. 12 in a stable phase;
FIG. 22 is a diagram of a thermal management system in FIG. 9 in a stable phase;
FIG. 23 is a diagram of heating a passenger compartment by a thermal management system in FIG. 9 when a refrigerant system fails;
FIG. 24 is a diagram of heating a passenger compartment and heating a battery by a thermal management system in FIG. 9 when a refrigerant system fails;
FIG. 25 is a diagram of heating a passenger compartment by a thermal management system in FIG. 6 under a stable working condition;
FIG. 26 is a pressure-specific enthalpy diagram of a thermal management system in FIG. 25;
FIG. 27 is a diagram of heating a battery by a thermal management system in FIG. 6 at a low temperature;
FIG. 28 is another diagram of heating a battery by a thermal management system in FIG. 6 at a low temperature;
FIG. 29 is another diagram of heating a battery by a thermal management system in FIG. 6 at a low temperature;
FIG. 30 is another diagram of heating a battery by a thermal management system in FIG. 6 at a low temperature;
FIG. 31 is another diagram of heating a battery by a thermal management system in FIG. 6 at an extremely low temperature;
FIG. 32 is another diagram of simultaneously heating a passenger compartment and a battery by a thermal management system in FIG. 6 at an extremely low temperature;
FIG. 33 is a diagram of a thermal management system in FIG. 8 in a low-temperature start phase;
FIG. 34 is a diagram of a thermal management system in FIG. 8 in a stable phase;
FIG. 35 is another diagram of a thermal management system in FIG. 8 in a stable phase;
FIG. 36 is a diagram of a thermal management system in FIG. 8 in a battery fast-charging heating mode;
FIG. 37 is another diagram of a thermal management system in FIG. 8 in a battery fast-charging heating mode;
FIG. 38(a) and FIG. 38(b) are another diagram of a thermal management system in FIG. 8 in a battery fast-charging heating mode;
FIG. 39 is a diagram of a thermal management system in FIG. 8 in a driving hybrid heating mode;
FIG. 40 is another diagram of a thermal management system in FIG. 8 in a driving hybrid heating mode;
FIG. 41 is another diagram of a thermal management system in FIG. 8 in a driving hybrid heating mode;
FIG. 42 is another diagram of a thermal management system in FIG. 8 in a driving hybrid heating mode;
FIG. 43 is a diagram of a cooling medium circulation mode of another thermal management system according to an embodiment of this application;
FIG. 44 is a diagram of a cooling medium circulation mode of another thermal management system according to an embodiment of this application;
FIG. 45 is a diagram of a cooling medium circulation mode of another thermal management system according to an embodiment of this application;
FIG. 46 is a diagram of a cooling medium circulation mode of another thermal management system according to an embodiment of this application;
FIG. 47 is a diagram of a structure of a thermal management system according to Embodiment 2 of this application;
FIG. 48 is a diagram of another structure of a thermal management system according to Embodiment 2 of this application;
FIG. 49 is a diagram of another structure of a thermal management system according to Embodiment 2 of this application;
FIG. 50 is a diagram of heating a passenger compartment by a thermal management system in FIG. 47 when a refrigerant system fails;
FIG. 51 is a diagram of heating a battery by a thermal management system in FIG. 47 when a refrigerant system fails;
FIG. 52 is a diagram of another structure of a thermal management system according to Embodiment 2 of this application;
FIG. 53 is a diagram of another structure of a thermal management system according to Embodiment 2 of this application;
FIG. 54 is a diagram of another structure of a thermal management system according to Embodiment 2 of this application;
FIG. 55 is a diagram of heating a battery by a thermal management system in FIG. 54 when a refrigerant system fails;
FIG. 56 is a diagram of heating a passenger compartment by a thermal management system in FIG. 54 when a refrigerant loop fails;
FIG. 57 is a diagram of another structure of a thermal management system according to Embodiment 2 of this application;
FIG. 58 is a diagram of another structure of a thermal management system according to Embodiment 2 of this application;
FIG. 59 is a diagram of a structure of a thermal management system according to Embodiment 3 of this application;
FIG. 60 is a diagram of another structure of a thermal management system according to Embodiment 3 of this application;
FIG. 61 is a diagram of another structure of a thermal management system according to Embodiment 3 of this application;
FIG. 62 is a diagram of another structure of a thermal management system according to Embodiment 3 of this application; and
FIG. 63 is a diagram of a structure of a thermal management system according to Embodiment 4 of this application.

### DESCRIPTION OF EMBODIMENTS

The following clearly and completely describes the technical solutions in embodiments of this application with reference to the accompanying drawings in embodiments of this application. Reference to "an embodiment", "some embodiments", or the like described in this specification indicates that one or more embodiments of this application include a specific feature, structure, or characteristic described with reference to embodiments. Therefore, statements such as "in an embodiment", "in another embodiment", "in some embodiments", "in other embodiments", or "in some other embodiments" that appear at different places in this specification do not necessarily mean reference to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly.

It should be noted that, in the descriptions of this application, words such as "first" and "second" are merely used for distinction and description, and cannot be understood as an indication or implication of relative importance or an indication or implication of an order. It should be noted that, in this application, all "connections" are connections through pipelines, that is, all "connections" in the following descriptions may be replaced with "connections through pipelines". In addition, a "battery" in the following descriptions may be understood as a pipeline in which the battery is located.

### Embodiment 1

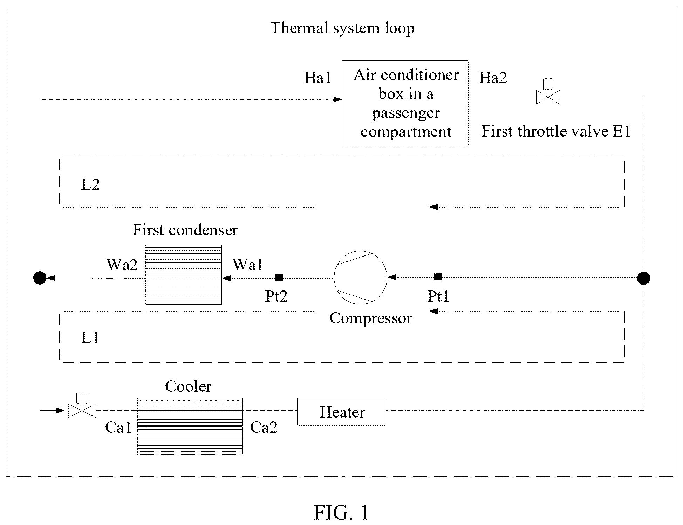

FIG. 1 is a diagram of a structure of a thermal management system according to Embodiment 1 of this application. As shown in FIG. 1, the thermal management system may include a thermal system loop and a heater disposed in the thermal system loop. Specifically, the thermal system loop may include a compressor, a cooler, and an air conditioner box in a passenger compartment. The cooler has a first path, and the air conditioner box in the passenger compartment has a first path. An inlet Ca1 of the first path of the cooler and an inlet Ha1 of the first path of the air conditioner box in the passenger compartment are separately connected to an outlet of the compressor. An outlet Ca2 of the first path of the cooler and an outlet Ha2 of the first path of the air conditioner box in the passenger compartment are separately connected to an inlet of the compressor. In addition, the thermal system loop is provided with a first cooling medium. The first cooling medium circulates between the compressor and the first path of the cooler and between the compressor and the first path of the air conditioner box in the passenger compartment. The heater is configured to heat the first cooling medium.

In the thermal management system according to Embodiment 1, the first cooling medium circulates between the compressor and the cooler to form a first loop L1; and the first cooling medium circulates between the compressor and the first path of the air conditioner box in the passenger compartment to form a second loop L2. When the thermal management system performs heating, the heater may heat the first cooling medium in the thermal system loop, to increase a temperature and a pressure of the first cooling medium entering the compressor. In this way, even in a low-temperature environment, the compressor can also be turned on normally, so that the thermal management system can heat a passenger compartment of an electric vehicle.

The thermal system loop may further include a first throttle valve E1. The first throttle valve E1 is connected between the outlet Ha2 of the first path of the air conditioner box in the passenger compartment and the inlet of the compressor, and is used for the outlet Ha2 of the first path of the air conditioner box in the passenger compartment and the inlet of the compressor to communicate or not communicate with each other. When the first throttle valve E1 is opened, the outlet Ha2 of the first path of the air conditioner box in the passenger compartment and the inlet of the compressor communicate with each other. In other words, the first cooling medium may simultaneously circulate in the first loop L1 and the second loop L2. When the first throttle valve E1 is closed, the outlet Ha2 of the first path of the air conditioner box in the passenger compartment does not communicate with the inlet of the compressor. In other words, the first cooling medium circulates only in the first loop L1. In this way, the first throttle valve E1 is controlled, so that a circulation flow path and a flow rate of the first cooling medium can be controlled.

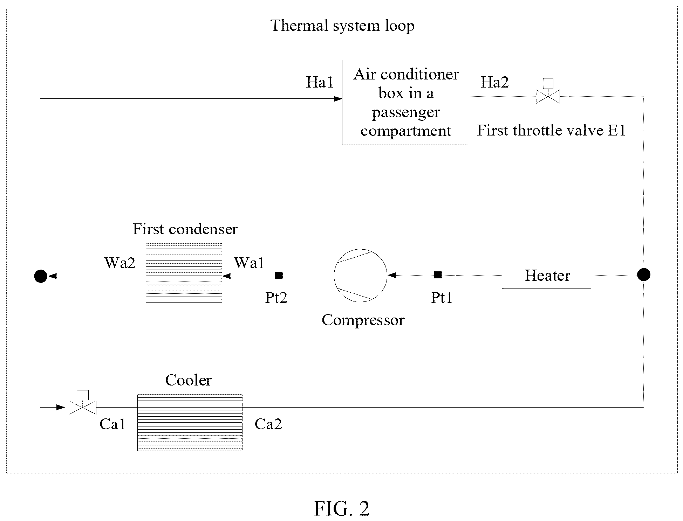

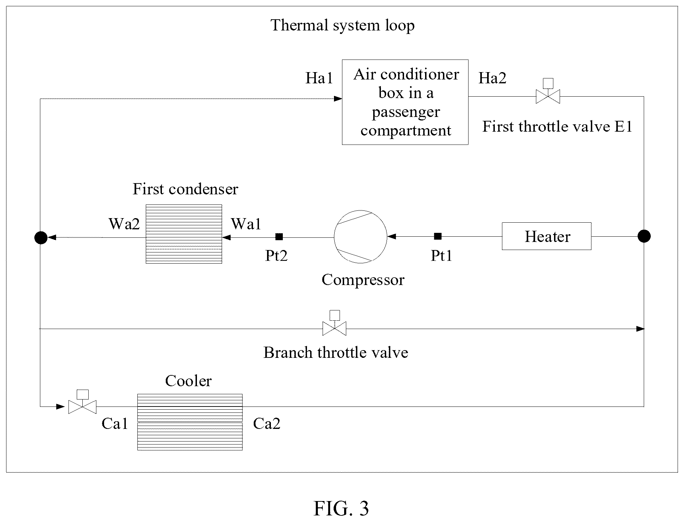

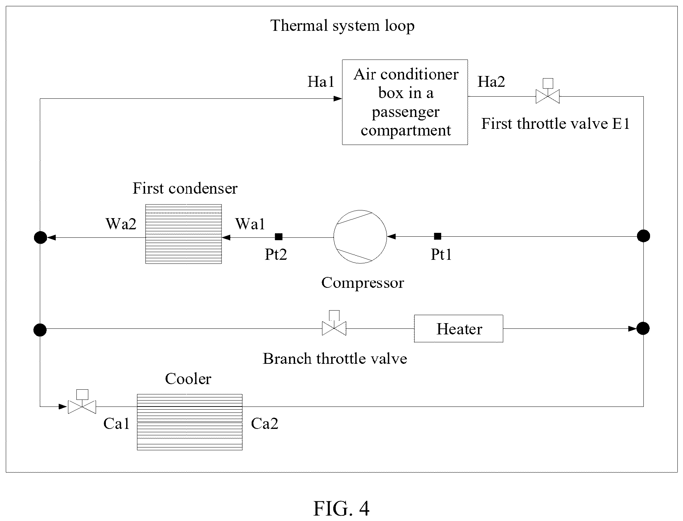

In the thermal management system, the heater may separately heat the first cooling medium in the first loop L1, or may separately heat the first cooling medium in the second loop L2, or may simultaneously heat the first cooling medium in the first loop L1 and the second loop L2. Therefore, a specific location of the heater is not limited. For example, as shown in FIG. 1, in an optional embodiment, the heater may be disposed between the cooler and the compressor, where an inlet of the heater is connected to the outlet Ca2 of the first path of the cooler, and an outlet of the heater is connected to the inlet of the compressor, so that the heater can heat the first cooling medium in the first loop L1. FIG. 2 is a diagram of another structure of the thermal management system according to Embodiment 1 of this application. As shown in FIG. 2, in another optional embodiment, the heater may alternatively be directly disposed at the inlet of the compressor, where the inlet of the heater is connected to the outlet Ca2 of the first path of the cooler and the outlet Ha2 of the first path of the air conditioner box in the passenger compartment, and the outlet of the heater is connected to the inlet of the compressor, so that the heater can heat a second cooling medium in the first loop L1 and the second loop L2. FIG. 3 is a diagram of another structure of the thermal management system according to Embodiment 1 of this application. As shown in FIG. 3, in another optional embodiment, the inlet of the heater is connected to the outlet Ca2 of the first path of the cooler and the outlet Ha2 of the first path of the air conditioner box in the passenger compartment, the outlet of the heater is connected to the inlet of the compressor, and a branch is disposed between the inlet Ca1 of the first path of the cooler and the inlet of the heater. The branch may be provided with a first valve. The first valve is controlled so that the first cooling medium circulating in the first loop L1 may be divided into two parts: One part passes through the first path of the cooler, and the other part directly flows into the heater through the first valve. FIG. 4 is a diagram of another structure of the thermal management system according to Embodiment 1 of this application. As shown in FIG. 4, in another optional embodiment, compared with the thermal management system in FIG. 3, the heater may alternatively be disposed in the branch.

In this embodiment of this application, the heater may be an independent heating apparatus, that is, may be separately disposed in the thermal system loop. Alternatively, the heater may be disposed in the compressor. Specifically, the heater may include a compressor motor and a motor controller that are connected. The compressor may include a compressor body and a scroll disposed on the compressor body. The compressor motor is connected to the scroll. The compressor motor is configured to provide a power source for the compressor. Because the compressor motor generates more heat in a low-efficiency mode than in a normal working state, in the technical solution, the first cooling medium may be heated by using heat generated by the compressor motor in the low-efficiency mode, so that a structure of the thermal management system may be simplified.

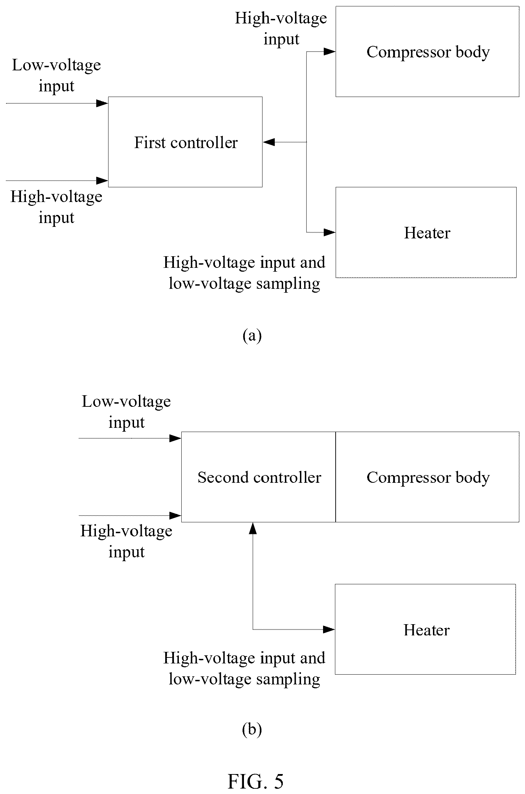

FIG. 5 is a diagram of control of the compressor and the heater according to Embodiment 1 of this application. As shown in FIG. 5, in the foregoing embodiment, controllers of the compressor and the heater may be integrated together. The compressor body shown in FIG. 5 is provided with a compressor motor. As shown in (a) in FIG. 5, in an optional embodiment, a motor controller in the compressor and a high-voltage controller of the heater may be integrated into an independent first controller. The first controller may dissipate heat through water cooling or air cooling, and the first controller may directly drive the compressor motor by using a three-phase wire. The first controller is connected to the heater to perform high-voltage input (the high-voltage input may include, for example, switch adjustment, gear adjustment, or power pulse width modulation (Pulse Width Modulation, PWM) adjustment), and may further sample a temperature inside the heater. Details are not described herein. As shown in (b) in FIG. 5, in an optional embodiment, the high-voltage controller of the heater may be integrated into the motor controller in the compressor to form a second controller. A difference between the second controller and the first controller lies in that the second controller is integrated with the compressor, and is cooled via a suction end for a refrigerant of the compressor. The second controller is connected to the heater to perform high-voltage input (the high-voltage input may include, for example, switch adjustment, gear adjustment, or power pulse width modulation adjustment) or sample a temperature inside the heater. An input end of the second controller may include a low-voltage input (including a bus such as a control signal, PWM, a local interconnect network (Local Interconnect Network, LIN), or a controller area network (Controller Area Network, CAN)) and the high-voltage input.

Still refer to FIG. 1. The thermal system loop may further include a first condenser, and the first condenser has a first path. An inlet Wa1 of the first path of the first condenser is connected to the outlet of the compressor, and an outlet Wa2 of the first path of the first condenser is connected to the inlet Ca1 of the first path of the cooler and the inlet Ha1 of the first path of the air conditioner box in the passenger compartment. In this case, the first loop L1 includes the compressor, the first path of the first condenser, and the first path of the cooler; and the second loop L2 includes the compressor, the first path of the first condenser, and the air conditioner box in the passenger compartment. In this embodiment, the first cooling medium flowing out from the outlet of the compressor is high-temperature and high-pressure gas, and performs initial heat exchange via the first condenser. The first cooling medium output by the first condenser is high-temperature and high-pressure liquid, and then the first cooling medium may be divided into two parts: One part flows into the cooler for secondary heat exchange, and the other part enters the air conditioner box in the passenger compartment, becomes a low-temperature and low-pressure gas-liquid two-phase medium after performing heat exchange in the air conditioner box in the passenger compartment, and can absorb heat of the passenger compartment, to implement cooling of the passenger compartment.

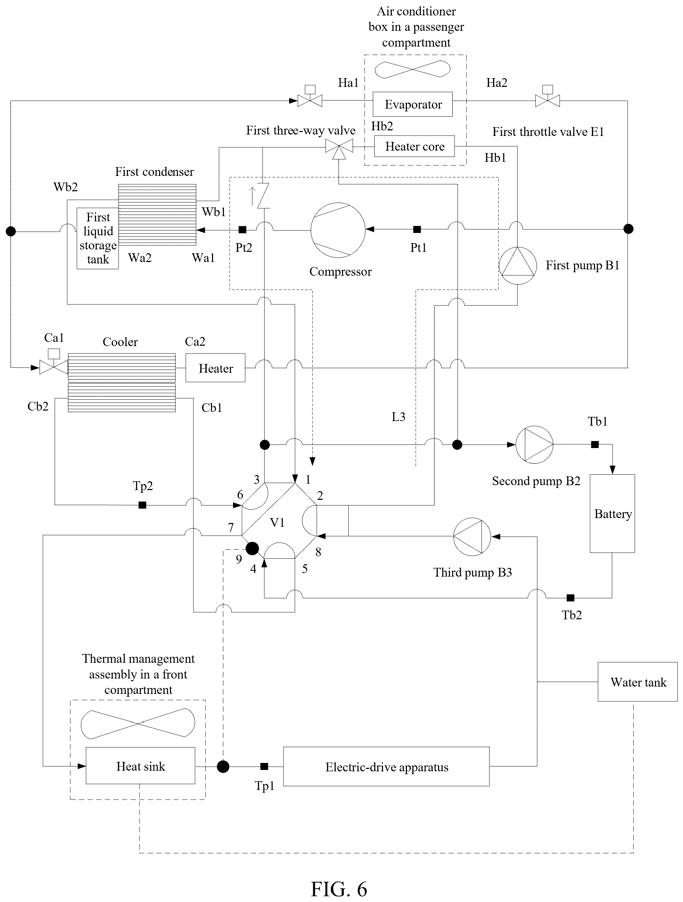

FIG. 6 is a diagram of another structure of the thermal management system according to Embodiment 1 of this application. As shown in FIG. 6, in an optional embodiment, the air conditioner box in the passenger compartment may further have a second path, where the first path and the second path of the air conditioner box in the passenger compartment are isolated from each other. Specifically, an evaporator may be disposed in the first path of the air conditioner box in the passenger compartment, and a heater core may be disposed in the second path of the air conditioner box in the passenger compartment. The first condenser may further have a second path, and the first path and the second path of the first condenser are isolated from each other. In addition, the thermal management system may further include a first valve body V1. The first valve body V1 includes a first path, and the first path has a first port 1 and a second port 2. The thermal system loop may further include a first pump B1. The second port 2 of the first valve body V1 is connected to an inlet of the first pump B1, an outlet of the first pump B1 is connected to an inlet Hb1 of the heater core, an outlet Hb2 of the heater core is connected to an inlet Wb1 of the second path of the first condenser, and an outlet Wb2 of the second path of the first condenser is connected to the first port 1 of the first valve body V1. The thermal system loop is further provided with the second cooling medium, and the first pump B1 is configured to drive the second cooling medium to circulate in a third loop L3 formed between the second path of the first condenser and the heater core. In this manner, heat that is of the second cooling medium and that is exchanged in the first condenser may be blown out through the heater core, to heat air in the passenger compartment.

As shown in FIG. 6, the thermal system loop in the foregoing embodiment may further include a first liquid storage tank. An inlet of the first liquid storage tank is connected to the outlet Wa2 of the first path of the first condenser, and an outlet of the first liquid storage tank is connected to the inlet Ca1 of the first path of the cooler and an inlet Ha1 of the evaporator. The first liquid storage tank may store a specific amount of liquid-state cooling medium in the thermal system loop, to ensure a specific annual leakage amount of the cooling medium.

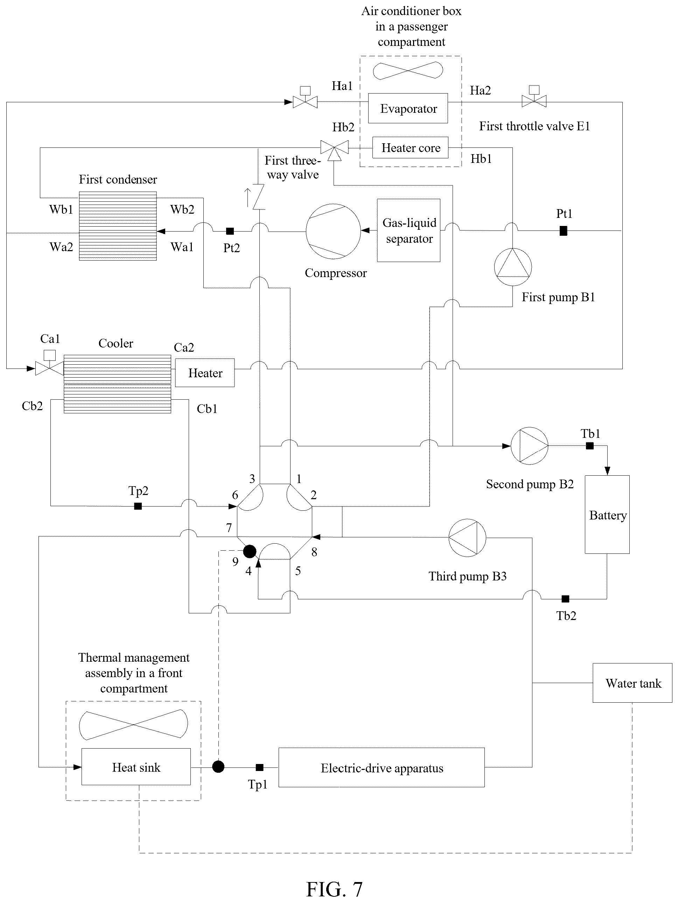

FIG. 7 is a diagram of another structure of the thermal management system according to Embodiment 1 of this application. As shown in FIG. 7, the thermal system loop may also include a gas-liquid separator. An inlet of the gas-liquid separator is connected to the outlet Ca2 of the first path of the cooler and an outlet Ha2 of the evaporator, and an outlet of the gas-liquid separator is connected to the inlet of the compressor. In the design, the gas-liquid separator can be used to implement a liquid storage function, and the gas-liquid separator can be used to retain liquid in a gas-liquid mixture, and only gas is allowed to flow into the compressor, to improve compression effect of the compressor.

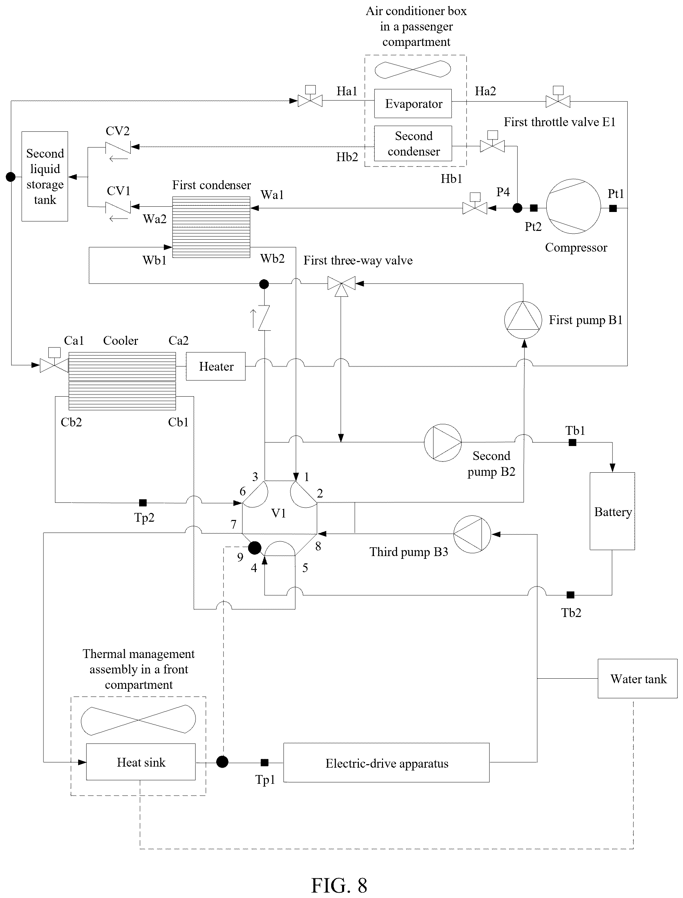

FIG. 8 is a diagram of another structure of the thermal management system according to Embodiment 1 of this application. As shown in FIG. 8, the air conditioner box in the passenger compartment may also have the second path, where the first path of the air conditioner box in the passenger compartment and the second path of the air conditioner box in the passenger compartment are isolated from each other. Specifically, the evaporator is disposed in the first path of the air conditioner box in the passenger compartment, and a second condenser is disposed in the second path of the air conditioner box in the passenger compartment. An inlet Hb1 of the second condenser is connected to the outlet of the compressor, and an outlet Hb2 of the second condenser is connected to the inlet Ca1 of the first path of the cooler and the inlet Ha1 of the evaporator. The first condenser further has the second path, and the first path of the first condenser and the second path of the first condenser are isolated from each other. In addition, the thermal management system further includes the first valve body V1. The first valve body V1 includes the first path, and the first path of the first valve body V1 has the first port 1 and the second port 2. The thermal system loop further includes the first pump B1. The second port 2 of the first valve body V1 is connected to the inlet of the first pump B1, the outlet of the first pump B1 is connected to the inlet Wb1 of the second path of the first condenser, and the outlet Wb2 of the second path of the first condenser is connected to the first port 1 of the first valve body V1. The thermal system loop is further provided with the second cooling medium, and the first pump B1 is configured to drive the second cooling medium to circulate in the second path of the first condenser. When the first condenser stops working, the first cooling medium flowing out from the outlet of the compressor may flow into the second condenser. In the air conditioner box in the passenger compartment, the second condenser is configured to heat the passenger compartment. The first cooling medium flows out from the outlet of the compressor, and becomes high-temperature and high-pressure liquid. Then, the first cooling medium may enter the cooler through a throttle valve, and becomes a low-temperature and low-pressure gas-state cooling medium after being heated by the heater, and enters the compressor.

In the foregoing embodiment, the thermal system loop may further include a second liquid storage tank. An inlet of the second liquid storage tank is connected to the outlet Wa2 of the first path of the first condenser and the outlet Hb2 of the second condenser, and an outlet of the second liquid storage tank is connected to the inlet Ca1 of the first path of the cooler and the inlet Ha1 of the evaporator. In this way, the second liquid storage tank may store an excess liquid-state cooling medium in the first path of the first condenser, to ensure an annual leakage amount in the first loop.

A first one-way valve CV1 may be further disposed between the outlet Wa2 of the first path of the first condenser and the inlet of the second liquid storage tank, and the first one-way valve CV1 is used for the outlet Wa2 of the first path of the first condenser and the inlet of the second liquid storage tank to communicate unidirectionally. A second one-way valve CV2 is disposed between the outlet Hb2 of the second condenser and the inlet of the second liquid storage tank, and the second one-way valve CV2 is used for the outlet Hb2 of the second condenser and the inlet of the second liquid storage tank to communicate unidirectionally. In this way, the first one-way valve CV1 and the second one-way valve CV2 are controlled, so that a flow path of the first cooling medium in the thermal system loop can be controlled.

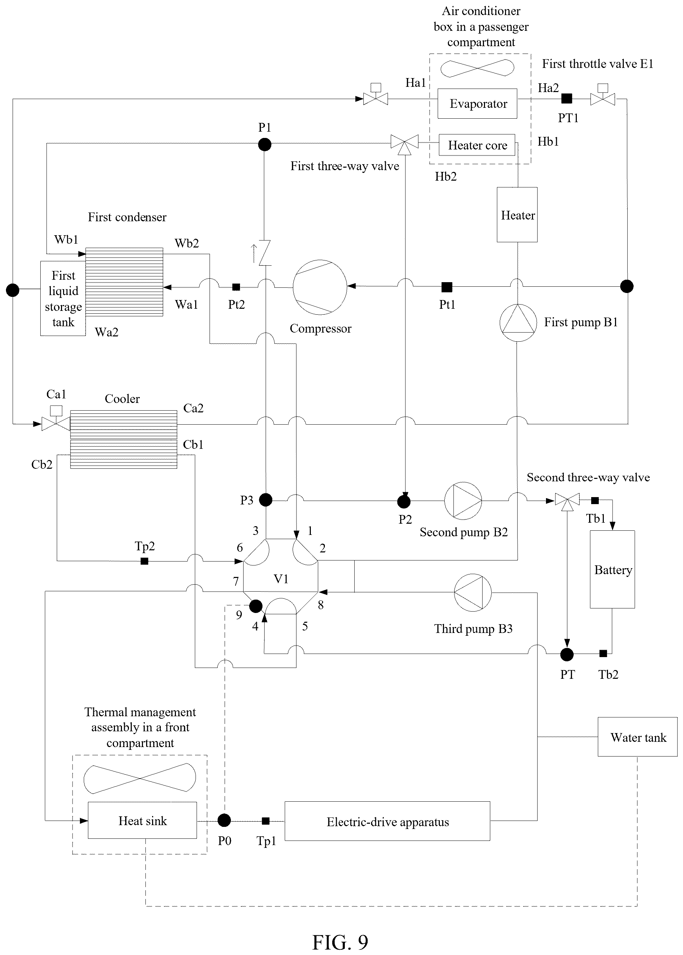

In the foregoing embodiment, the heater may alternatively be disposed at any location in the third loop L3. FIG. 9 is a diagram of another structure of the thermal management system according to Embodiment 1 of this application. As shown in FIG. 9, in an optional embodiment, the heater may be disposed between the first pump B1 and the second path of the air conditioner box in the passenger compartment. Specifically, the inlet of the heater is connected to the outlet of the first pump B1, and the outlet of the heater is connected to the inlet Hb1 of the second path of the air conditioner box in the passenger compartment. In this manner, the heater may directly heat the second cooling medium, and the heated second cooling medium enters a second pump B2, and enters a second path of the cooler after passing through a second three-way valve, to perform heat exchange with the first cooling medium in the cooler, so as to implement heating of the first cooling medium. Certainly, the heater may alternatively be disposed between the second path of the air conditioner box in the passenger compartment and the second path of the first condenser, or may be disposed between the second path of the first condenser and the first pump B1.

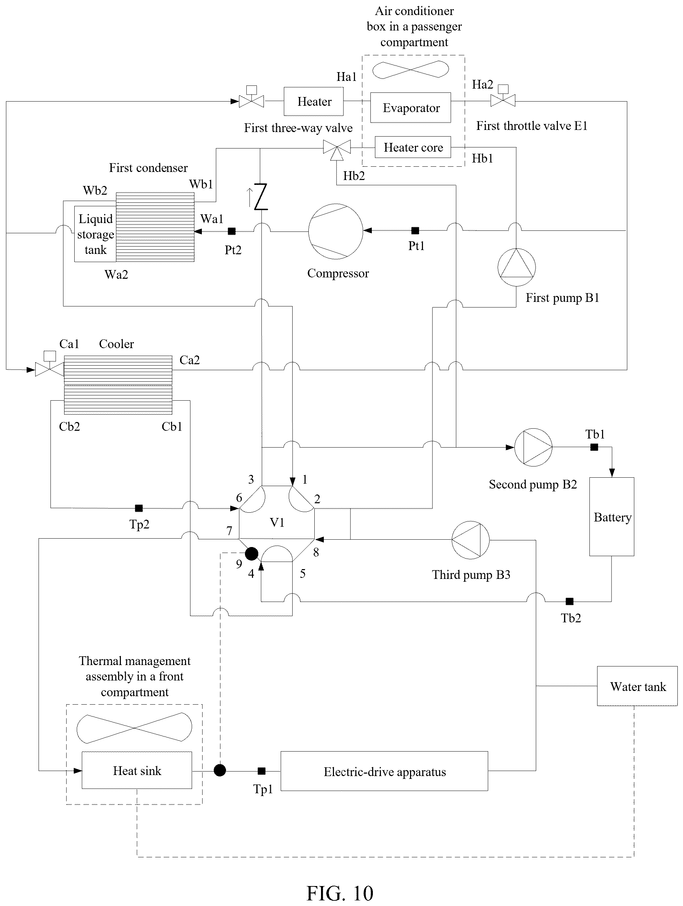

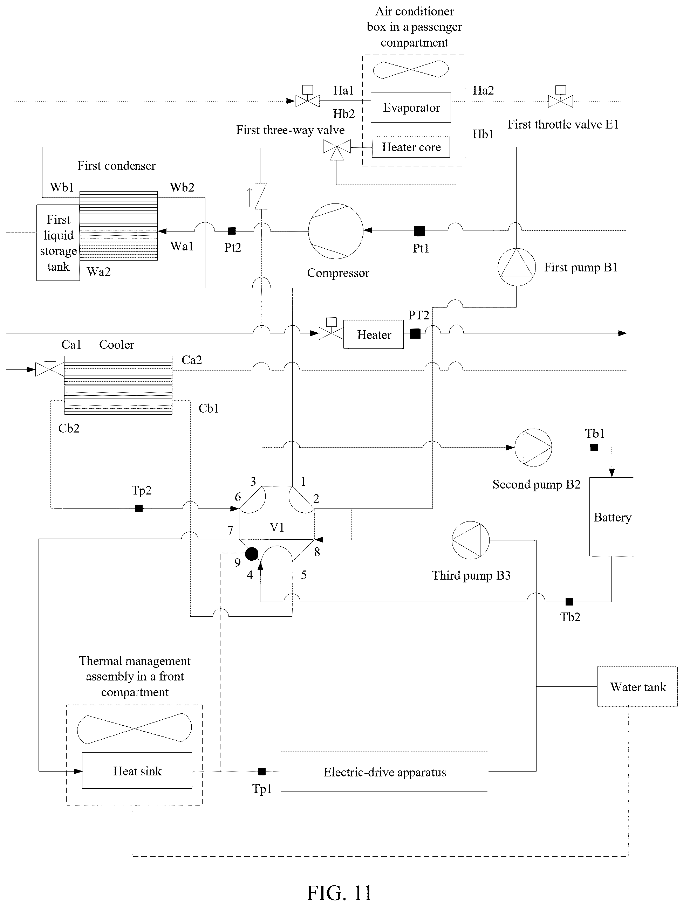

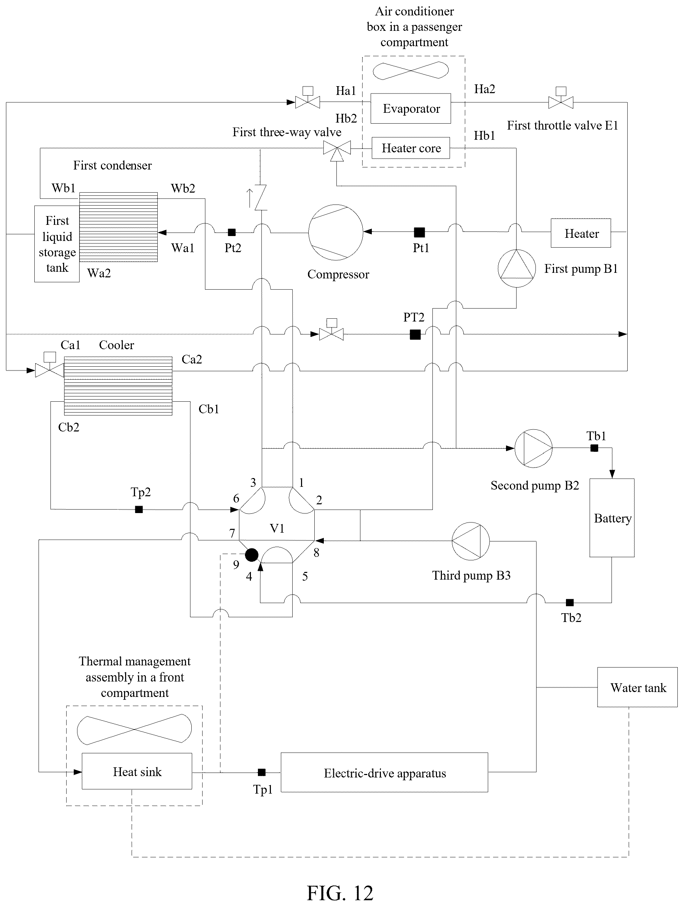

FIG. 10 is a diagram of another structure of the thermal management system according to Embodiment 1 of this application. As shown in FIG. 10, in another optional embodiment, the heater may alternatively be disposed between the first condenser and the air conditioner box in the passenger compartment. Specifically, the inlet of the heater is connected to the outlet Wa2 of the first path of the first condenser, and the outlet of the heater is connected to the inlet Ha1 of the first path of the air conditioner box in the passenger compartment. In this way, the heater may directly heat the first cooling medium that enters the first path of the air conditioner box in the passenger compartment. FIG. 11 is a diagram of another structure of the thermal management system according to Embodiment 1 of this application. FIG. 12 is a diagram of another structure of the thermal management system according to Embodiment 1 of this application. As shown in FIG. 11 and FIG. 12, in other optional embodiments, the heater may alternatively be disposed between the first condenser and the compressor. Specifically, the inlet of the heater is connected to the outlet Wa2 of the first path of the first condenser, and the outlet of the heater is connected to the inlet of the compressor. In this manner, a part of the first cooling medium flowing out from the outlet Wa2 of the first path of the first condenser may directly flow into the inlet of the compressor, and the heater may directly heat this part of the first cooling medium. In the embodiments shown in FIG. 10 and FIG. 11, the heater is a heating apparatus independently disposed in a loop. Certainly, the heater may be disposed in the compressor without changing the thermal system loop. Specifically, the heater may include the compressor motor and the motor controller that are connected. The compressor may include the compressor body and the scroll disposed on the compressor body. The compressor motor is connected to the scroll. The compressor motor is configured to provide the power source for the compressor. Because the compressor motor generates more excess heat in the low-efficiency mode than in the normal working state, in the technical solution, the first cooling medium may be heated by using the excess heat generated by the compressor motor in the low-efficiency mode, so that a structure of the thermal management system may be simplified.

In this embodiment of this application, the thermal management system may further include a battery heat exchange loop. The battery heat exchange loop may include a battery and the second pump B2. The first valve body V1 may further include a second path and a third path. The second path of the first valve body V1 has a third port 3 and a sixth port 6, and the third path of the first valve body V1 has a fourth port 4 and a fifth port 5. Specifically, the third port 3 of the first valve body V1 is connected to an inlet of the second pump B2, an outlet of the second pump B2 is connected to an inlet of the battery, and an outlet of the battery is connected to the fourth port 4 of the first valve body V1. The cooler further has the second path, and the first path of the cooler and the second path of the cooler are isolated from each other. The fifth port 5 of the first valve body V1 is connected to an inlet Cb1 of the second path of the cooler, and an outlet Cb2 of the second path of the cooler is connected to the sixth port 6 of the first valve body V1. The second pump B2 is configured to drive a third cooling medium to circulate between the battery heat exchange loop and the second path of the cooler. In this way, a port of the first valve body V1 is controlled, so that the battery heat exchange loop and the third loop L3 of the thermal system loop can be connected or disconnected. In this embodiment, the third cooling medium and the second cooling medium may be a same coolant.

The first valve body V1 may further include a fourth path and a fifth path. The fourth path of the first valve body V1 has the first port 1 and the third port 3, and the fifth path of the first valve body V1 has the second port 2 and the fourth port 4. When the fourth path and the fifth path of the first valve body V1 are connected, the battery heat exchange loop and the third loop L3 of the thermal system loop are connected.

As shown in FIG. 9, the inlet of the second pump B2 is connected to the inlet Wb1 of the second path of the first condenser. A first three-way valve is disposed between the inlet Wb1 of the second path of the first condenser and the outlet of the first pump B1. The first three-way valve has a first port, a second port, and a third port. The first port of the first three-way valve is connected to the inlet Wb1 of the second path of the first condenser, the second port of the first three-way valve is connected to the outlet of the first pump B1, and the third port of the first three-way valve is connected to the inlet of the second pump B2. Ports of the first three-way valve are controlled to communicate or not communicate with each other, so that flow rates of the cooling medium flowing out from the first pump B1 into the first condenser and the second pump B2 separately can be controlled. In this embodiment of this application, a connection between the second port of the first three-way valve and the outlet of the first pump B1 may include a direct connection and an indirect connection. As shown in FIG. 8, the second port of the first three-way valve is directly connected to the outlet of the first pump B1. As shown in FIG. 9, the second port of the first three-way valve is connected to the outlet Hb2 of the second path of the air conditioner box in the passenger compartment, and the inlet Hb1 of the second path of the air conditioner box in the passenger compartment is connected to the outlet of the first pump B1.

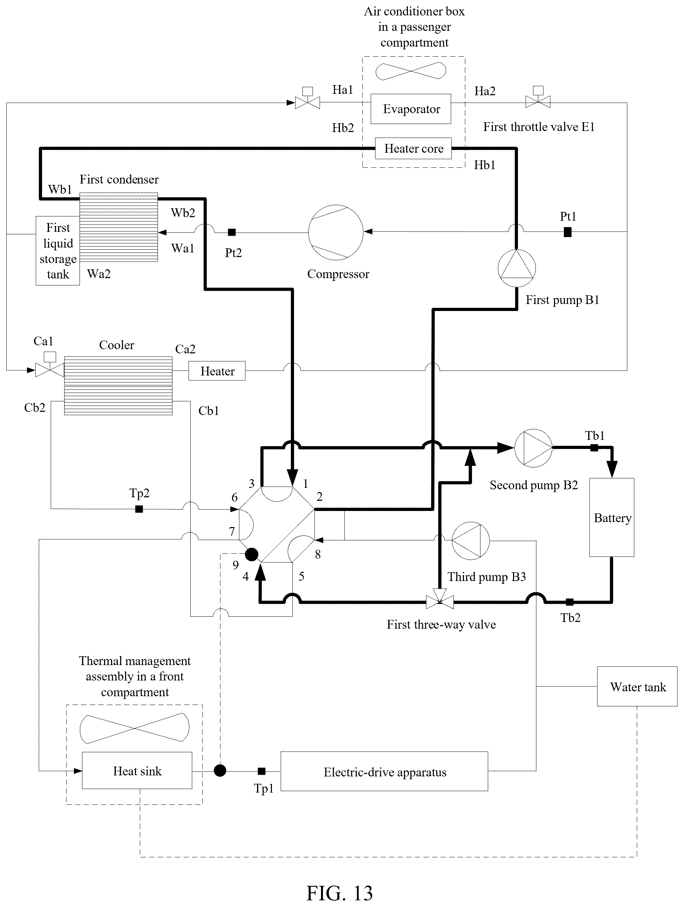

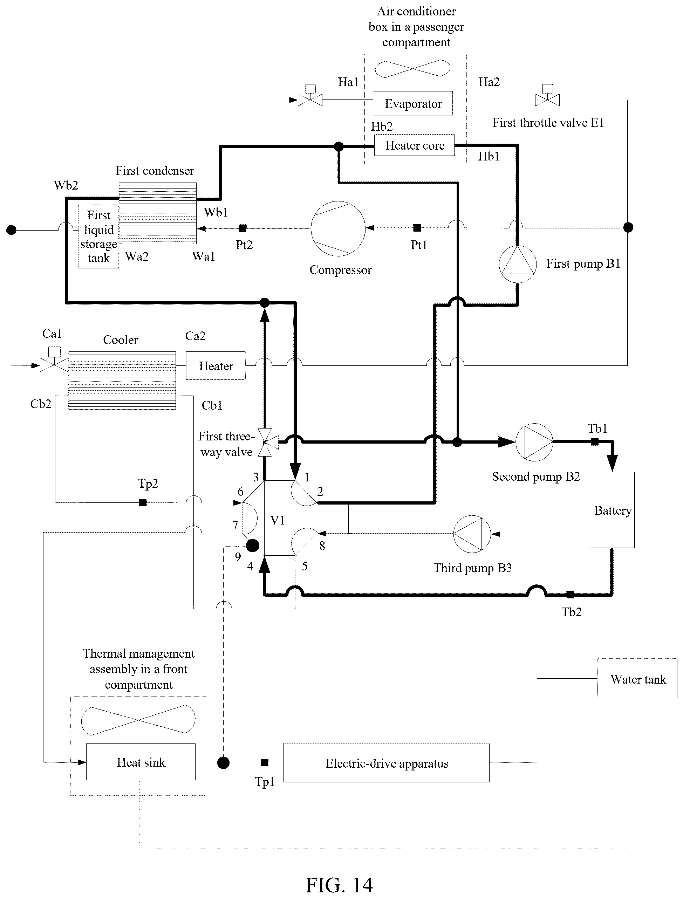

In another embodiment, the first three-way valve may alternatively be disposed in another location. FIG. 13 is a diagram of another structure of the thermal management system according to Embodiment 1 of this application. As shown in FIG. 13, in an optional embodiment, the first port of the first three-way valve is connected to the outlet of the battery, the second port of the first three-way valve is connected to the fourth port 4 of the first valve body V1, and the third port of the first three-way valve is connected to the inlet of the second pump B2. In this embodiment, the heater heats the second cooling medium. The second cooling medium flows out from the second path of the first condenser, and flows to the inlet of the second pump B2 after passing through the first port 1 and the third port 3 of the first valve body V1. The third cooling medium (that is, the second cooling medium) flowing out from the outlet of the battery passes through the first three-way valve, and a part of the third cooling medium may be mixed with the high-temperature second cooling medium at the inlet of the second pump B2 to be at a proper temperature, and then enters the battery. In this embodiment, the heater may be used to simultaneously heat the passenger compartment and the battery. FIG. 14 is a diagram of another structure of the thermal management system according to Embodiment 1 of this application. As shown in FIG. 14, in another optional embodiment, the first port of the first three-way valve is connected to the third port 3 of the first valve body V1, the second port of the first three-way valve is connected to the outlet Wb2 of the second path of the first condenser, and the third port of the first three-way valve is connected to the inlet of the second pump B2.

In an optional embodiment, a third one-way valve may be disposed between the inlet of the second pump B2 and the inlet Wb1 of the second path of the first condenser, and the third one-way valve is used for the inlet of the second pump B2 and the inlet Wb1 of the second path of the first condenser to communicate unidirectionally, to avoid backflow of the cooling medium.

Based on a same technical concept, this application further provides an electric vehicle. The electric vehicle includes a controller and the thermal management system in Embodiment 1. The controller is connected to the thermal management system, and the controller is configured to control the thermal management system to run in a mode in which the passenger compartment is separately heated. According to the design, the electric vehicle can implement the mode in which the passenger compartment is separately heated. This helps heat the passenger compartment in a low-temperature environment, and improves driving experience of a user.

When the thermal management system may further include the first valve body V1 and the battery heat exchange loop, the controller may be connected to the first valve body V1. The controller may be configured to control ports of the first valve body V1 to communicate or not communicate with each other, to implement any one of the following modes: the mode in which the passenger compartment is separately heated, a mode in which the battery is separately heated, and a mode in which the passenger compartment and the battery are simultaneously heated. According to the design, the electric vehicle can freely switch to any one of the following modes: the passenger compartment is separately heated, the battery is separately heated, and the passenger compartment and the battery are simultaneously heated. This helps enable the electric vehicle to meet different requirements of various users, and improves driving experience of the users. The following describes different running phases of the electric vehicle.

The thermal management system in FIG. 6 is used as an example. The thermal management system may include a low-temperature start phase and a stable phase.

### M11: Low-temperature start phase

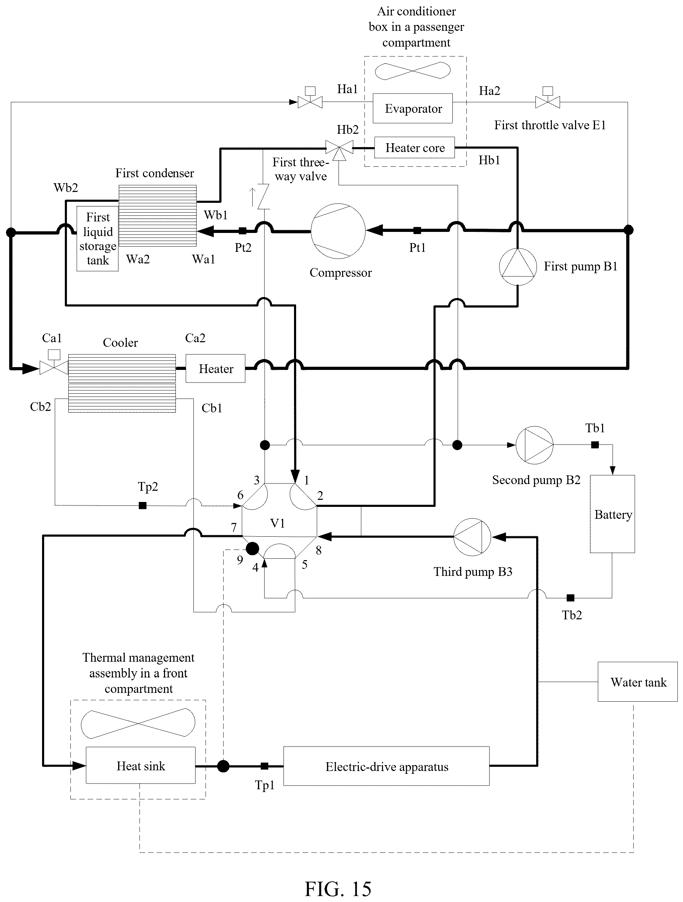

When an external ambient temperature of the electric vehicle is excessively low, because an inlet pressure of the compressor is lower than one atmospheric pressure, the compressor cannot be turned on normally, and the thermal system loop cannot run. FIG. 15 is a diagram of the thermal management system in FIG. 6 in the low-temperature start phase. As shown in FIG. 15, after the heater is turned on, the heater may heat the first cooling medium flowing out from the outlet Ca2 of the first path of the cooler, and the compressor is turned on at a low rotation speed. At this time, a temperature of the passenger compartment is gradually increased. As the inlet pressure of the compressor is gradually increased to above one atmospheric pressure, the rotation speed of the compressor may be gradually increased. In this phase, the mode in which the passenger compartment is separately heated can be implemented.

In the low-temperature start phase, when the thermal system loop is started to perform heating, in addition to a manner of heating the first cooling medium by using an independently disposed heater, a low-efficiency mode of the compressor may be used to generate a heat source. Specifically, the heater may include the compressor motor and the motor controller that are connected. The compressor may include the compressor body and the scroll disposed on the compressor body. The compressor motor is connected to the scroll. The compressor motor is configured to provide the power source for the compressor. Because the compressor motor generates more heat in the low-efficiency mode than in the normal working state, in the technical solution, the first cooling medium may be heated by using excess heat generated by the compressor motor in the low-efficiency mode, so that the structure of the thermal management system may be simplified. However, in this manner, a throttle valve at the inlet Ca1 of the first path of the cooler or a throttle valve at the inlet of the heater cannot be controlled by controlling a suction status, and a status of the first cooling medium at the outlet of the compressor needs to be controlled to ensure that the compressor is not subject to liquid impact.

### M12: Stable phase

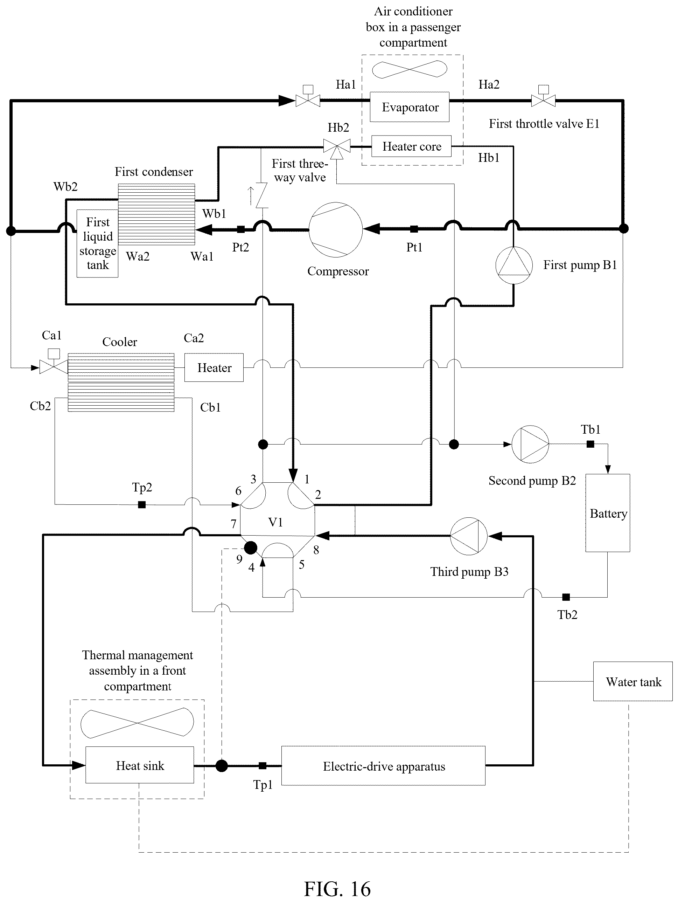

FIG. 16 is a diagram of the thermal management system in FIG. 15 in the stable phase. As shown in FIG. 16, when the temperature of the passenger compartment is higher than a specific temperature, the passenger compartment may start full internal circulation. The first cooling medium flowing out from the outlet of the compressor enters the inlet Wa1 of the first path of the first condenser, and then flows out from the outlet Wa2 of the first path of the first condenser. Then, the first cooling medium enters the inlet Ha1 of the evaporator after being throttled by using a throttle valve. The first cooling medium flowing out from the outlet Ha2 of the evaporator enters the inlet of the compressor after passing through the first throttle valve E1. The throttle valve at the inlet Ha1 of the evaporator may control a superheat degree of the first cooling medium at the outlet Ha2 of the evaporator. The first throttle valve E1 may control an air outlet temperature of the evaporator by controlling a flow rate of the first cooling medium, so that the air outlet temperature is maintained within a predetermined temperature range, to prevent the evaporator from being frosted. In this case, the compressor can control the air outlet temperature of the air conditioner box in the passenger compartment, to control the temperature of the passenger compartment. In addition, to reduce heat consumption in the thermal system loop, the second pump B2 may not work, so that the battery heat exchange loop does not participate in heat exchange in the thermal system loop.

In the stable phase, because the evaporator is also working, air blown out from the air conditioner box in the passenger compartment may be all from the inside of the passenger compartment by using internal circulation of the passenger compartment, and mixed air inside and outside the compartment is not used. In this way, a start load of the electric vehicle can be reduced, energy consumption of the thermal management system can be reduced, and a fogging phenomenon that occurs in the passenger compartment in a low-temperature environment can be improved.

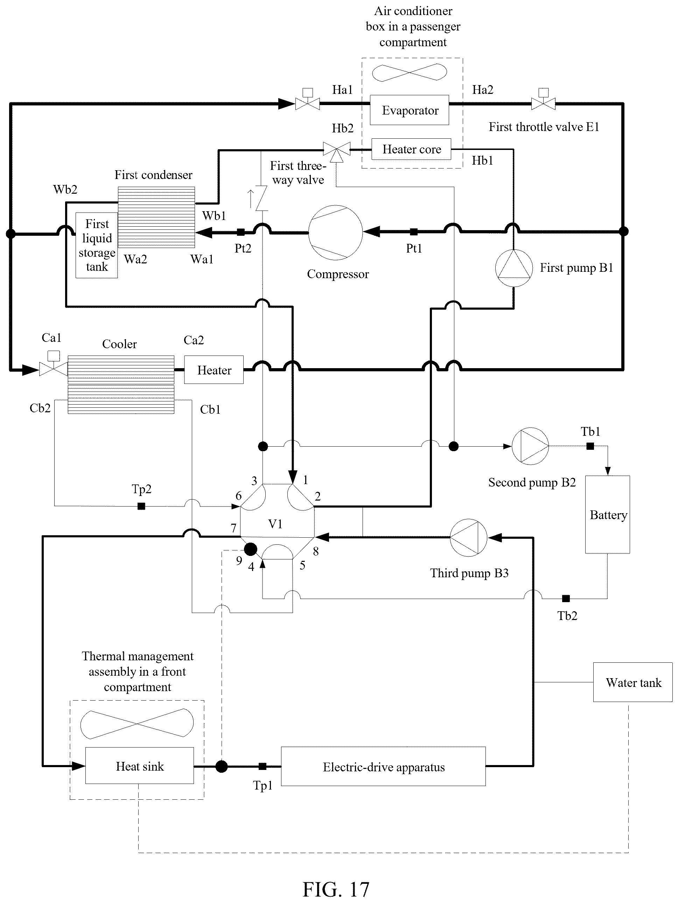

FIG. 17 is a diagram of the thermal management system in FIG. 15 in another stable phase. As shown in FIG. 17, in the stable phase, the first cooling medium flowing out from the outlet of the compressor enters the inlet Wa1 of the first path of the first condenser, and then flows out from the outlet Wa2 of the first path of the first condenser. Then, the first cooling medium is divided into two paths for circulation: One path enters the inlet Ha1 of the evaporator after being throttled by using the throttle valve. The first cooling medium flowing out from the outlet Ha2 of the evaporator enters the inlet of the compressor after passing through the first throttle valve E1. The other path of the first cooling medium enters the first path of the cooler after being throttled by using the throttle valve, and enters the compressor after passing through the heater. The throttle valve at the inlet Ca1 of the first path of the cooler may control a suction superheat degree of the compressor, or control an outlet superheat degree of the heater. The throttle valve at the inlet Ca1 of the first path of the cooler and the throttle valve at the inlet Ha1 of the evaporator may be different throttle valves. The throttle valve at the inlet Ha1 of the evaporator may control the superheat degree of the first cooling medium at the outlet Ha2 of the evaporator. The first throttle valve E1 may control an air outlet temperature of the evaporator by controlling the flow rate of the first cooling medium, so that the air outlet temperature is maintained within a predetermined temperature range, to prevent the evaporator from being frosted. In this case, the compressor can control the air outlet temperature of the air conditioner box in the passenger compartment, to control the temperature of the passenger compartment. In addition, to reduce heat consumption in the thermal system loop, the battery heat exchange loop may not participate in heat exchange in the thermal system loop.

In the stable phase, the thermal management system may run in the mode in which the passenger compartment is separately heated.

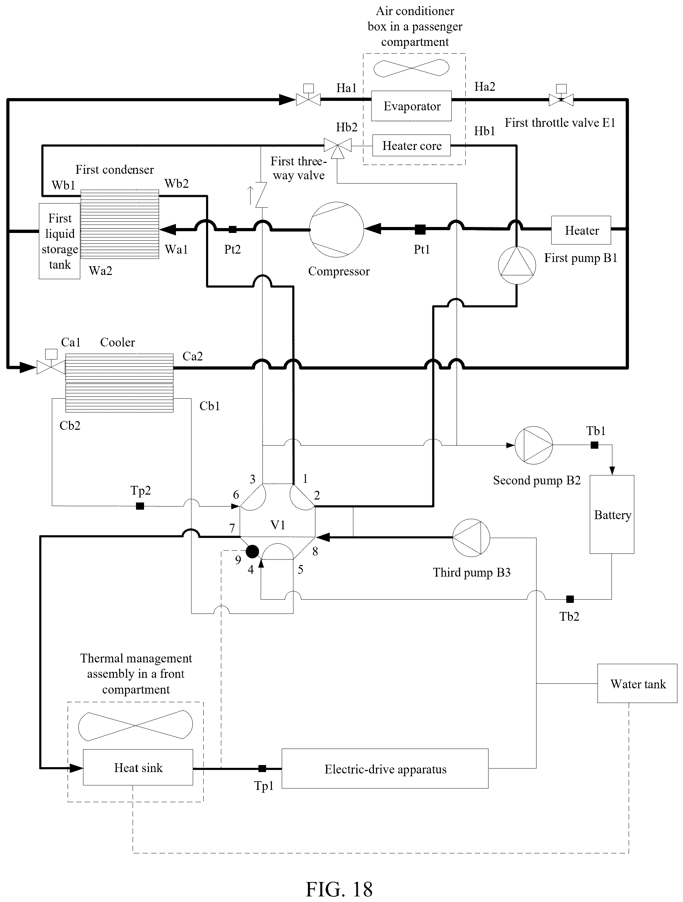

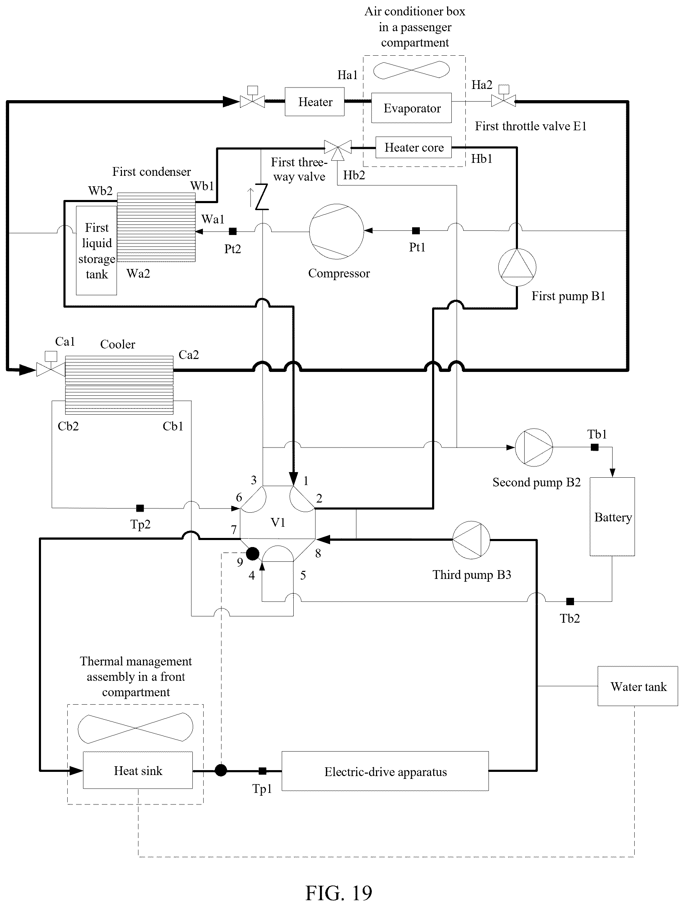

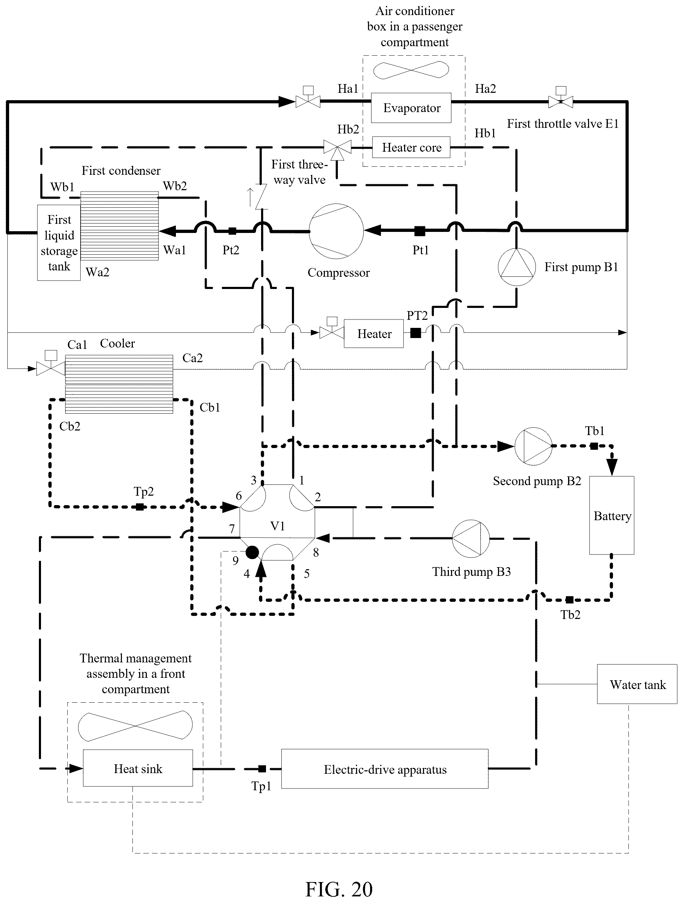

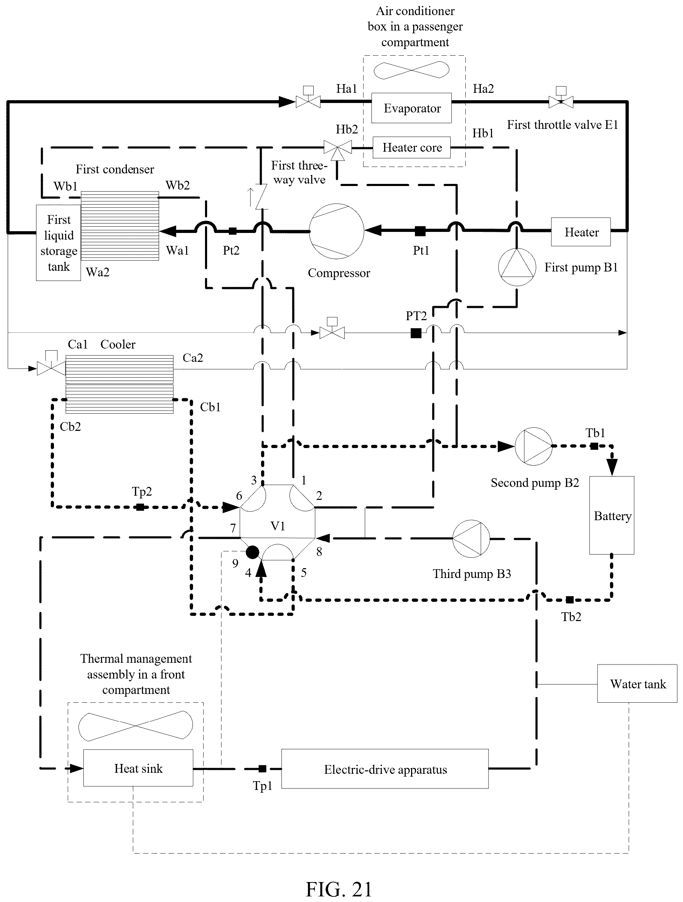

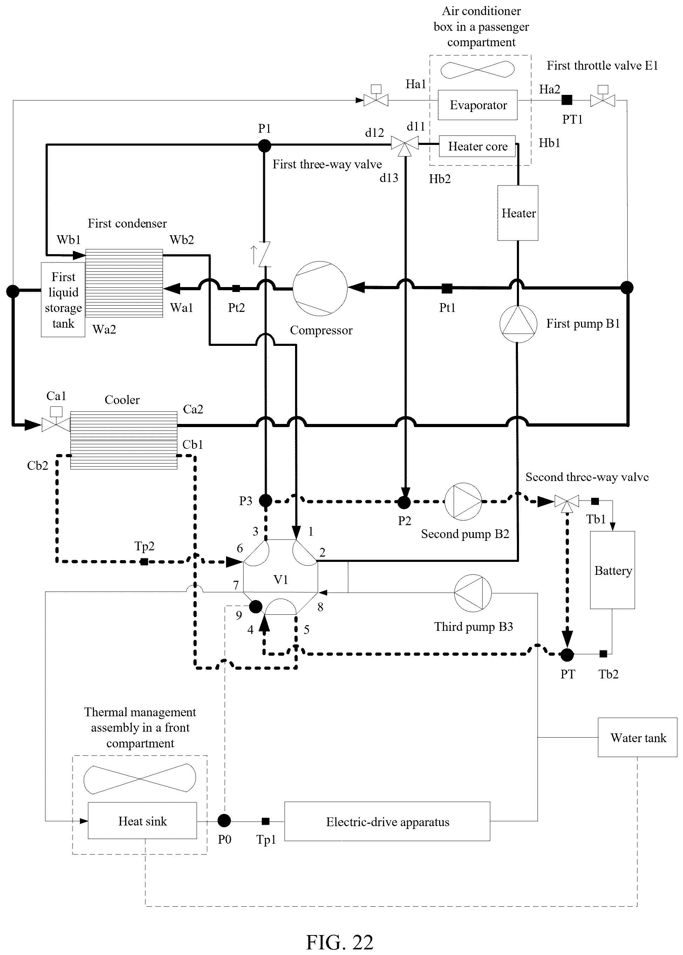

Certainly, when the heater is in a different location, the heater may still heat the passenger compartment in the stable phase. FIG. 18 is a diagram of another thermal management system in the stable phase according to an embodiment of this application. As shown in FIG. 18, at a pipeline convergence point between the outlet Ca2 of the first path of the cooler and an outlet of the first throttle valve E1, the heater is disposed between the convergence point and the inlet of the compressor. FIG. 19 is a diagram of the thermal management system in FIG. 10 in the stable phase. As shown in FIG. 19, the heater is disposed between the throttle valve at the inlet Ha1 of the evaporator and the inlet of the evaporator. In the stable phase, the thermal management system in FIG. 18 and FIG. 19 may run in the mode in which the passenger compartment is separately heated. FIG. 20 is a diagram of the thermal management system in FIG. 11 in the stable phase. As shown in FIG. 20, the heater is disposed on a branch between the first liquid storage tank and the compressor. The first cooling medium flowing out from the first liquid storage tank may flow into the branch, and flow into the compressor after passing through a throttle valve and the heater. FIG. 21 is a diagram of the thermal management system in FIG. 12 in the stable phase. As shown in FIG. 21, at a pipeline convergence point between the outlet Ca2 of the first path of the cooler and the outlet of the first throttle valve E1, the heater is disposed between the convergence point and the inlet of the compressor. In addition, the inlet of the heater is connected to the outlet of the first liquid storage tank through a throttle valve. FIG. 22 is a diagram of the thermal management system in FIG. 9 in the stable phase. As shown in FIG. 22, the heater is disposed between the outlet of the first pump B1 and the inlet Hb1 of the heater core. In the stable phase, the thermal management system in FIG. 20, FIG. 21, and FIG. 22 may run in the mode in which the passenger compartment and the battery are simultaneously heated. It should be noted that bold lines, bold dotted lines, and bold dashed lines in FIG. 20, FIG. 21, and FIG. 22 only represent circulation paths of the cooling medium, and do not limit connection relationships between components.

Still refer to FIG. 22. When the heater is turned on, a full cooling circulation may be started for the passenger compartment, so that heat of the heater is transferred to the cooler, to enable the compressor to be quickly turned on, and then circulation of the air conditioner box may gradually become a full heating circulation. Specifically, in the start phase of the thermal management system, the heater is turned on, the hot second cooling medium flowing out from the heater enters the heater core, and the second cooling medium flows out from the heater core and enters the three-way valve. One path of the second cooling medium enters the battery heat exchange loop from d13 through the convergence point P2. The other path of the second cooling medium enters the inlet Wb1 of the second path of the first condenser from d12 through P1, then flows out from the outlet Wb2 of the second path of the first condenser, then passes through the first port 1 and the second port 2 of the first valve body V1, and enters the first pump B1. For the battery heat exchange loop, the second cooling medium enters the battery heat exchange loop from P2, enters the second pump B2 together with the third cooling medium, then enters the convergence point PT through the second three-way valve, then passes through the fourth port 4 and the fifth port 5 of the first valve body V1 from the convergence point PT, and enters the inlet Cb1 of the second path of the cooler. The cooling medium flowing out from the outlet Cb2 of the second path of the cooler passes through the sixth port 6 and the third port 3 of the first valve body V1, and then is divided into two paths: One path enters P1 through the one-way valve. The other path enters the second pump B2 through P2. In addition, there is still another control manner. The hot second cooling medium flowing out from the heater may enter the heater core, and the second cooling medium enters the first three-way valve after flowing out from the heater core. The first port d11 and the third port d13 of the first three-way valve completely communicate with each other, and the second port d12 is closed. In this way, the hot second cooling medium enters P2 through the third port d13 of the first three-way valve, enters PT through the second three-way valve after passing through the second pump B2, then enters the fourth port 4 of the first valve body V1, and then passes through the fifth port 5 of the first valve body V1 to enter the inlet Cb1 of the second path of the cooler. The cooling medium flowing out from the outlet Cb2 of the second path of the cooler passes through the sixth port 6 and the third port 3 of the first valve body V1, and finally passes through the one-way valve to enter P1. In this embodiment, the second cooling medium and the third cooling medium are a same medium.

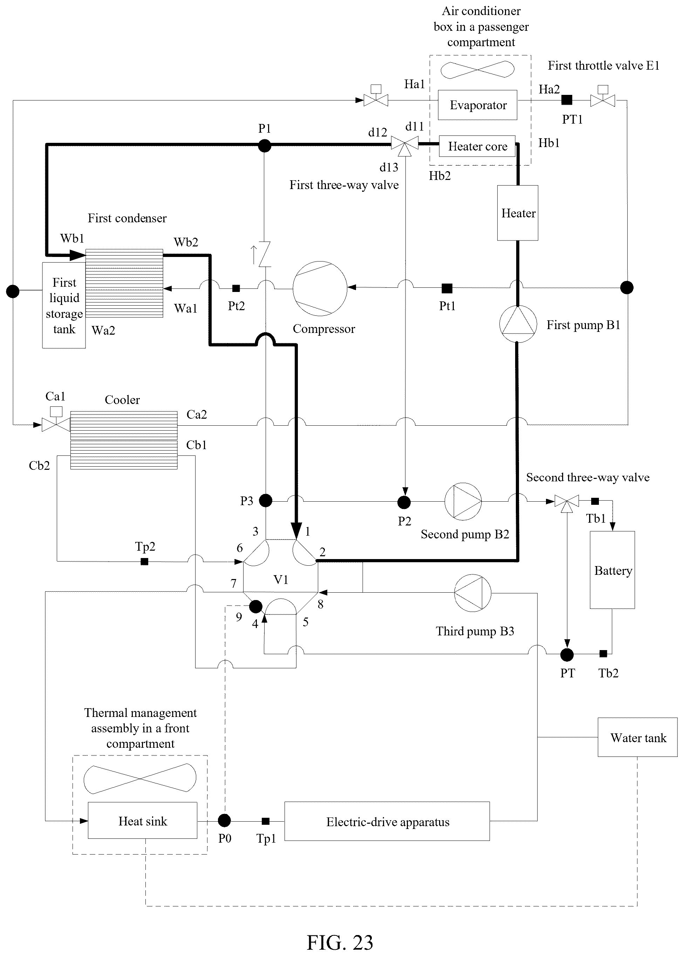

FIG. 23 is a diagram of heating a passenger compartment by the thermal management system in FIG. 9 when a refrigerant system fails. As shown in FIG. 23, when the compressor, the cooler, and the first condenser in the thermal management system fail and cannot work normally, the thermal management system may still run in the mode in which the passenger compartment is separately heated. Specifically, the air conditioner box starts a full heating mode, and the heater may directly heat the second cooling medium. The heated second cooling medium passes through the heater core, so that air blown out from the air conditioner box in the passenger compartment is hot air, to heat the passenger compartment.

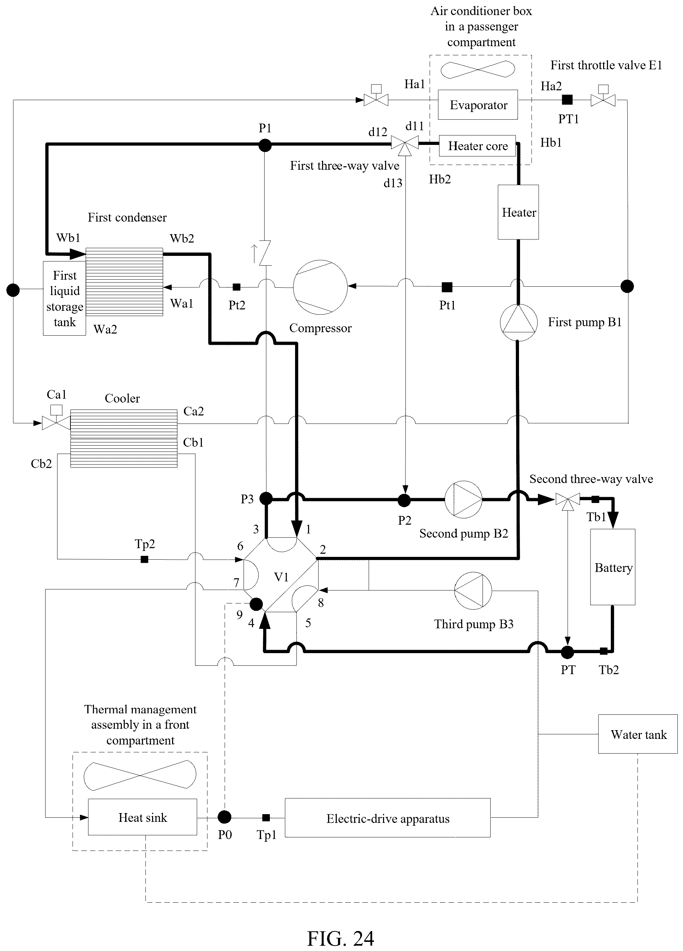

FIG. 24 is a diagram of heating the passenger compartment and heating the battery by the thermal management system in FIG. 9 when the refrigerant system fails. As shown in FIG. 24, when the compressor, the cooler, and the first condenser in the thermal management system fail and cannot work normally, the thermal management system may still run in the mode in which the passenger compartment and the batter are simultaneously heated. Specifically, the heater may directly heat the second cooling medium, and the heated second cooling medium passes through the heater core, so that the air blown out from the air conditioner box in the passenger compartment is hot air, to heat the passenger compartment. The second cooling medium flowing out from the heater core passes through the second path of the first condenser, then passes through the first port 1 and the third port 3 of the first valve body V1 to enter the battery heat exchange loop, enters the battery after passing through the second pump B2 and the second three-way valve, and then enters the fourth port 4 and the second port 2 of the first valve body V1 through the PT, to reach the third loop of the thermal system loop, so as to implement heating for the battery. In this case, the air conditioner box in the passenger compartment may run in a full cooling mode. In this way, heat in the heater core cannot be dissipated, and the mode in which only a battery is heated may be implemented.

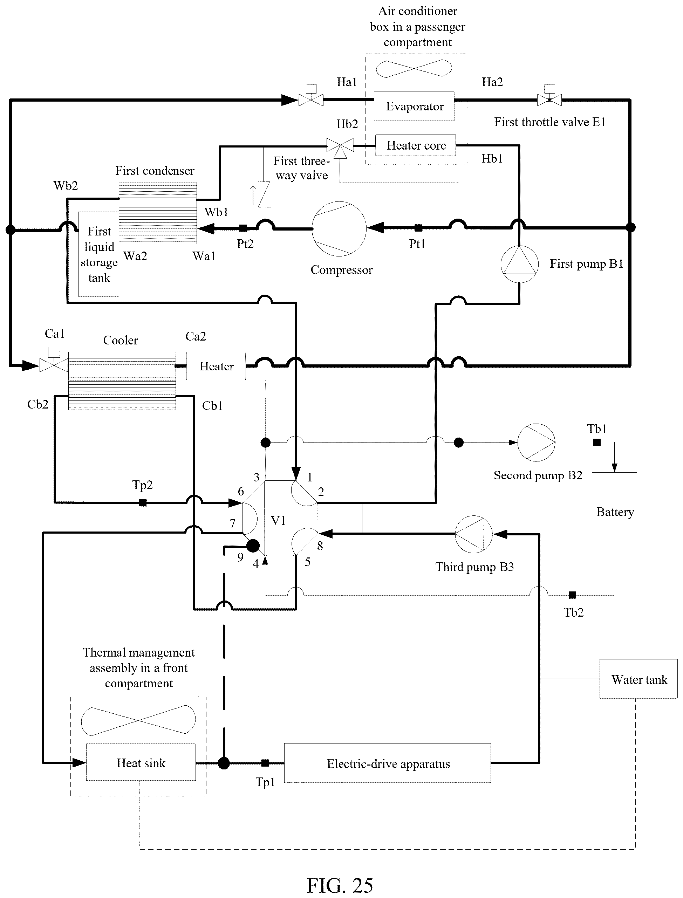

FIG. 25 is a diagram of heating the passenger compartment by the thermal management system in FIG. 6 under a stable working condition. As shown in FIG. 25, when the temperature of the passenger compartment reaches a predetermined temperature, a heating mode is in a stable state. In this case, a temperature of an electric-drive heat dissipation loop or a temperature of a fourth cooling medium of the electric-drive heat dissipation loop is not lower than a specific temperature. Under the stable working condition, the thermal management system may heat the passenger compartment in a loop manner in FIG. 25. Specifically, under the stable working condition, the electric-drive heat dissipation loop is in a circulation mode at a temperature higher than a specific temperature. A flow direction of a refrigerant loop is as follows: The first cooling medium flowing out from the compressor enters the first condenser, and the first cooling medium is divided into two paths after flowing out from the first condenser: One path enters the throttle valve at the inlet Ha1 of the evaporator for throttling, and enters the evaporator, and the first cooling medium enters the first throttle valve E1 after flowing out from the evaporator. The other path enters the cooler after entering the throttle valve at the inlet Ca1 of the first path to be throttled, and the first cooling medium enters the heater after flowing out from the cooler, and then the other path of the first cooling medium enters the inlet of the compressor after converging with the first path of first cooling medium flowing out from the first throttle valve E1. The passenger compartment is separately heated. In this case, the air conditioner box in the passenger compartment uses an internal circulation mode. A direction of a warm-air liquid cooling loop is as follows: The second cooling medium flowing out from the first pump B1 enters the heater core in the air conditioner box in the passenger compartment, then enters the three-way valve, and enters the second path of the first condenser. The second cooling medium enters the first port 1 of the first valve body V1 after flowing out from the first condenser, and then returns to the first pump B1 from the second port 2. Herein, the first valve body V1 is not limited to a nine-way valve, provided that the second cooling medium flowing out from the first condenser enters the first pump B1. A flow direction of the electric-drive heat dissipation loop is as follows: The fourth cooling medium flowing out from an outlet of an electric-drive apparatus enters the eighth port 8 of the first valve body V1 after entering the third pump B3, then flows out from the fifth port 5 and enters the second path of the cooler, and then enters the sixth port 6 of the first valve body V1 through Tp2. It is determined, based on a temperature of Tp2, whether the fourth cooling medium enters a heat sink of a thermal management assembly in a front compartment through the seventh port 7 or the fourth cooling medium directly enters the electric-drive apparatus through the ninth port 9. For the refrigerant loop, the throttle valve at the inlet Ca1 of the first path of the cooler may control a cooling medium status at the outlet of the heater, and the throttle valve at the inlet Ha1 of the evaporator may directly control an outlet status of the evaporator. The first throttle valve E1 may control a suction pressure of the compressor to reach a specific state, to balance pressures of a heat source in the passenger compartment and a heat source of an electric drive (or a battery). The circulation may be referred to as "secondary heat pump" circulation. In other words, low-temperature heat sources may be residual heat of the passenger compartment and residual heat of the electric drive (or the battery) separately. In this manner, the evaporator works, and the passenger compartment may use full internal circulation, that is, no fresh air outside the vehicle is introduced. This can prevent the risk of defogging in the passenger compartment, and reduce the load of the passenger compartment. In addition, a heat source on a low-voltage side may also use residual heat of the electric-drive heat dissipation loop, to reduce overall energy consumption of the thermal management system.

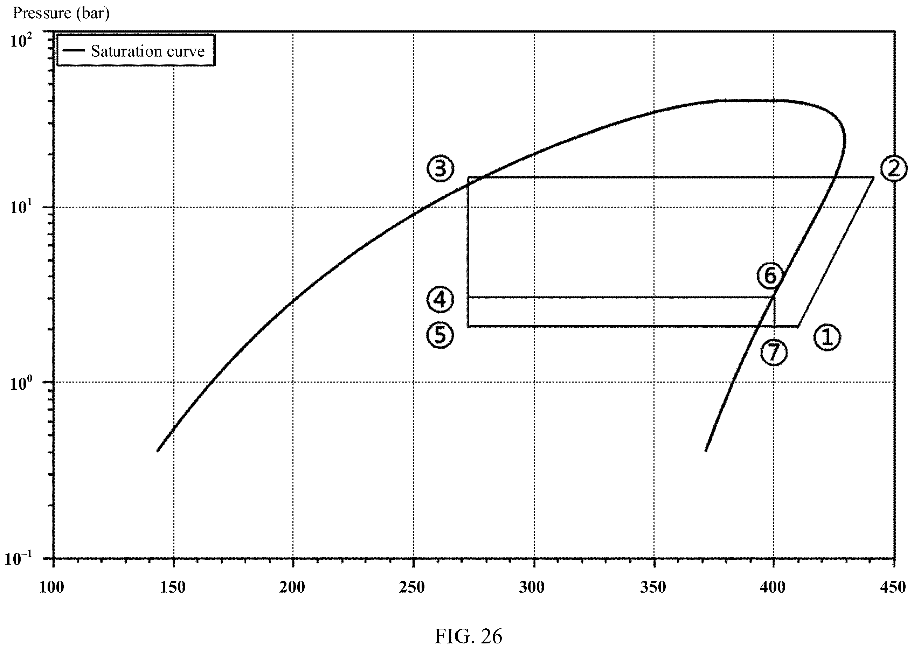

In the foregoing embodiment, when the temperature of the passenger compartment reaches a specific value, and a water temperature of the electric drive or the battery reaches a specific value, the heater may not be turned on. There are two low-temperature heat sources of an entire heat pump system: a room temperature environment of the passenger compartment, and waste heat of the electric drive or the battery. When temperatures of the two low temperature heat sources are not consistent, the first throttle valve E1 is used to balance pressures of the two sources. FIG. 26 is a pressure-specific enthalpy diagram of the thermal management system in FIG. 25. For the foregoing embodiment, the thermal management system uses an R134a refrigerant as the first cooling medium, to simulate the pressure-specific enthalpy of the thermal management system. As shown in FIG. 26, after the refrigerant is compressed by the compressor ((1)-(2)), a temperature is increased and a pressure is increased. A compressed refrigerant enters the first condenser, transfers heat to a coolant, and at the same time, a status of the refrigerant changes from a high-pressure high-temperature gas state to a high-pressure high-temperature liquid state ((2)-(3)). A condensed refrigerant is divided into two parts: One part passes through an expansion valve on a battery side, and an isenthalpic throttling process ((3)-(5)) occurs. Then, a low-temperature and low-pressure refrigerant absorbs heat of the coolant in the cooler. The heat of the coolant may come from external air, the electric drive, or the battery. A temperature is further increased after the refrigerant passes through the heater (if the heater is turned on). Certainly, the heater does not need to be turned on. In this way, the heater is used only as a path. The other part of the refrigerant passes through an expansion valve of the air conditioner box in the passenger compartment, and an isenthalpic throttling process ((3)-(4)) occurs. Then, the low-temperature and low-pressure refrigerant performs heat exchange with the air ((4)-(6)). After the refrigerant flowing out from the evaporator passes through the first throttle valve E1 (that is, a suction throttle valve), the pressure decreases, and the refrigerant flowing out from the evaporator is mixed with the refrigerant flowing out from the outlet of the cooler. After the state changes to a state ((1)) of a low pressure and a high superheat degree, the mixed refrigerant enters the compressor for compression, and a circulation is completed. For the passenger compartment, internal circulation may be used on an air side. Flowing air first passes through the evaporator (a refrigerant side (4)-(6)), and then humidity and a temperature both decrease, that is, a process of cooling and dehumidification. Then, the flowing air passes through the heater core, and performs heat exchange with a high-temperature coolant in the heater core, and the temperature is increased, to achieve heating effect. In this embodiment, full internal circulation may be used. In this way, no fresh air enters the passenger compartment, so that a heat load needed by the passenger compartment can be reduced. In addition, the evaporator is turned on, and anti-fogging effect is achieved. In addition, a low-temperature heat source (such as the air, the electric drive, or the battery) is suctioned through the cooler, and the first throttle valve E1 is used to balance a pressure at the evaporator (a second low-temperature heat source). In this case, there are two types of low-temperature heat sources: one is the passenger compartment, and the other is the external air, the electric drive, or the battery.

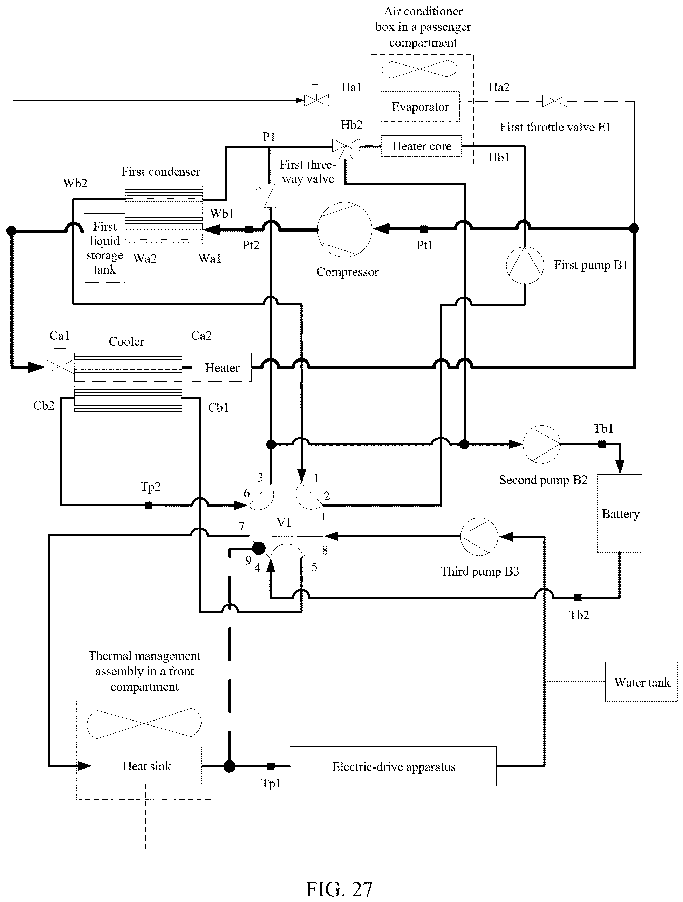

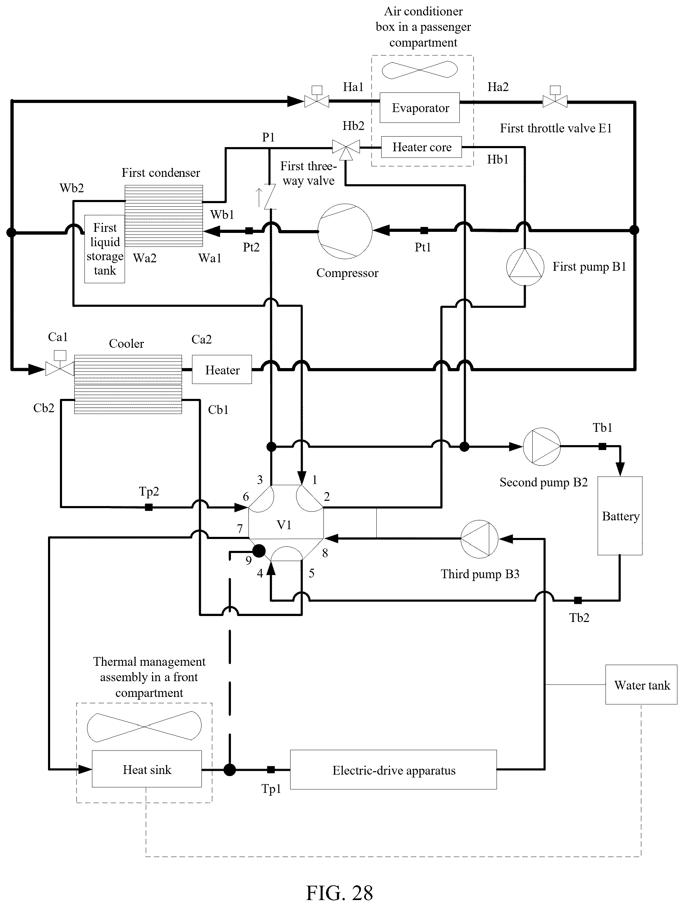

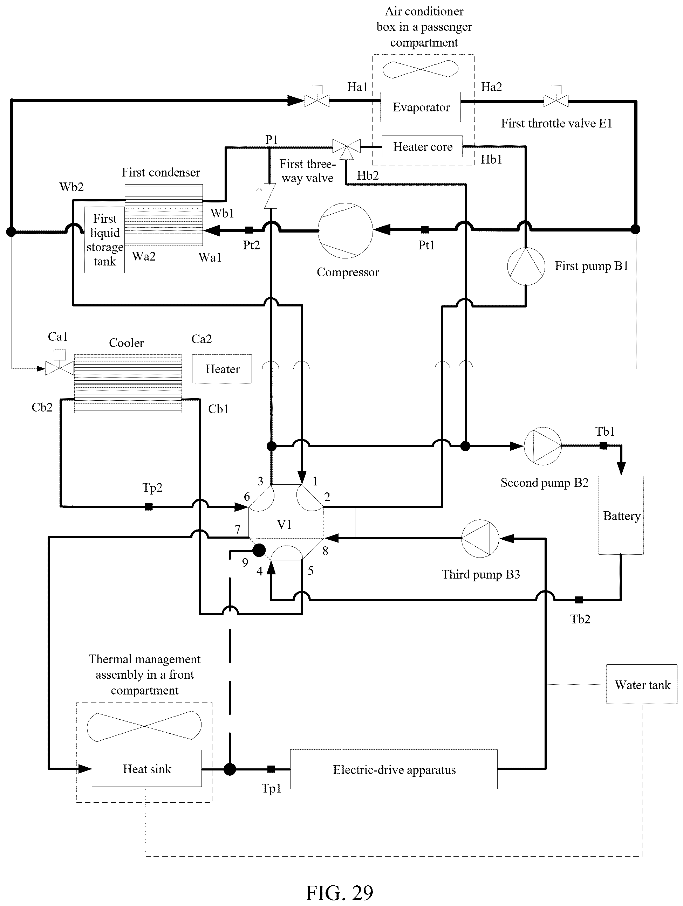

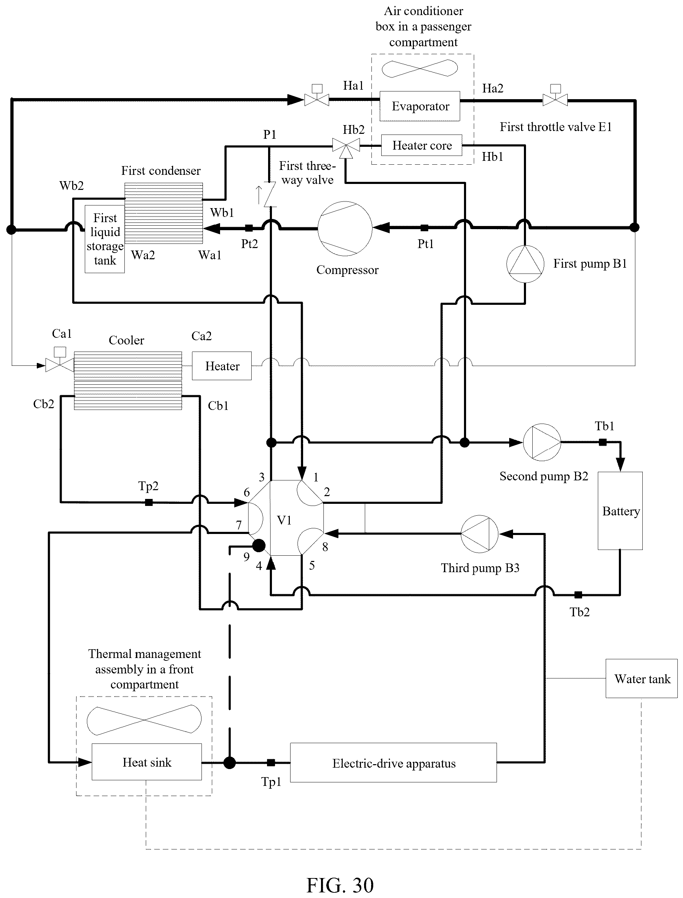

FIG. 27 is a diagram of heating the battery by the thermal management system in FIG. 6 at a low temperature. FIG. 28 is another diagram of heating the battery by the thermal management system in FIG. 6 at a low temperature. FIG. 29 is another diagram of heating the battery by the thermal management system in FIG. 6 at a low temperature. FIG. 30 is another diagram of heating the battery by the thermal management system in FIG. 6 at a low temperature. As shown in FIG. 27, the thermal management system may run in the mode in which the battery is separately heated, or may run in the mode in which the passenger compartment and the battery are simultaneously heated. In a turn-on phase of the compressor, the thermal management system may run in the mode shown in FIG. 27. Specifically, the heater is turned on, and the compressor may be turned on subsequently or simultaneously. The high-temperature second cooling medium flowing out from the outlet Wb2 of the second path of the first condenser enters the first port 1 of the first valve body V1, then flows out from the second port 2 and enters the first pump B1, and then enters the heater core. The second cooling medium flowing out from the outlet Hb2 of the heater core is divided into two paths after passing through the three-way valve: One path enters the convergence point P1. The other path enters the battery heat exchange loop. The third cooling medium of the battery heat exchange loop may enter the one-way valve from the third port 3 of the first valve body V1 and flow into the convergence point P1, and then enter the second path of the first condenser. When the temperature of the passenger compartment reaches a specific temperature, the thermal management system may run in the modes shown in FIG. 28, FIG. 29, and FIG. 30. In this case, the passenger compartment uses an internal circulation mode. The thermal management system shown in FIG. 28 and FIG. 29 may run in the mode in which the passenger compartment and the battery are simultaneously heated. When the throttle valve at the inlet Ha1 of the evaporator is opened, the thermal management system may absorb heat from the passenger compartment, to implement dehumidification of the passenger compartment, so as to prevent fogging.

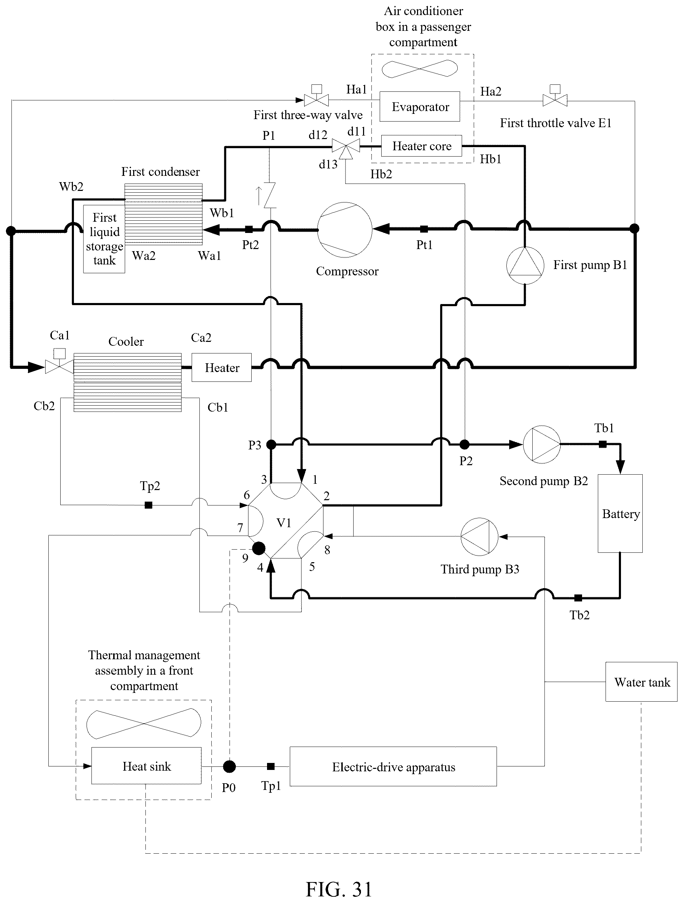

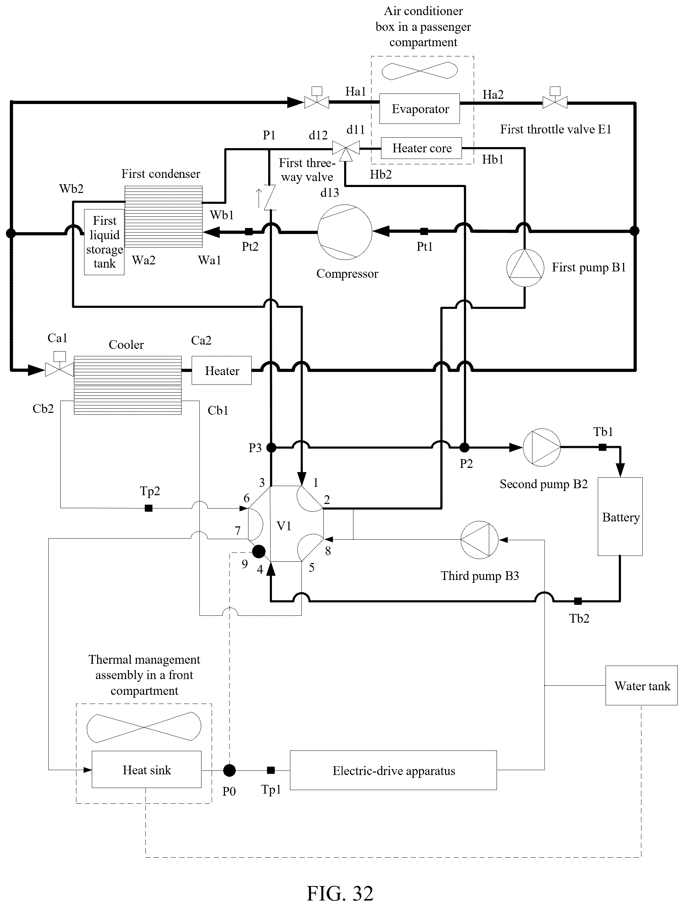

In an extremely low temperature environment, the thermal management system may further run in a battery fast-charging heating mode. FIG. 31 is another diagram of heating the battery by the thermal management system in FIG. 6 at an extremely low temperature. As shown in FIG. 31, the thermal management system may run in the mode in which the battery is separately heated. The first cooling medium flowing out from the compressor enters the first condenser and the first liquid storage tank. After flowing out from the first liquid storage tank, the first cooling medium enters the throttle valve at the inlet Ca1 of the first path of the cooler, enters the cooler after being throttled, and then enters the heater. The first cooling medium enters the compressor after being heated by the heater. For the electric-drive heat dissipation loop: the third pump B3 does not run or runs at a lower rotation speed due to an extremely low ambient temperature. The fourth cooling medium flowing out from the electric-drive apparatus enters the eighth port 8 of the first valve body V1 after entering the third pump B3, and then enters the second path of the cooler through the fifth port 5 of the first valve body V1. The fourth cooling medium enters the sixth port 6 of the first valve body V1 after flowing out from the cooler, and finally flows out from the seventh port 7 or the ninth port 9 of the first valve body V1 and returns to the electric-drive heat dissipation loop. For the battery heat exchange loop, the third cooling medium is heated in the first condenser and then enters the first port 1 of the first valve body V1, then flows out from the third port 3 of the first valve body V1 and enters the battery through the second pump B2, flows out from the battery and enters the fourth port 4 of the first valve body V1, and then flows out from the second port 2 of the first valve body V1 and enters the heater core through the first pump B1. The second cooling medium enters the second path of the first condenser. FIG. 32 is another diagram of simultaneously heating the passenger compartment and the battery by the thermal management system in FIG. 6 at an extremely low temperature. As shown in Figure 32, the thermal management system may run in the mode in which the passenger compartment and the battery are simultaneously heated. In this case, in the thermal system loop, a part of the first cooling medium may flow out from the first liquid storage tank and enter the throttle valve, then enter the first throttle valve E1 after entering the evaporator, to converge with the other part of the first cooling medium flowing out from the heater and enter the compressor. In this case, the air conditioner box in the passenger compartment may run in a full internal circulation mode. In addition, the second cooling medium flowing out from the first condenser enters the first port 1 of the first valve body V1, then enters the first pump B1 after flowing out from the second port 2 of the first valve body V1, and then enters the heater core. The second cooling medium enters the three-way valve after flowing out from the heater core. In the three-way valve, the second cooling medium is divided into two paths: One path enters the battery heat exchange loop from P2. The other path enters the first condenser through P1. For the battery heat exchange loop, the third cooling medium flowing out from the second pump B2 enters the battery, and then the third cooling medium enters the fourth port 4 of the first valve body V1 after flowing out from the battery, and then passes through the third port 3 of the first valve body V1. At the convergence point P3, the third cooling medium is divided into two paths: One path enters P1 through the one-way valve. The other path enters the second pump B2 through P2.

The thermal management system in FIG. 8 is used as an example. The thermal management system may include the low-temperature start phase and the stable phase.

### M21: Low-temperature start phase

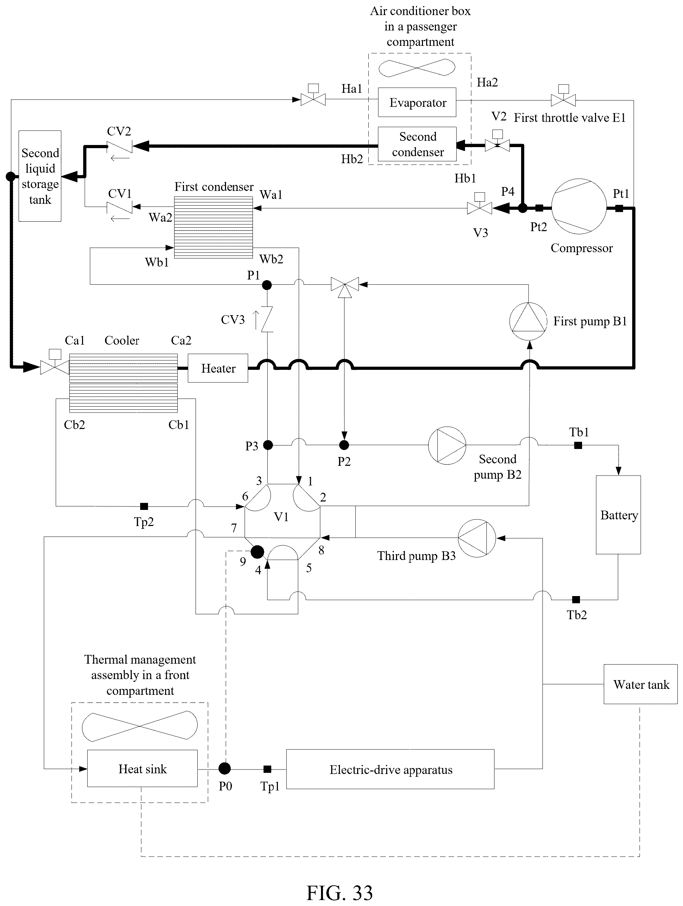

When an external ambient temperature of the electric vehicle is excessively low, because an inlet pressure of the compressor is lower than one atmospheric pressure, the compressor cannot be turned on normally, and the thermal system loop cannot run. FIG. 33 is a diagram of the thermal management system in FIG. 8 in the low-temperature start phase. As shown in FIG. 33, after the heater is turned on, a solenoid valve V2 that adjusts an opening may be opened and V3 may be closed. The high-temperature first cooling medium from the compressor enters the second condenser, and then after entering the second liquid storage tank through the one-way valve CV2, passes through the throttle valve and enters the cooler. After being heated by the heater, the first cooling medium enters the compressor through Pt1. In this phase, the mode in which the passenger compartment is separately heated can be implemented.

### M22: Stable phase

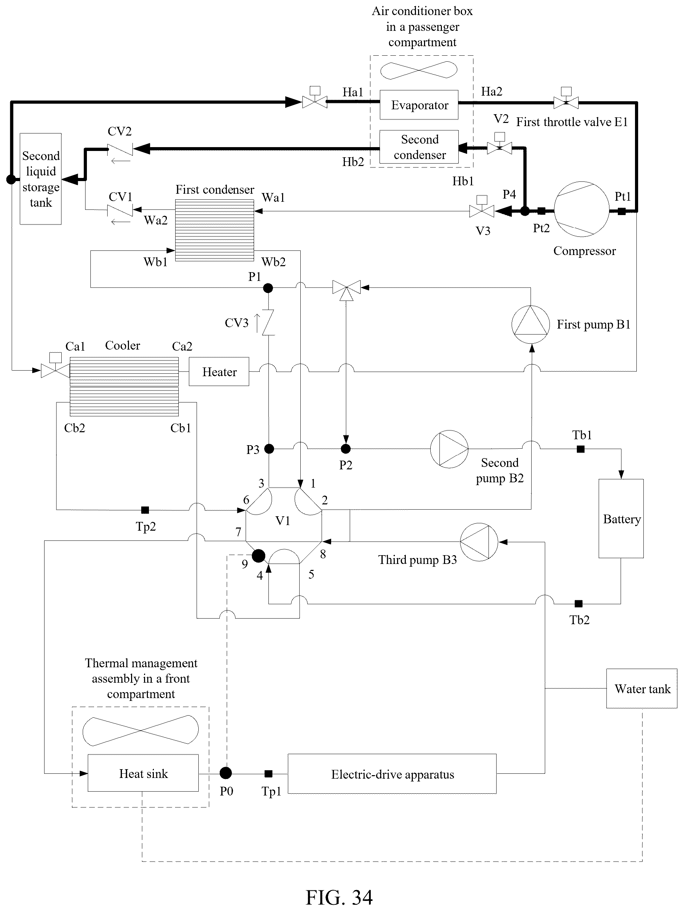

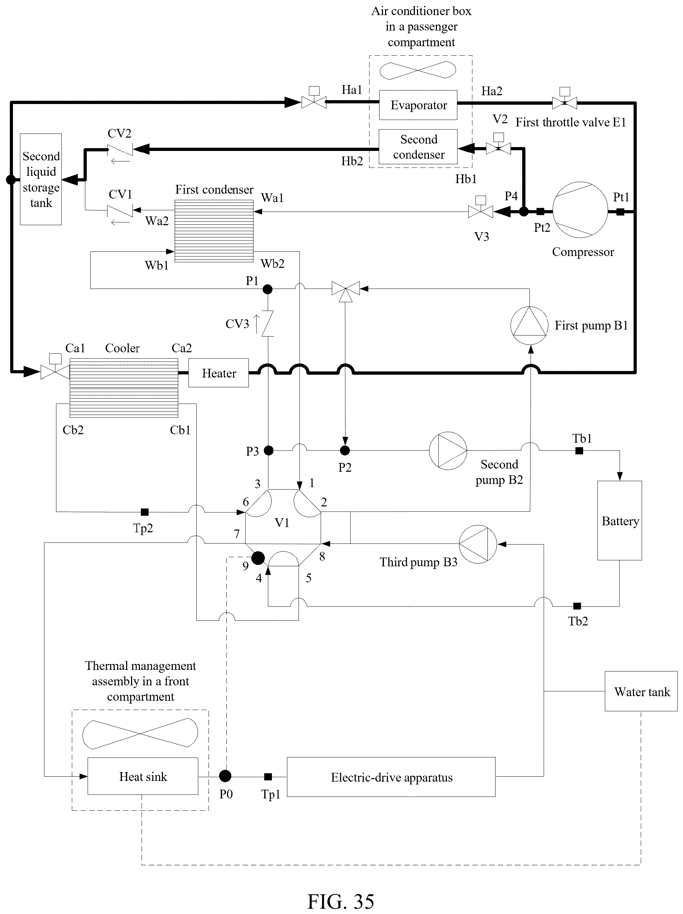

When the temperature of the passenger cabin reaches a specific temperature, the thermal management system reaches the stable phase and may run in different modes. FIG. 34 is a diagram of the thermal management system in FIG. 8 in the stable phase. As shown in FIG. 34, in an optional embodiment, the first cooling medium discharged from the compressor enters the second condenser through the opened solenoid valve V2, and then enters the second liquid storage tank through the one-way valve CV2. The first cooling medium flowing out from the second liquid storage tank enters the evaporator through the throttle valve, and then enters the compressor through the first throttle valve E1. The first throttle valve E1 may be a throttle valve opened to an inner diameter of the pipeline. In other words, a maximum diameter of the first throttle valve E1 may be consistent with the inner diameter of a connected pipeline. At this time, the air conditioner box in the passenger compartment uses full internal circulation. FIG. 35 is another diagram of the thermal management system in FIG. 8 in the stable phase. As shown in FIG. 35, in another optional embodiment, the refrigerant flowing out from the compressor passes through the solenoid valve V2, enters the second condenser for heat dissipation, then enters the second liquid storage tank through the one-way valve CV2, and then is divided into two paths: One path enters the evaporator after passing through the throttle valve, and then passes through the first throttle valve E1. The other path flows out from the second liquid storage tank and enters the cooler through the throttle valve, and then enters the heater for heating. After flowing out from the heater, the first cooling medium converges with the first cooling medium flowing out from the first throttle valve E1, and then enters the compressor.

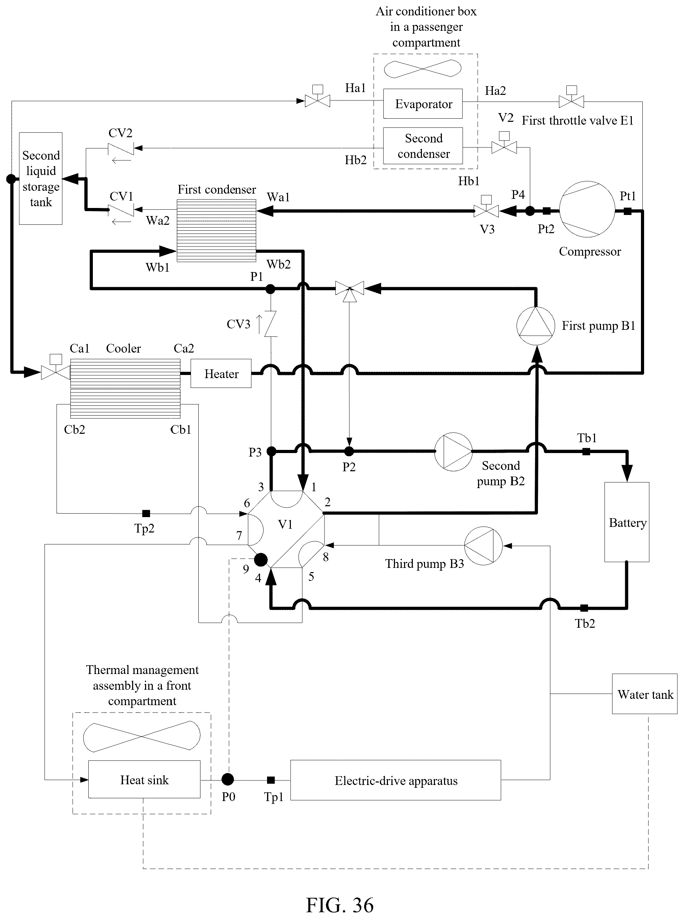

In an extremely low temperature environment, the thermal management system may further run in the battery fast-charging heating mode. In this case, the third pump B3 in the electric-drive heat dissipation loop may not rotate or run at a low rotation speed. FIG. 36 is a diagram of the thermal management system in FIG. 8 in the battery fast-charging heating mode. As shown in FIG. 36, the thermal management system may run in the mode in which the battery is separately heated. The solenoid valve V3 that may adjust the opening is fully opened, and the solenoid valve V2 that may adjust the opening is fully closed. The first cooling medium flowing out from the compressor enters the first path of the first condenser through the V3, then enters the cooler through the one-way valve CV1 and the throttle valve, then enters the heater to be heated, and then enters the compressor, to complete a circulation. For the battery heat exchange loop, the second cooling medium flowing out from the second path of the first condenser enters the first port 1 of the first valve body V1 and enters the second pump B2 from the third port 3. Then, the cooling medium enters the fourth port 4 of the first valve body V1 after flowing out from the battery, then flows out from the second port 2 of the first valve body V1, and enters the inlet Wb1 of the second path of the first condenser after passing through the first pump B1.

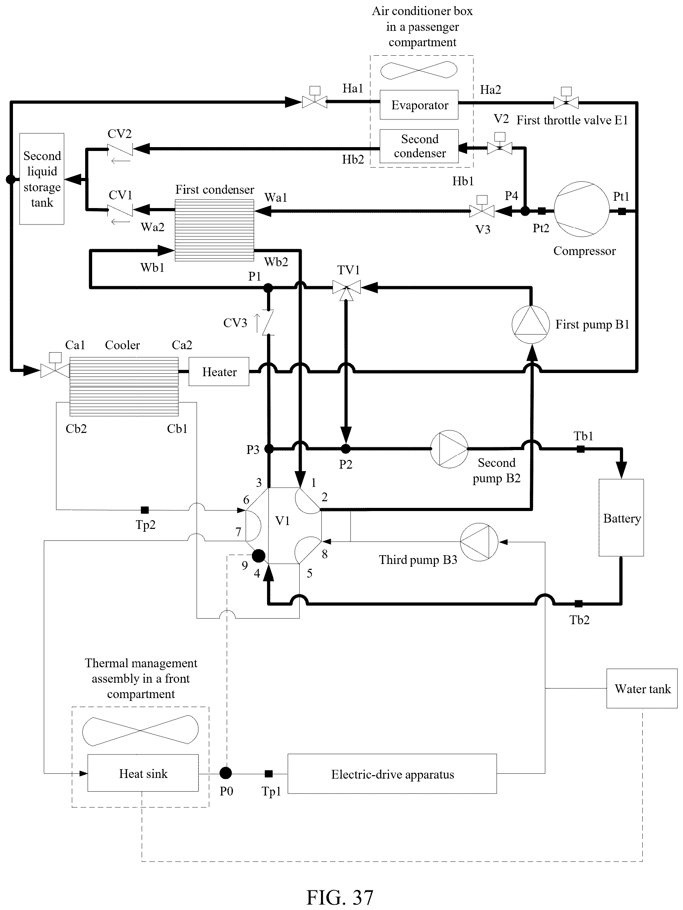

FIG. 37 is another diagram of the thermal management system in FIG. 8 in the battery fast-charging heating mode. As shown in Figure 37, the thermal management system may run in the mode in which the passenger compartment and the battery are simultaneously heated. The first cooling medium is divided into two paths after flowing out from the compressor: One path enters the second condenser through the solenoid valve V2, and then enters the liquid storage tank through the one-way valve V3. The other path enters the first condenser through the solenoid valve V3, and then enters the second liquid storage tank through the one-way valve V4. The first cooling medium is divided into two paths after flowing out from the first liquid storage tank: One path enters the cooler after being throttled by using the throttle valve, and enters the heater. The other path enters the evaporator after being throttled by using the throttle valve. The first cooling medium enters the first throttle valve E1 after flowing out from the evaporator. The first cooling medium flowing out from the first throttle valve E1 is mixed with the first cooling medium flowing out from the heater, and then enters the compressor. At this time, the air conditioner box in the passenger compartment may use full circulation, to reduce the load of the passenger compartment. In addition, the throttle valve at the inlet Ha1 of the evaporator or the first throttle valve E1 may also be closed. In this way, there is only one path of first cooling medium flowing out from the second liquid storage tank, that is, the path that enters the throttle valve at the inlet Ca1 of the first path of the cooler. In this case, the passenger compartment needs to use a partial/full external circulation to reduce the risk of fogging inside the vehicle. For the battery heat exchange loop, the second cooling medium flowing out from the second path of the first condenser enters the first port 1 of the first valve body V1, enters the first pump B1 after flowing out from the second port 2 of the first valve body V1, and then enters the three-way valve TV1. The three-way valve TV1 divides the second cooling medium into two paths: One path enters the battery heat exchange loop from P2. The other path enters the second path of the first condenser through P1. For the battery heat exchange loop, the third cooling medium flowing out from the second pump B2 enters the battery. The third cooling medium enters the fourth port 4 of the first valve body V1 after flowing out from the battery, flows out from the third port 3 of the first valve body V1, and is divided into two paths at P3: One path enters P1 through the one-way valve CV3. The other path enters the second pump B2 through P2.

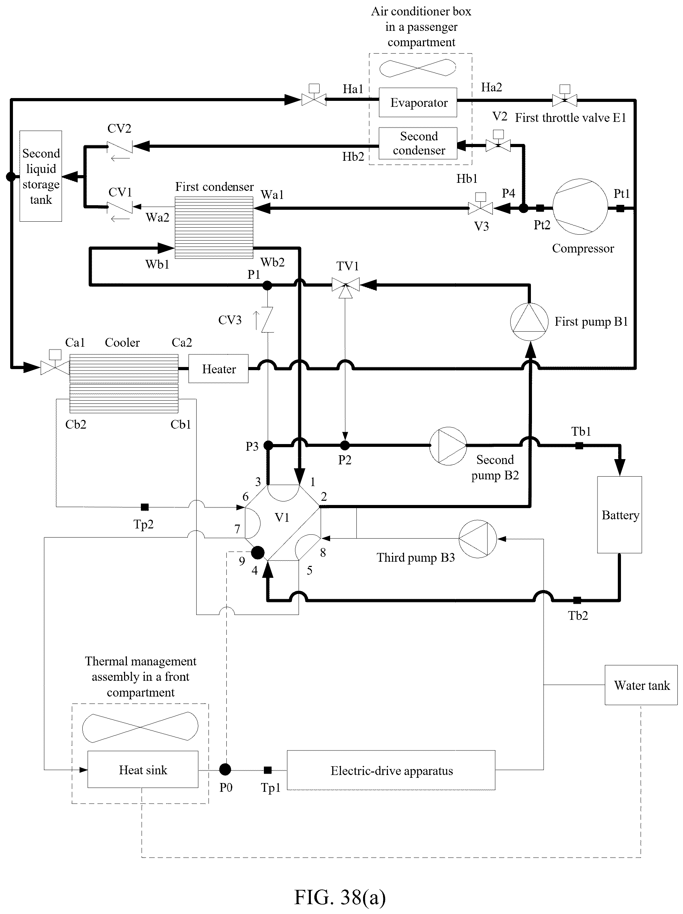

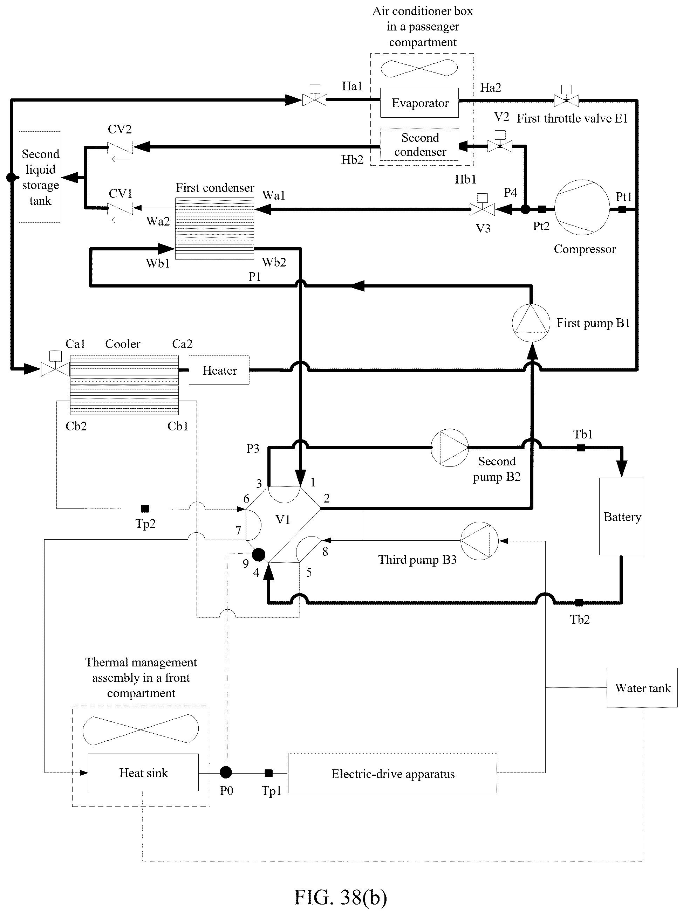

FIG. 38(a) and FIG. 38(b) are another diagram of the thermal management system in FIG. 8 in the battery fast-charging heating mode. As shown in FIG. 38(a), for the mode in which the passenger compartment and the battery are simultaneously heated, the thermal management system may also be implemented in another circulation manner. In this case, the battery heat exchange loop uses the same circulation manner shown in FIG. 36, that is, the second cooling medium flowing out from the second path of the first condenser heats the battery. As shown in FIG. 38(b), in the foregoing embodiment, V2 and V3 that may adjust the openings of the solenoid valves are controlled to control an air outlet temperature of the air conditioner box in the passenger compartment and an inlet water temperature of the battery. This means that a pipeline between the three-way valve TV1 and P2 and a pipeline between P1 and P3 can be omitted.

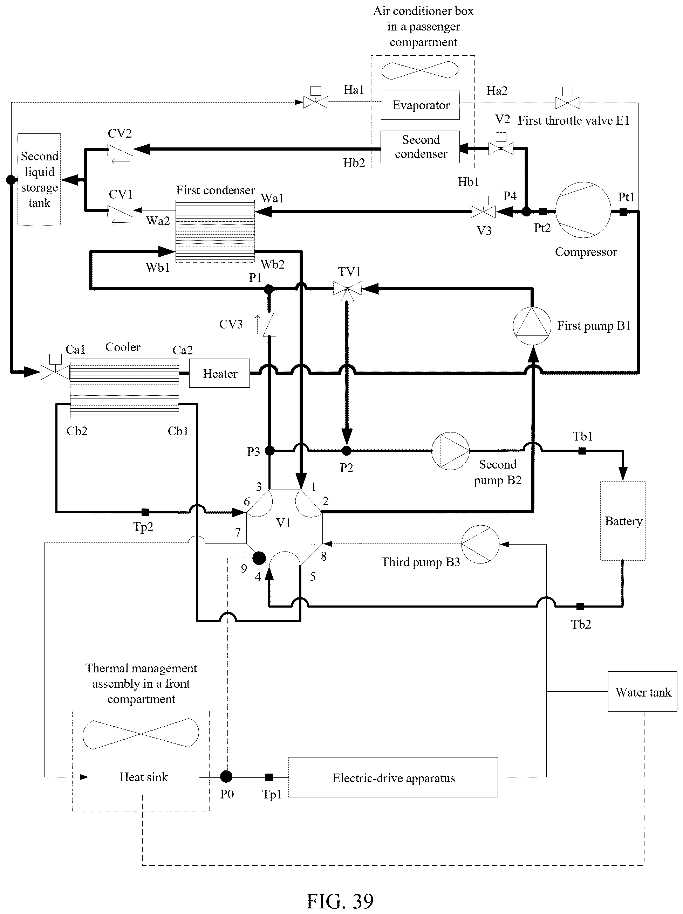

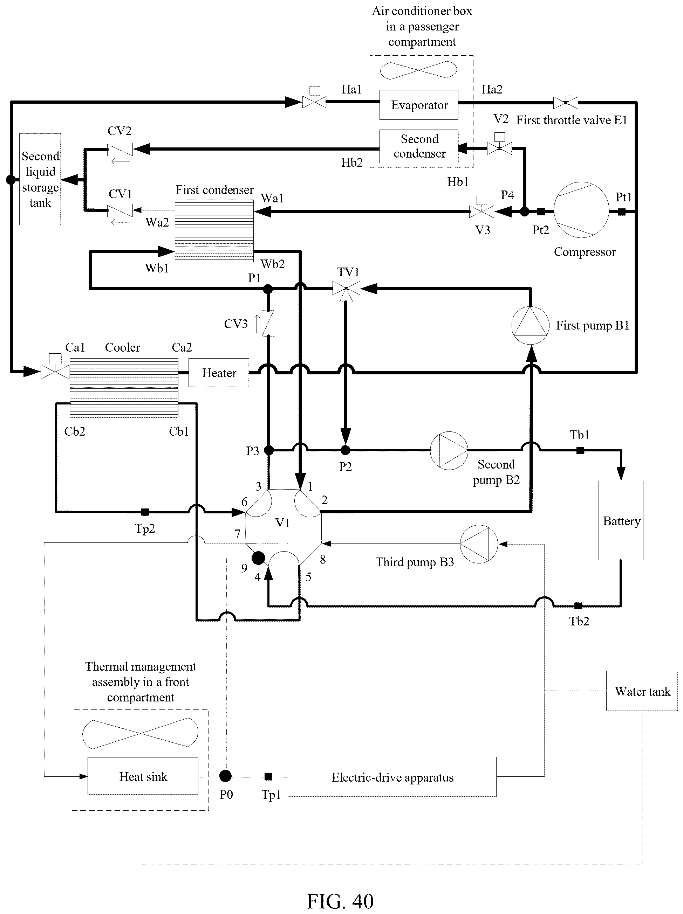

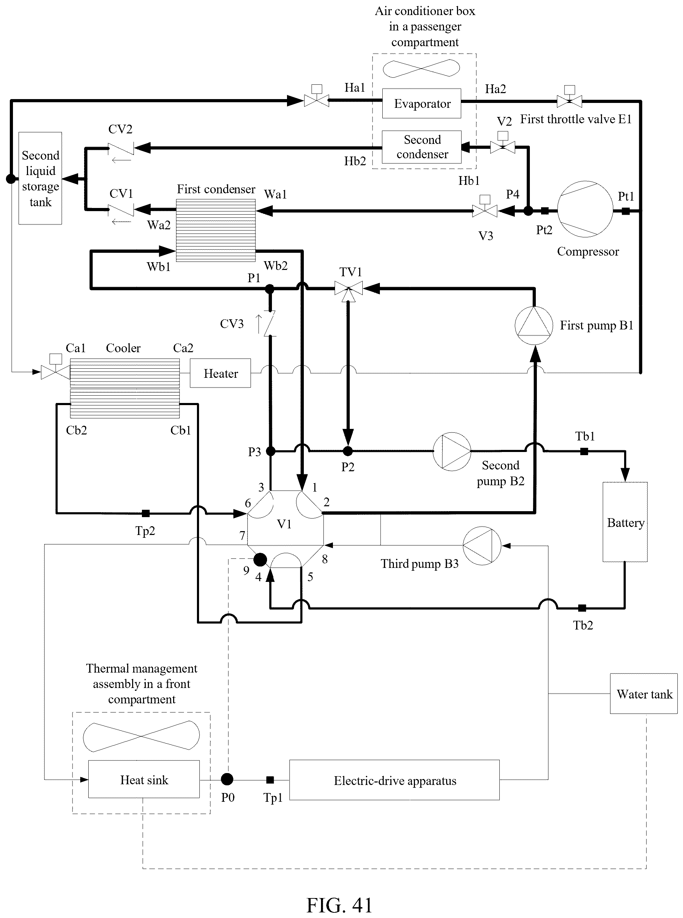

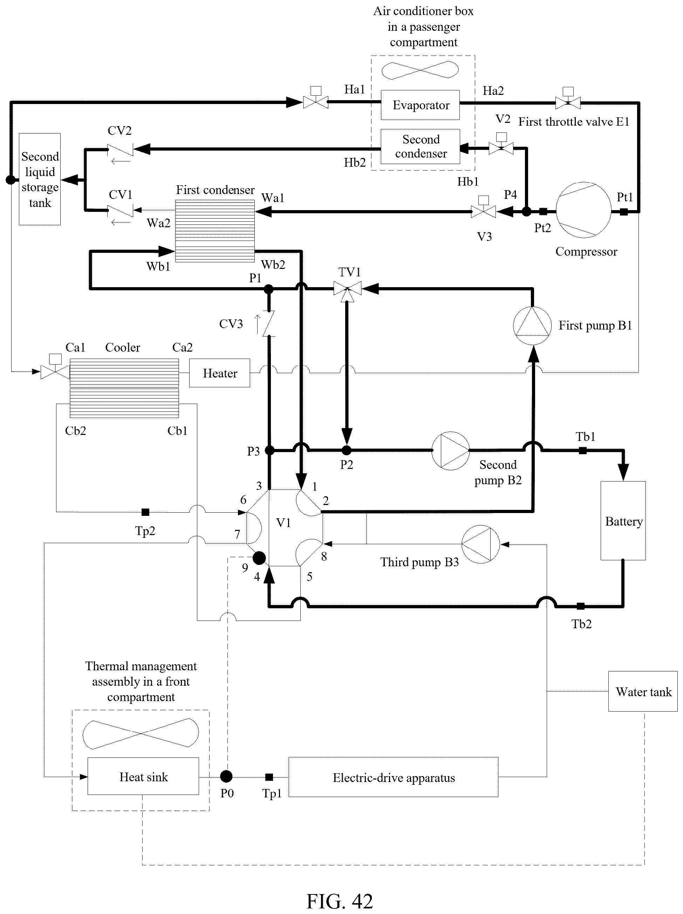

In a driving process, the thermal management system may also perform heating. FIG. 39 is a diagram of the thermal management system in FIG. 8 in a driving hybrid heating mode. As shown in FIG. 39, the thermal management system is in a running mode in the start phase. After the heater is turned on, the compressor is turned on. The first cooling medium flowing out from the compressor is divided into two paths: One path enters the second condenser through V2, and then enters the second liquid storage tank through the one-way valve CV2. The other path enters the first path of the first condenser through V3, and then enters the second liquid storage tank through the one-way valve CV1. The first cooling medium flowing out from the second liquid storage tank enters the cooler after passing through the throttle valve, and then enters the inlet of the compressor after being heated in the heater. For the battery heat exchange loop, at the beginning, the first pump B1 and the second pump B2 do not run or run at a low rotation speed. In this way, a pressure that is of the compressor and that is on the low pressure side is quickly increased to a specific pressure, so that the thermal management system can run stably, and the second pump B2 or the third pump B3 runs at a normal rotation speed. For the thermal system loop, after being heated and flowing out from the second path of the first condenser, the second cooling medium enters the first pump B1 through the first valve body V1, and is divided into two paths in the three-way valve TV1: One path enters P2 from the three-way valve TV1 and converges with the battery heat exchange loop. The other path flows out from the three-way valve TV1 and enters the inlet Wb2 of the second path of the first condenser through the point P1. For the battery heat exchange loop, the third cooling medium flowing out from the second pump B2 enters the battery, enters the inlet Cb1 of the second path of the cooler through the first valve body V1 after heating the battery, and then is divided into two paths through the first valve body V1 after flowing out from the outlet Cb2 of the second path of the cooler: One path enters the P1 through the one-way valve CV3 and converges with the thermal system loop. The other path enters the second pump B2 through the P2. FIG. 40 is another diagram of the thermal management system in FIG. 8 in the driving hybrid heating mode. FIG. 41 is another diagram of the thermal management system in FIG. 8 in the driving hybrid heating mode. FIG. 42 is another diagram of the thermal management system in FIG. 8 in the driving hybrid heating mode. When the temperature of the passenger compartment reaches a specific temperature, in addition to a circulation manner shown in FIG. 39, the thermal management system may also run in a circulation manner shown in FIG. 40, FIG. 41, and FIG. 42. A circulation manner of the battery heat exchange loop in FIG. 40 is the same as that in FIG. 41. For the thermal system loop, the first cooling medium enters the throttle valve after flowing out from the second liquid storage tank, then enters the evaporator, and then enters the inlet of the compressor through the first throttle valve E1 (the first cooling medium is throttled or not). As shown in FIG. 41, the throttle valve at the inlet Ca1 of the first path of the cooler is closed, and the heater is also turned off. In this case, no cooling medium enters the cooler and the heater. As shown in FIG. 42, the thermal system loop is the same as the circulation shown in FIG. 41. For the electric-drive heat dissipation loop, the fourth cooling medium flowing out from the electric-drive apparatus enters the first valve body V1 through the third pump B3 and enters the inlet Cb1 of the second path of cooler, and enters the first valve body V1 after flowing out from the outlet Cb2 of the second path of the cooler. The fourth cooling medium may directly enter the electric-drive apparatus through the ninth port 9 of the first valve body V1, or may enter a front-end thermal management assembly through the seventh port 7 of the first valve body V1, and then enter the electric-drive apparatus. For the battery heat exchange loop, the third cooling medium flowing out from the second pump B2 enters the battery, and enters the first valve body V1 after flowing out from the battery, and then is divided into two paths after flowing out from the first valve body V1: One path passes through the one-way valve CV3 and enters the point P1 to converge with the thermal system loop. The other path passes through P2 and enters the third pump B3. In addition, in this case, if a water temperature of the electric-drive heat dissipation loop is higher than a specific value, the throttle valve at the inlet Ca1 of the first path of the cooler may be opened, and the electric-drive heat dissipation loop may also be used as a low-temperature heat source of the thermal system loop.

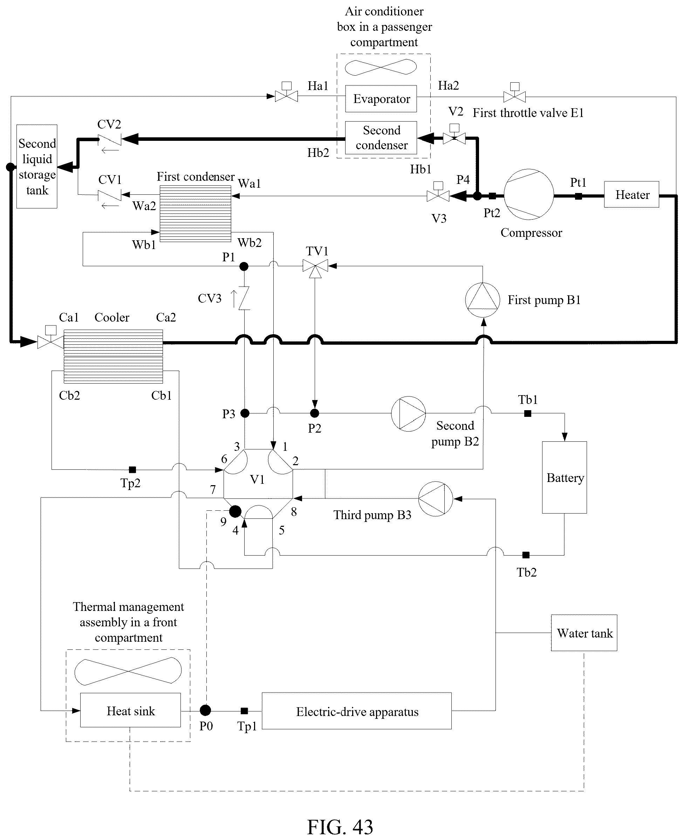

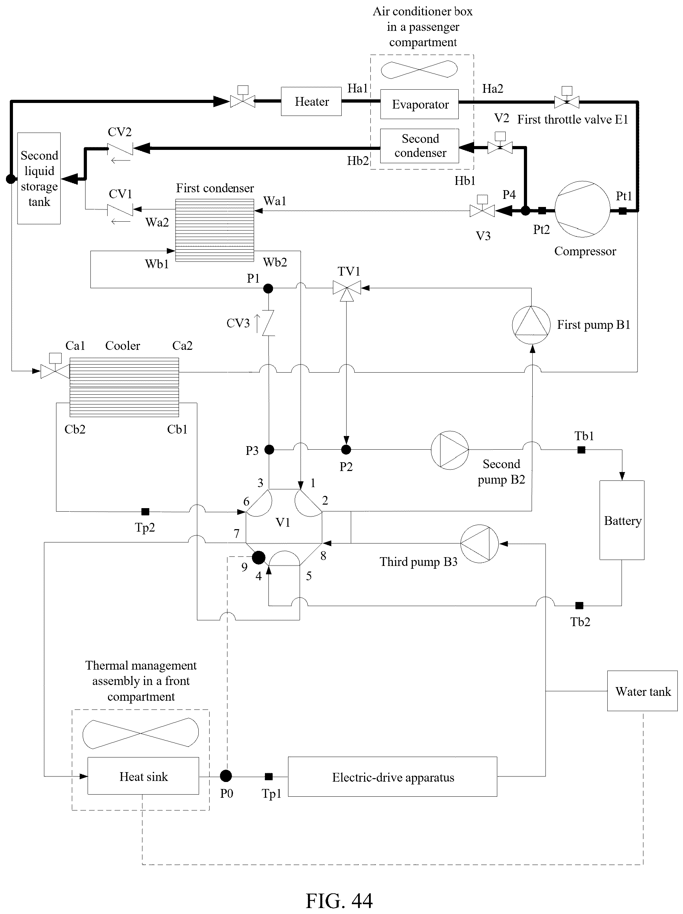

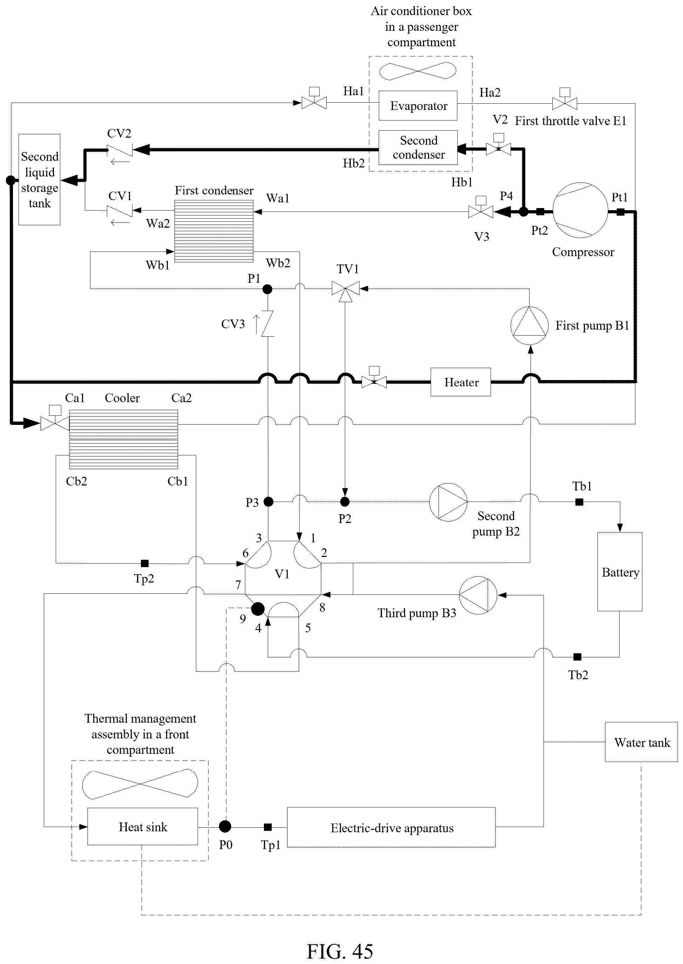

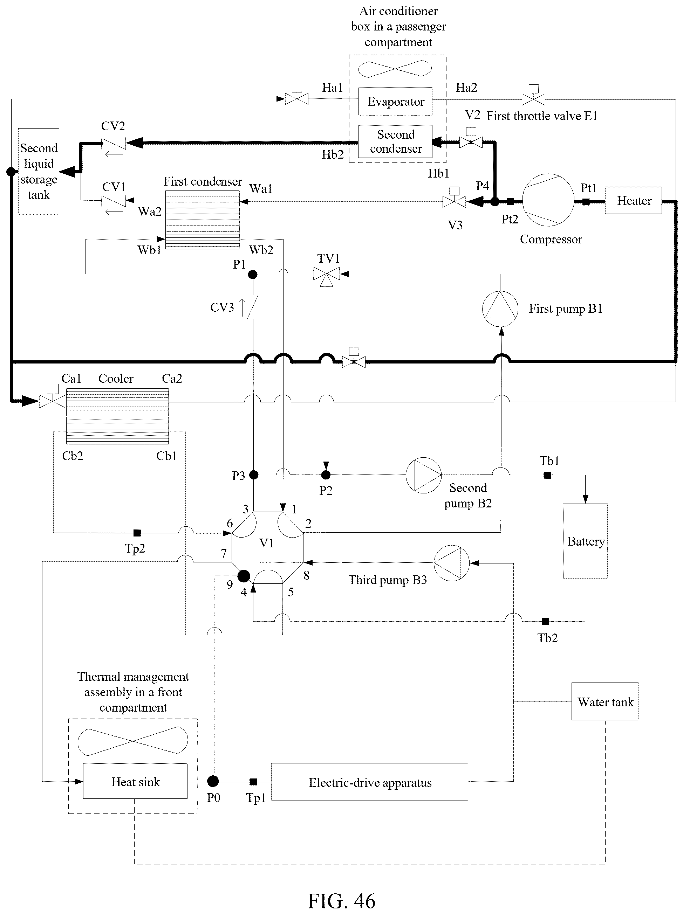

Certainly, when the heater is in a different location, the heater may still heat the passenger compartment in the stable phase. FIG. 43 is a diagram of a cooling medium circulation mode of another thermal management system according to an embodiment of this application. FIG. 44 is a diagram of a cooling medium circulation mode of another thermal management system according to an embodiment of this application. FIG. 45 is a diagram of a cooling medium circulation mode of another thermal management system according to an embodiment of this application. FIG. 46 is a diagram of a cooling medium circulation mode of another thermal management system according to an embodiment of this application. As shown in FIG. 43, the heater may be disposed at the inlet of the compressor. As shown in FIG. 44, the heater may be disposed between the throttle valve and the evaporator. As shown in FIG. 45, the second liquid storage tank is connected to a throttle valve in the heater branch, and the throttle valve is connected to the heater. Compared with FIG. 45, the heater in FIG. 46 is arranged between the compressor and the convergence point. In the foregoing thermal management system, the heater may directly heat the first cooling medium, to blow heat into the passenger compartment via the air conditioner box in the passenger compartment. In addition, for a start state of the thermal system loop in a low-temperature environment, in addition to a manner in which the heater is independently disposed, the heater may be disposed in the compressor. Specifically, the heater may include the compressor motor and the motor controller that are connected. The compressor may include the compressor body and the scroll disposed on the compressor body. The compressor motor is connected to the scroll. The compressor motor is configured to provide the power source for the compressor. Because the compressor motor generates more heat in the low-efficiency mode than in the normal working state, in the technical solution, the first cooling medium may be heated by using excess heat generated by the compressor motor in the low-efficiency mode, so that the structure of the thermal management system may be simplified. However, in this case, the throttle valve at the inlet Ca1 of the first path of the cooler or the throttle valve at the inlet of the heater cannot be controlled by controlling the suction status, but these valves need to be controlled based on a status of the first cooling medium at the outlet of the compressor, to prevent a compressor controller from being overheated or the compressor from being subject to liquid impact because the first cooling medium enters the compressor.

### Embodiment 2

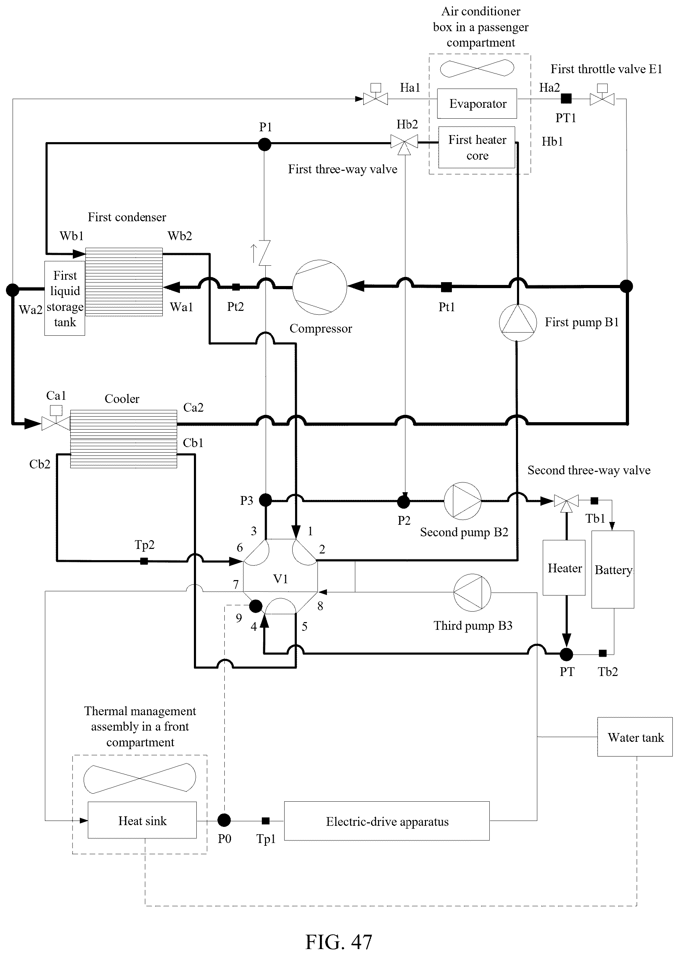

FIG. 47 is a diagram of a structure of a thermal management system according to Embodiment 2 of this application. As shown in FIG. 47, the thermal management system may include a thermal system loop, a first valve body V1, a battery heat exchange loop, and a heater. The heater is disposed in the battery heat exchange loop. The first valve body V1 includes a second path and a third path. The second path of the first valve body V1 has a third port 3 and a sixth port 6, and the third path of the first valve body V1 has a fourth port 4 and a fifth port 5. In addition, the thermal system loop includes a compressor and a cooler. The cooler has a first path and a second path that are isolated from each other. Specifically, an inlet Ca1 of the first path of the cooler is connected to an outlet of the compressor, and an outlet Ca2 of the first path of the cooler is connected to an inlet of the compressor. An inlet Cb1 of the second path of the cooler is connected to the fifth port 5 of the first valve body V1, and an outlet Cb2 of the second path of the cooler is connected to the sixth port 6 of the first valve body V1. The thermal system loop is provided with a first cooling medium, and the first cooling medium circulates between the compressor and the first path of the cooler. In addition, the battery heat exchange loop may include a second pump B2, a second three-way valve, and a battery. The second three-way valve has a first port, a second port, and a third port. An inlet of the second pump B2 is connected to the third port 3 of the first valve body V1, an outlet of the second pump B2 is connected to the first port of the second three-way valve, the second port of the second three-way valve is connected to an inlet of the battery, and the third port of the second three-way valve and an outlet of the battery are connected to the fourth port 4 of the first valve body V1. The second pump B2 is configured to drive a third cooling medium to circulate between the battery heat exchange loop and the second path of the cooler.

In the foregoing thermal management system, the heater is configured to heat the third cooling medium, so that the third cooling medium can perform heat exchange with the first cooling medium in the cooler when circulating in the battery heat exchange loop, and heat the first cooling medium. In this way, a temperature and a pressure of the first cooling medium entering the compressor can be increased. In this way, even in a low-temperature environment, the compressor can also be turned on normally, so that the thermal management system can heat a passenger compartment of an electric vehicle.

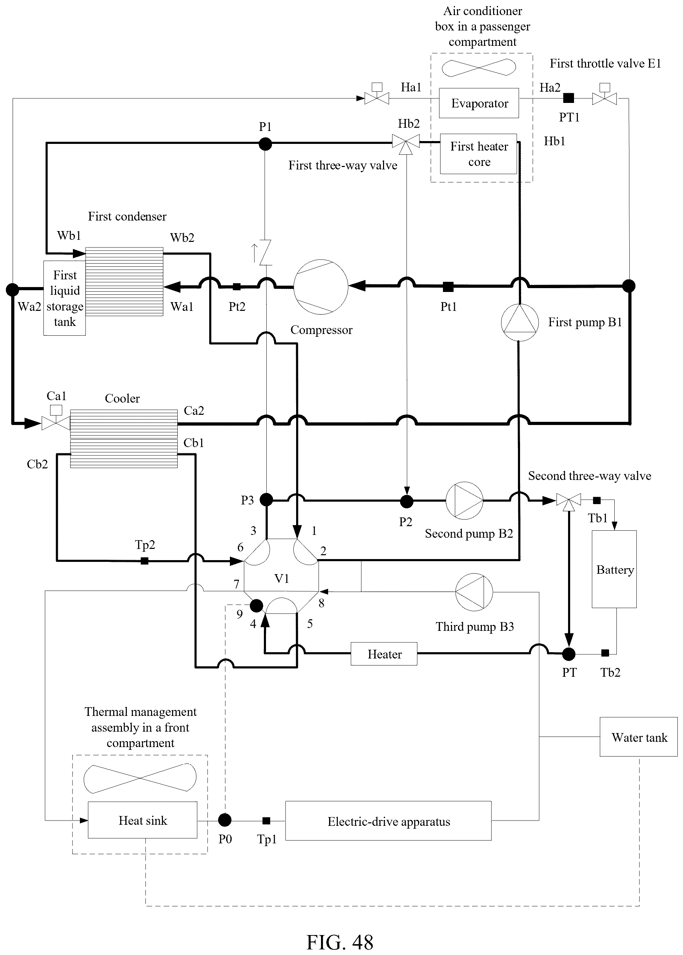

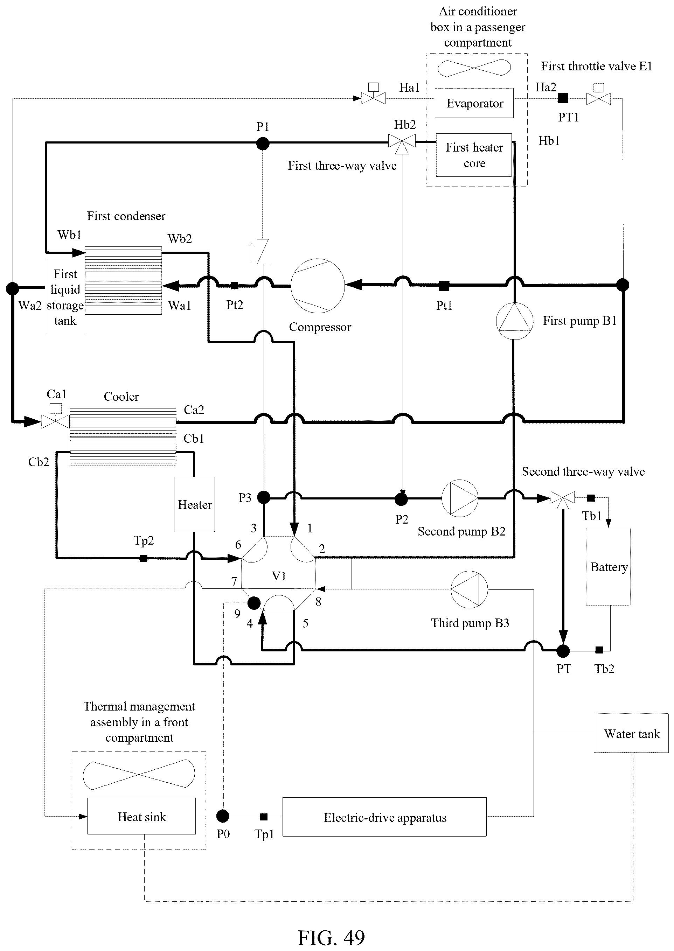

When the heater is specifically disposed, a location of the heater is not limited. For example, as shown in FIG. 47, in an optional embodiment, an inlet of the heater may be connected to the third port of the second three-way valve, and an outlet of the heater may be connected to the fourth port 4 of the first valve body V1. FIG. 48 is a diagram of another structure of the thermal management system according to Embodiment 2 of this application. As shown in FIG. 48, in another optional embodiment, the inlet of the heater may alternatively be connected to the third port of the second three-way valve and the outlet of the battery, and the outlet of the heater may be connected to the fourth port 4 of the first valve body V1. FIG. 49 is a diagram of another structure of the thermal management system according to Embodiment 2 of this application. As shown in FIG. 49, in another optional embodiment, the inlet of the heater may alternatively be connected to the fifth port 5 of the first valve body V1, and the outlet of the heater may be connected to the inlet Cb1 of the second path of the cooler.

As shown in FIG. 47, when the thermal management system runs in a mode in which the passenger compartment and the battery are simultaneously heated, the outlet of the second pump B2 outlet is connected to the second three-way valve. The second three-way valve includes two outlets, one of which is connected to the inlet of the battery, and the other is connected to the heater. The outlet of the heater is connected to a convergence point PT, and is connected to the fourth port 4 of the first valve body V1 through the convergence point PT. The thermal management system in FIG. 47 is in a running mode of a start phase. The third cooling medium heated by the heater enters the inlet Cb1 of the second path of the cooler through the first valve body V1, is heated in the cooler, then flows out from the outlet Cb2 of the second path of the cooler, and enters the second pump B2 through the first valve body V1. In this case, the third cooling medium may not pass through the battery. In the thermal system loop, the first cooling medium flowing out from the compressor enters a first condenser, then enters a first liquid storage tank, flows out from the first liquid storage tank and enters a throttle valve of the cooler to be throttled, and then returns to the compressor after entering the cooler and absorbing heat of the third cooling medium. In the third path, a second cooling medium flows out after being heated in the first condenser, enters a first pump B1 after passing through the first valve body V1, then enters a second path of an air conditioner box in a passenger compartment, and finally returns to the first condenser.

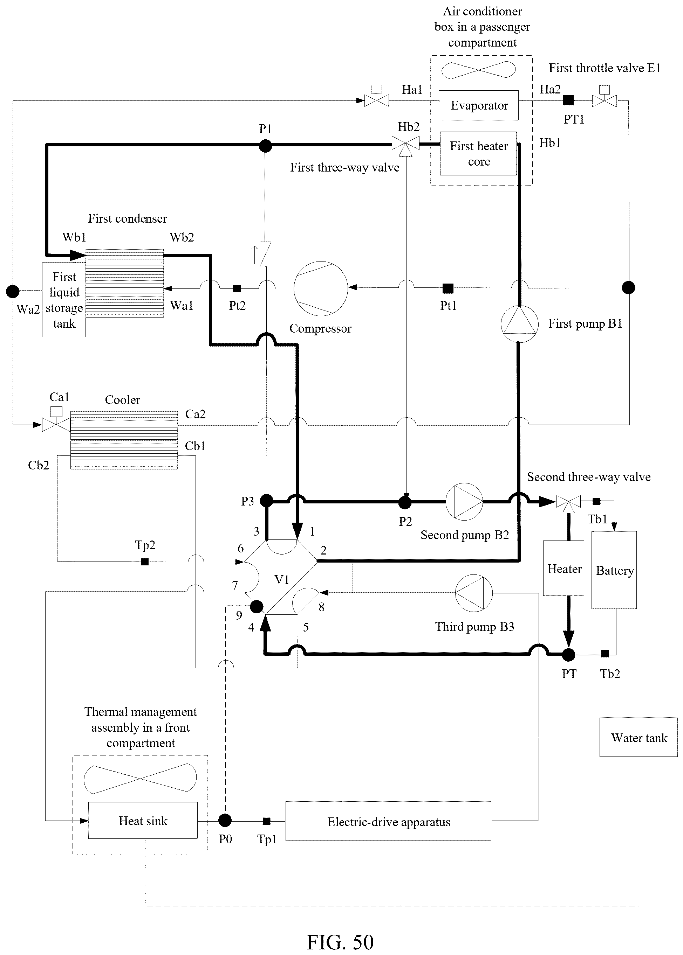

FIG. 50 is a diagram of heating a passenger compartment by the thermal management system in FIG. 47 when a refrigerant system fails. As shown in FIG. 50, when the compressor, the cooler, and the first condenser in the thermal management system fail and cannot work normally, the thermal management system may still heat the passenger compartment. Specifically, when the refrigerant system fails, the thermal management system may run in a heating mode. The third cooling medium enters the PT after being heated by the heater, enters the first pump B1 through the first valve body V1, and enters the second path of the air conditioner box in the passenger compartment from the first pump B1. The third cooling medium (that is, the second cooling medium) flows out from the second path of the air conditioner box in the passenger compartment, passes through a first three-way valve, and then enters an inlet Wb2 of a second path of the first condenser. Then, the third cooling medium flows out from the outlet Wb2 of the second path of the first condenser, and enters the second pump B2 through the first valve body V1. The third cooling medium flowing out from the second pump B2 enters the second three-way valve. In this way, the heat of the heater can be used to heat the passenger compartment.

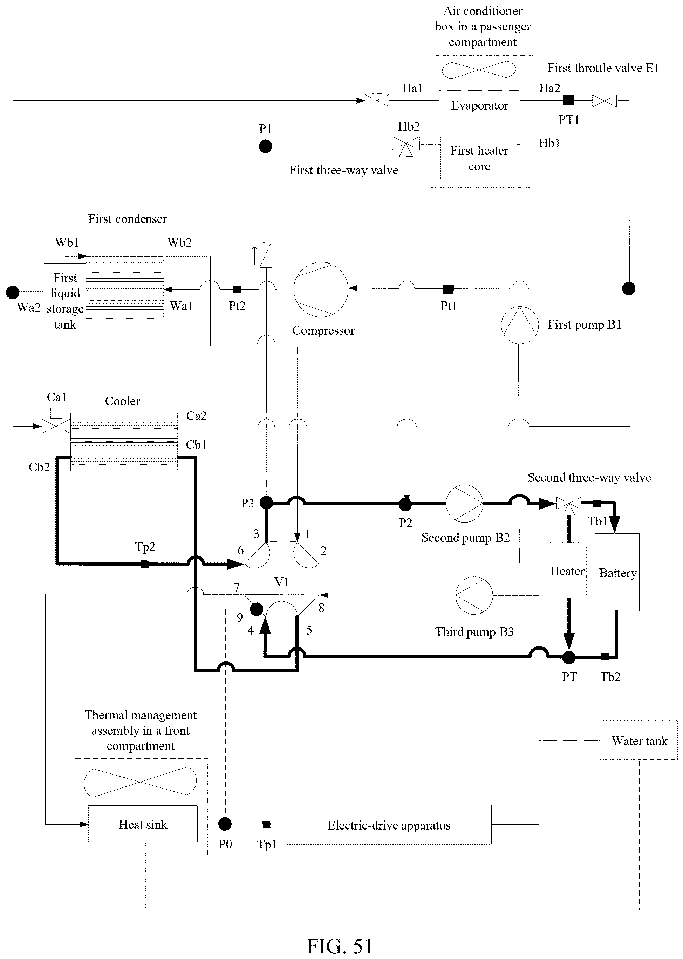

FIG. 51 is a diagram of heating the battery by the thermal management system in FIG. 47 when the refrigerant system fails. As shown in FIG. 51, when the compressor, the cooler, and the first condenser in the thermal management system fail and cannot work normally, the thermal management system may still heat the battery. Specifically, the third cooling medium is divided into two paths after passing through the second pump B2: One path enters the PT after being heated by the heater, and the other path passes through the battery. The two paths of the third cooling medium enter the fourth port 4 of the first valve body V1 after being converged at the convergence point PT, then enter the second path of the cooler through the first valve body V1, and flows back to the second pump B2 through the first valve body V1.

A circulation manner shown in FIG. 48 is similar to that shown in FIG. 49, and the outlet of the second pump B2 is connected to the second three-way valve. The second three-way valve includes two outlets, one of which is connected to the inlet of the battery, and the other is connected to the convergence point PT. The outlet of the battery is connected to the fourth port 4 of the first valve body V1 through the PT point. The heater in FIG. 48 is disposed between the convergence point PT and the fourth port 4 of the first valve body V1, and the heater in FIG. 49 is disposed between the inlet Cb1 of the second path of the cooler and the fifth port 5 of the first valve body V1.

In this embodiment of this application, the first valve body V1 may further include a first path. The first path of the first valve body V1 includes a first port 1 and a second port 2. The thermal system loop may further include the first condenser, the air conditioner box in the passenger compartment, and the first pump B1. The first condenser has a first path and the second path that are isolated from each other, and the air conditioner box in the passenger compartment includes an evaporator and a first heater core. An inlet Wa1 of the first path of the first condenser is connected to the outlet of the compressor, an outlet Wa2 of the first path of the first condenser is connected to the inlet Ca1 of the first path of the cooler and an inlet Ha1 of the evaporator, and an outlet Ha2 of the evaporator is connected to the inlet of the compressor. The second port 2 of the first valve body V1 is connected to an inlet of the first pump B1, an outlet of the first pump B1 is connected to an inlet Hb1 of the first heater core, an outlet Hb2 of the first heater core is connected to the inlet Wb1 of the second path of the first condenser, and the outlet Wb2 of the second path of the first condenser is connected to the first port 1 of the first valve body V1. The thermal system loop is further provided with the second cooling medium, and the first pump B1 is configured to drive the second cooling medium to circulate between the second path of the first condenser and the second path of the air conditioner box in the passenger compartment. In this manner, heat that is of the second cooling medium and that is exchanged in the first condenser may be blown out through the first heater core, to heat air in the passenger compartment.

In an optional embodiment, the thermal system loop may further include the first liquid storage tank. An inlet of the first liquid storage tank is connected to the outlet Wa2 of the first path of the first condenser, and an outlet of the first liquid storage tank is connected to the inlet Ca1 of the first path of the cooler and an inlet Ha1 of the evaporator. The first liquid storage tank may store a specific amount of liquid-state cooling medium in the thermal system loop, to ensure a specific annual leakage amount of the cooling medium.

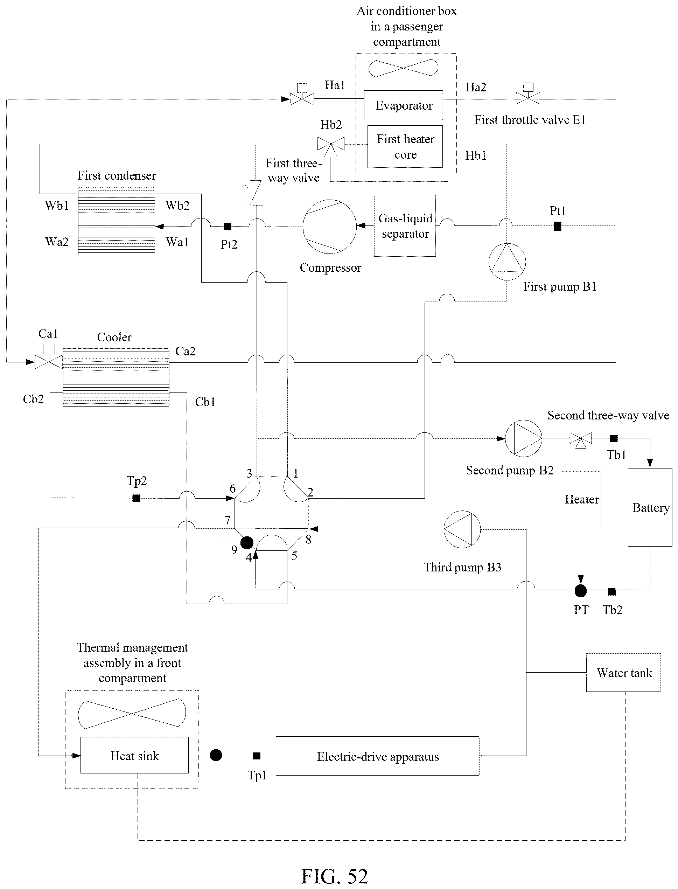

FIG. 52 is a diagram of another structure of the thermal management system according to Embodiment 2 of this application. As shown in FIG. 52, in another optional embodiment, the thermal system loop may also include a gas-liquid separator. An inlet of the gas-liquid separator is connected to the outlet Ca2 of the first path of the cooler and the outlet Ha2 of the evaporator, and an outlet of the gas-liquid separator is connected to the inlet of the compressor. In the design, the gas-liquid separator can be used to implement a liquid storage function, and the gas-liquid separator can be used to retain liquid in a gas-liquid mixture, and only gas is allowed to flow into the compressor, to improve compression effect of the compressor.

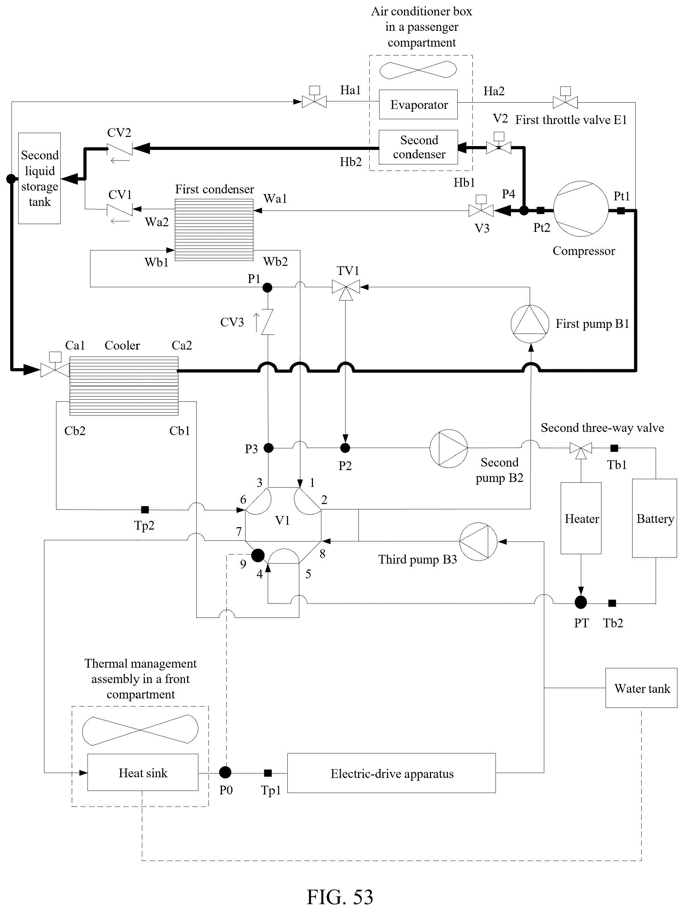

FIG. 53 is a diagram of another structure of the thermal management system according to Embodiment 2 of this application. As shown in FIG. 53, in this embodiment of this application, the first valve body V1 may also include the first path. The first path of the first valve body V1 has the first port 1 and the second port 2. The thermal system loop further includes the first condenser, the air conditioner box in the passenger compartment, and the first pump B1. The first condenser has a first path and a second path that are isolated from each other, and the air conditioner box in the passenger compartment includes an evaporator and a second condenser. The outlet of the compressor is connected to the inlet Wa1 of the first path of the first condenser and an inlet Hb1 of the second condenser, the outlet Wa2 of the first path of the first condenser is connected to the inlet Ca1 of the first path of the cooler and the inlet Ha1 of the evaporator, an outlet Hb2 of the second condenser is connected to the inlet Ca1 of the first path of the cooler and the inlet Ha1 of the evaporator, and the outlet Ha2 of the evaporator is connected to the inlet of the compressor. The second port 2 of the first valve body V1 is connected to the inlet of the first pump B1, the outlet of the first pump B1 is connected to the inlet Wb1 of the second path of the first condenser, and the outlet Wb2 of the second path of the first condenser is connected to the first port 1 of the first valve body V1. The thermal system loop is further provided with the second cooling medium, and the first pump B1 is configured to drive the second cooling medium to circulate in the second path of the first condenser. When the first condenser stops working, the first cooling medium flowing out from the outlet of the compressor may flow into the second condenser. In the air conditioner box in the passenger compartment, a low-temperature and low-pressure first cooling medium in the evaporator performs heat exchange with the high-temperature and high-pressure first cooling medium in the second condenser, so that air blown out from the air conditioner box in the passenger compartment can be maintained at a relatively suitable temperature.

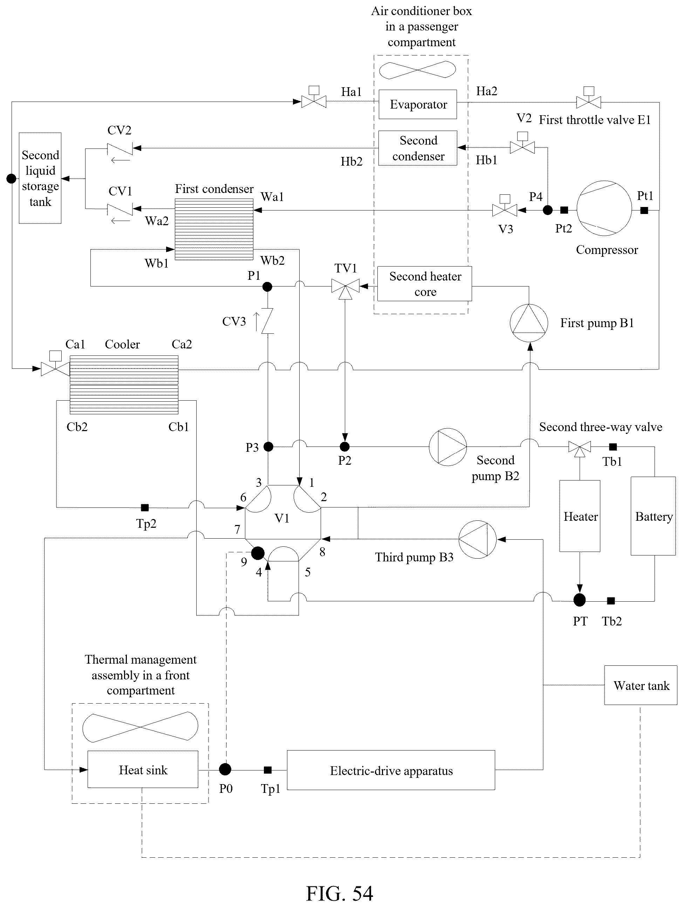

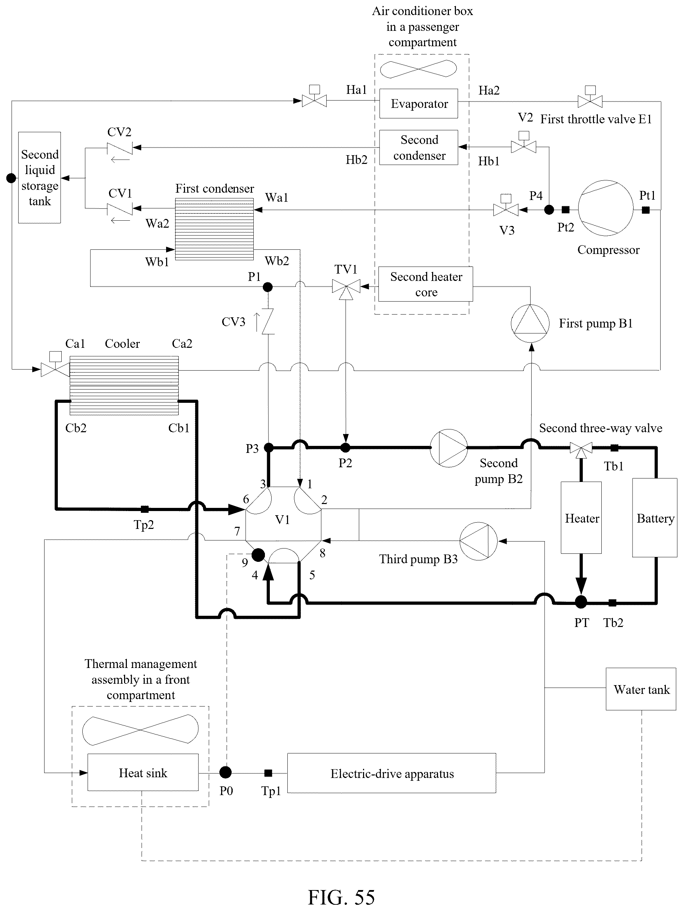

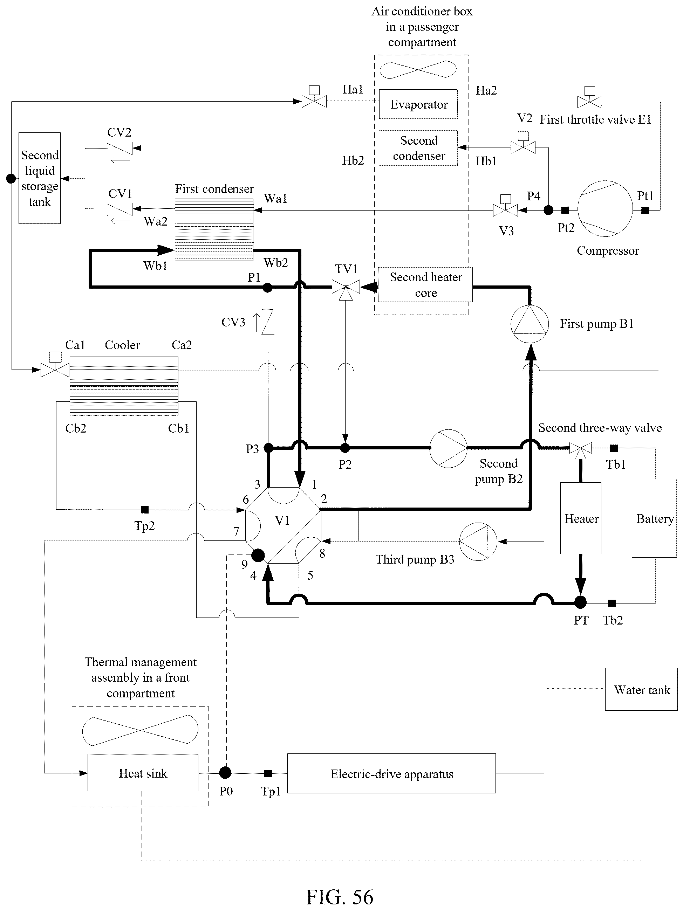

FIG. 54 is a diagram of another structure of the thermal management system according to Embodiment 2 of this application. As shown in FIG. 54, in an optional embodiment, the air conditioner box in the passenger compartment may further include a second heater core. An inlet of the second heater core is connected to the outlet of the first pump, and an outlet of the second heater core is connected to the inlet of the second path of the first condenser. FIG. 55 is a diagram of heating the battery by the thermal management system in FIG. 54 when the refrigerant system fails. As shown in FIG. 55, when the refrigerant system fails, the heater heats the third cooling medium in the battery heat exchange loop, to implement heating for the battery. FIG. 56 is a diagram of heating the passenger compartment by the thermal management system in FIG. 54 when the refrigerant loop fails. As shown in FIG. 56, when the refrigerant loop fails, the heater heats the third cooling medium in the battery heat exchange loop. The third cooling medium enters the first pump B1 after passing through the fourth port 4 and the second port 2 of the first valve body V1. The third cooling medium (that is, the second cooling medium) flowing out from the first pump B1 passes through the second heater core. The second heater core blows heat of a fourth cooling medium to the passenger compartment, to heat the passenger compartment.

In an optional embodiment, the thermal system loop further includes a second liquid storage tank. An inlet of the second liquid storage tank is connected to an outlet Wa2 of the first path of the first condenser and the outlet Hb2 of the second condenser, and an outlet of the second liquid storage tank is connected to the inlet Ca1 of the first path of the cooler and the inlet Ha1 of the evaporator. In this way, the first liquid storage tank may store a specific amount of liquid-state cooling medium in the thermal system loop, to ensure a specific annual leakage amount of the cooling medium.

A first one-way valve CV1 is disposed between the outlet Wa2 of the first path of the first condenser and the inlet of the second liquid storage tank, and the first one-way valve CV1 is used for the outlet Wa2 of the first path of the first condenser and the inlet of the second liquid storage tank to communicate unidirectionally. A second one-way valve CV2 is disposed between the outlet Hb2 of the second condenser and the inlet of the second liquid storage tank, and the second one-way valve CV2 is used for the outlet Hb2 of the second condenser and the inlet of the second liquid storage tank to communicate unidirectionally. In this way, the first one-way valve CV1 and the second one-way valve CV2 are controlled, so that a flow path of the first cooling medium in the thermal system loop can be controlled.

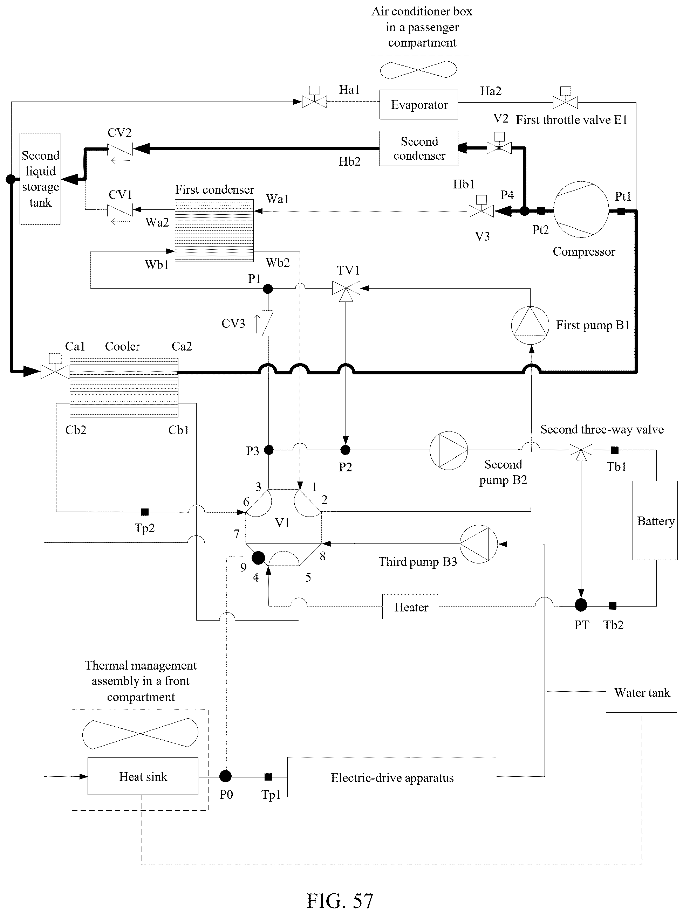

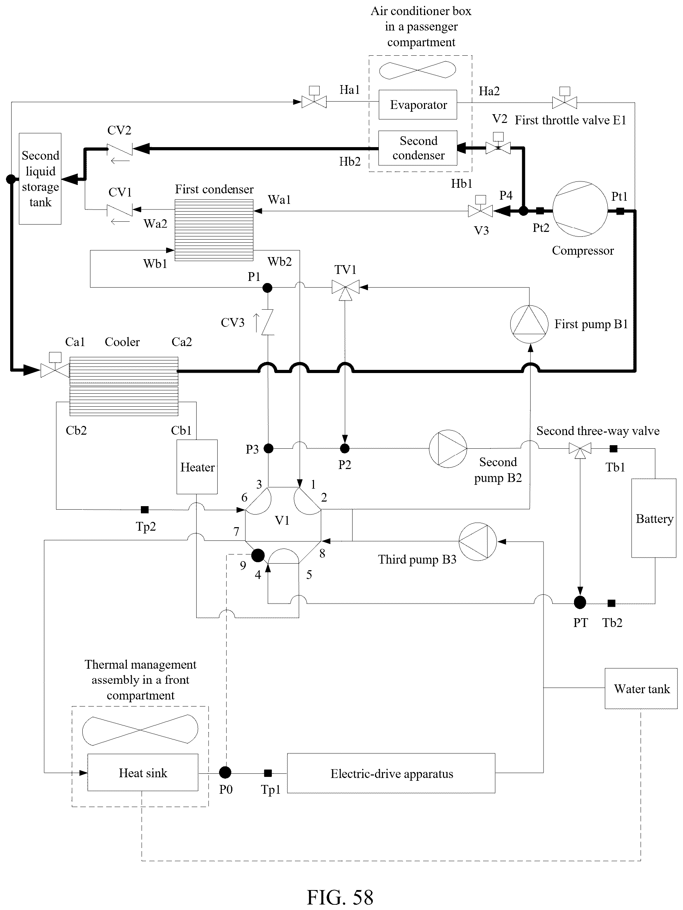

Certainly, when the air conditioner box in the passenger compartment includes the evaporator and the second condenser, a location of the heater in the battery heat exchange loop is not specifically limited. For example, as shown in FIG. 53, in an optional embodiment, the inlet of the heater may be connected to the third port of the second three-way valve, and the outlet of the heater may be connected to the fourth port 4 of the first valve body V1. FIG. 57 is a diagram of another structure of the thermal management system according to Embodiment 2 of this application. As shown in FIG. 57, in another optional embodiment, the inlet of the heater may alternatively be connected to the third port of the second three-way valve and the outlet of the battery, and the outlet of the heater may be connected to the fourth port 4 of the first valve body V1. FIG. 58 is a diagram of another structure of the thermal management system according to Embodiment 2 of this application. As shown in FIG. 58, in another optional embodiment, the inlet of the heater may alternatively be connected to the fifth port 5 of the first valve body V1, and the outlet of the heater may be connected to the inlet Cb1 of the second path of the cooler.

Based on a same technical concept, this application further provides an electric vehicle. The electric vehicle includes a controller and the thermal management system in the foregoing embodiment. The controller is connected to the first valve body V1 of the thermal management system. The controller is configured to control ports of the first valve body V1 to communicate or not communicate with each other, so that the thermal management system runs in any one of the following modes: the passenger compartment is separately heated, the battery is separately heated, and the passenger compartment and the battery are simultaneously heated. According to the design, the electric vehicle can freely switch to any one of the following modes: the passenger compartment is separately heated, the battery is separately heated, and the passenger compartment and the battery are simultaneously heated. This helps heat the passenger compartment in a low-temperature environment, and improves driving experience of a user.

### Embodiment 3

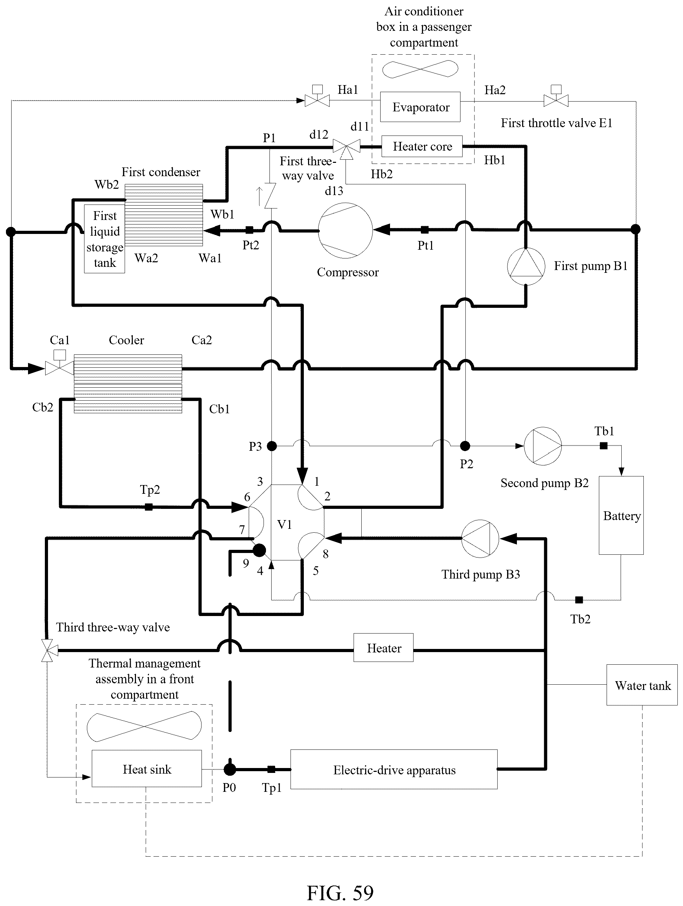

FIG. 59 is a diagram of a structure of a thermal management system according to Embodiment 3 of this application. As shown in FIG. 59, the thermal management system includes a thermal system loop, a first valve body V1, an electric-drive heat dissipation loop, and a heater. The heater is disposed in the electric-drive heat dissipation loop. Specifically, the first valve body V1 includes a tenth path, a ninth path, and a twelfth path. The tenth path of the first valve body V1 has a fifth port 5 and an eighth port 8. The ninth path of the first valve body V1 has a sixth port 6 and a seventh port 7. The twelfth path of the first valve body V1 has a sixth port 6 and a ninth port 9. The thermal system loop may include a compressor and a cooler. The cooler has a first path and a second path that are isolated from each other. An inlet Ca1 of the first path of the cooler is connected to an outlet of the compressor, and an outlet Ca2 of the first path of the cooler is connected to an inlet of the compressor. An inlet Cb1 of the second path of the cooler is connected to the fifth port 5 of the first valve body V1, and an outlet Cb2 of the second path of the cooler is connected to the sixth port 6 of the first valve body V1. The thermal system loop is provided with a first cooling medium, and the first cooling medium circulates between the compressor and the first path of the cooler. The electric-drive heat dissipation loop includes an electric-drive apparatus, a third pump B3, a water tank, and a third three-way valve. An inlet of the electric-drive apparatus is connected to the seventh port 7 of the first valve body V1 and the ninth port 9 of the first valve body V1, an outlet of the electric-drive apparatus is connected to the water tank and an inlet of the third pump B3, and an outlet of the heater is connected to the inlet of the third pump B3. The third pump B3 is configured to drive a fourth cooling medium to circulate between the electric-drive heat dissipation loop and the cooler. The third three-way valve has a first port, a second port, and a third port. The second port of the third three-way valve is connected to the inlet of the electric-drive apparatus, and the third port of the third three-way valve is connected to an inlet of the heater. The first port of the third three-way valve is connected to the ninth port 9 of the first valve body V1, or the first port of the third three-way valve is connected to the seventh port 7 of the first valve body V1. In the thermal management system, the heater is configured to heat the fourth cooling medium, so that the fourth cooling medium can perform heat exchange with the first cooling medium in the cooler when circulating between the electric-drive heat dissipation loop and the cooler, and heat the first cooling medium. In this way, a temperature and a pressure of the first cooling medium entering the compressor can be increased. In this way, even in a low-temperature environment, the compressor can also be turned on normally, so that the thermal management system can heat a passenger compartment of an electric vehicle.

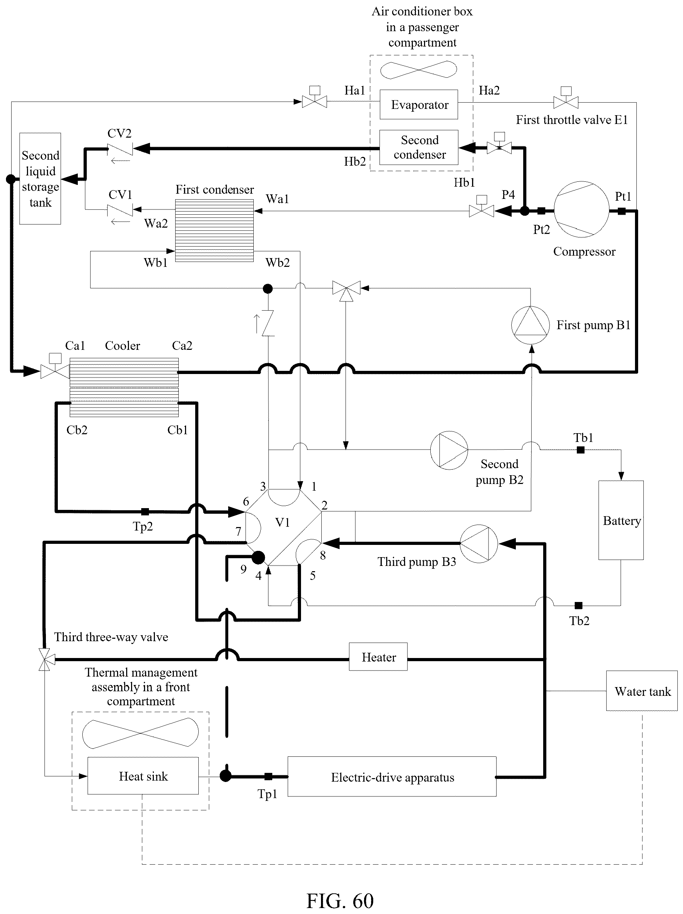

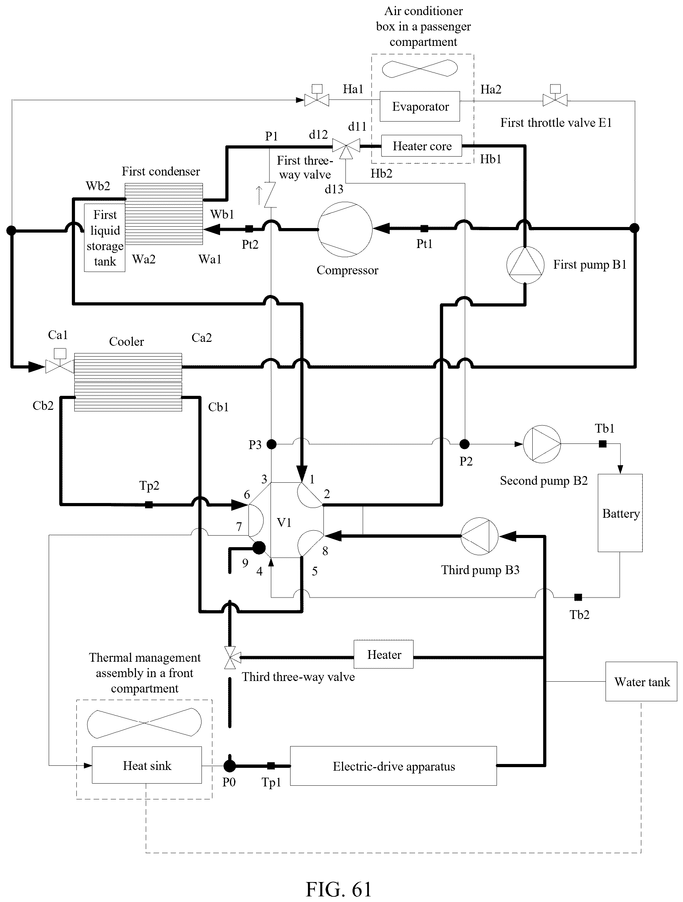

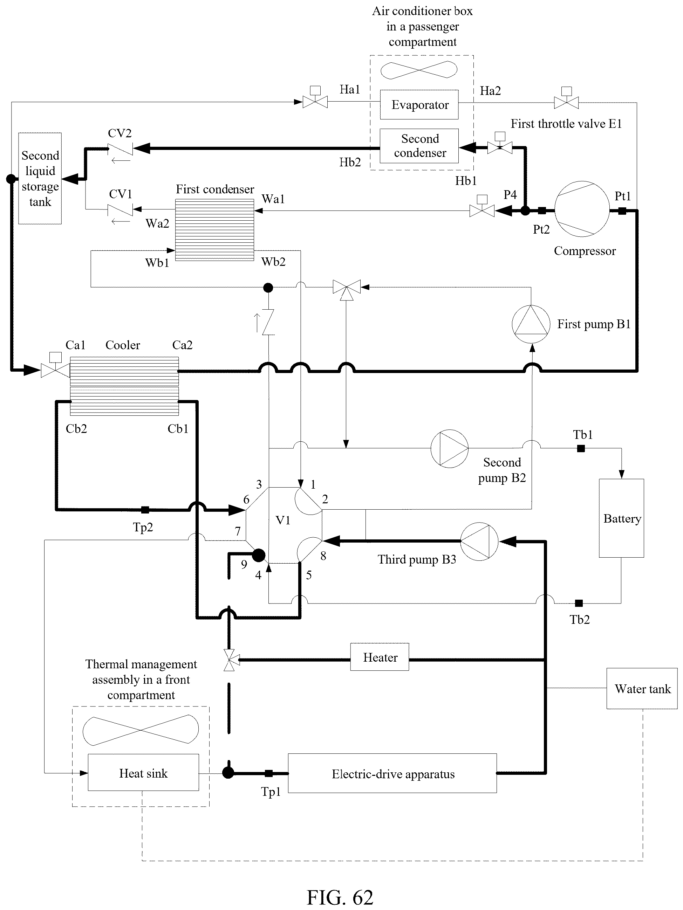

In an optional embodiment, the electric-drive heat dissipation loop may further include a thermal management assembly in a front compartment, an inlet of the thermal management assembly in the front compartment is connected to the seventh port 7 of the first valve body V1, and an outlet of the thermal management assembly in the front compartment is connected to the inlet of the electric-drive apparatus. FIG. 60 is a diagram of another structure of the thermal management system according to Embodiment 3 of this application. As shown in FIG. 59 and FIG. 60, the second port of the third three-way valve may be connected to the inlet of the thermal management assembly in the front compartment. FIG. 61 is a diagram of another structure of the thermal management system according to Embodiment 3 of this application. FIG. 62 is a diagram of another structure of the thermal management system according to Embodiment 3 of this application. As shown in FIG. 61 and FIG. 62, in another optional embodiment, the second port of the third three-way valve is connected to the outlet of the thermal management assembly in the front compartment and the inlet of the electric-drive apparatus.

In Embodiment 3, specific architectures of the thermal system loop and a battery heat exchange loop may be the same as those in Embodiment 1 and Embodiment 2.

As shown in FIG. 59 and FIG. 61, in an optional embodiment, the thermal system loop may specifically include the compressor, the cooler, a first condenser, and an air conditioner box in a passenger compartment. The cooler has the first path and the second path that are isolated from each other. The first condenser has a first path and a second path that are isolated from each other. The air conditioner box in the passenger compartment has a first path and a second path that are isolated from each other. An evaporator is disposed in the first path of the air conditioner box in the passenger compartment, and a heater core is disposed in the second path. The thermal system loop may further include a first pump B1. A second port 2 of the first valve body V1 is connected to an inlet of the first pump B1, an outlet of the first pump B1 is connected to an inlet Hb1 of the heater core, an outlet Hb2 of the heater core is connected to an inlet Wb1 of the second path of the first condenser, and an outlet Wb2 of the second path of the first condenser is connected to a first port 1 of the first valve body V1. The thermal system loop is further provided with the second cooling medium, and the first pump B1 is configured to drive the second cooling medium to circulate in a third loop L3 formed between the second path of the first condenser and the heater core. In this manner, heat that is of the second cooling medium and that is exchanged in the first condenser may be blown out through the heater core, to heat air in the passenger compartment.

As shown in FIG. 59 and FIG. 61, the thermal system loop in the foregoing embodiment may further include a first liquid storage tank. An inlet of the first liquid storage tank is connected to an outlet Wa2 of the first path of the first condenser, and an outlet of the first liquid storage tank is connected to the inlet Ca1 of the first path of the cooler and an inlet Ha1 of the evaporator. The first liquid storage tank may store a specific amount of liquid-state cooling medium in the thermal system loop, to ensure a specific annual leakage amount of the cooling medium. In another optional embodiment, the thermal system loop may also include a gas-liquid separator. An inlet of the gas-liquid separator is connected to the outlet Ca2 of the first path of the cooler and an outlet Ha2 of the evaporator, and an outlet of the gas-liquid separator is connected to the inlet of the compressor. In the design, the gas-liquid separator can be used to implement a liquid storage function, and the gas-liquid separator can be used to retain liquid in a gas-liquid mixture, and only gas is allowed to flow into the compressor, to improve compression effect of the compressor.

As shown in FIG. 60 and FIG. 62, in an optional embodiment, the thermal system loop may specifically include the compressor, the cooler, the first condenser, and the air conditioner box in the passenger compartment. The cooler has the first path and the second path that are isolated from each other. The first condenser has the first path and the second path that are isolated from each other. The air conditioner box in the passenger compartment has the first path and the second path that are isolated from each other. The evaporator is disposed in the first path of the air conditioner box in the passenger compartment, and a second condenser is disposed in the second path. An inlet Hb1 of the second condenser is connected to the outlet of the compressor, and an outlet Hb2 of the second condenser is connected to the inlet Ca1 of the first path of the cooler and the inlet Ha1 of the evaporator. The first path of the first condenser is isolated from the second path of the first condenser. The thermal system loop further includes the first pump B1. The second port 2 of the first valve body V1 is connected to the inlet of the first pump B1, the outlet of the first pump B1 is connected to the inlet Wb1 of the second path of the first condenser, and the outlet Wb2 of the second path of the first condenser is connected to the first port 1 of the first valve body V1. The thermal system loop is further provided with the second cooling medium, and the first pump B1 is configured to drive the second cooling medium to circulate between the second path of the first condenser and the second path of the air conditioner box in the passenger compartment. When the first condenser stops working, the first cooling medium flowing out from the outlet of the compressor may flow into the second condenser. In the air conditioner box in the passenger compartment, a low-temperature and low-pressure first cooling medium in the evaporator performs heat exchange with the high-temperature and high-pressure first cooling medium in the second condenser, so that air blown out from the air conditioner box in the passenger compartment can be maintained at a relatively suitable temperature.

In the foregoing embodiment, the thermal system loop may further include a second liquid storage tank. An inlet of the second liquid storage tank is connected to the outlet Wa2 of the first path of the first condenser and the outlet Hb2 of the second condenser, and an outlet of the second liquid storage tank is connected to the inlet Ca1 of the first path of the cooler and the inlet Ha1 of the evaporator. In this way, the second liquid storage tank may store an excess liquid-state cooling medium in the first path of the first condenser, to ensure an annual leakage amount in the first loop.

A first one-way valve CV 1 may be further disposed between the outlet Wa2 of the first path of the first condenser and the inlet of the second liquid storage tank, and the first one-way valve CV1 is used for the outlet Wa2 of the first path of the first condenser and the inlet of the second liquid storage tank to communicate unidirectionally. A second one-way valve CV2 is disposed between the outlet Hb2 of the second condenser and the inlet of the second liquid storage tank, and the second one-way valve CV2 is used for the outlet Hb2 of the second condenser and the inlet of the second liquid storage tank to communicate unidirectionally. In this way, the first one-way valve CV1 and the second one-way valve CV2 are controlled, so that a flow path of the first cooling medium in the thermal system loop can be controlled.

Based on a same technical concept, this application further provides an electric vehicle. The electric vehicle includes a controller and the thermal management system in the foregoing embodiment. The controller is connected to the thermal management system, and the control apparatus is configured to control ports of the first valve body V1 to communicate or not communicate with each other, so that the thermal management system runs in a mode in which the passenger compartment is separately heated. According to the design, the electric vehicle can implement the mode in which the passenger compartment is separately heated. This helps heat the passenger compartment in a low-temperature environment, and improves driving experience of a user.

### Embodiment 4

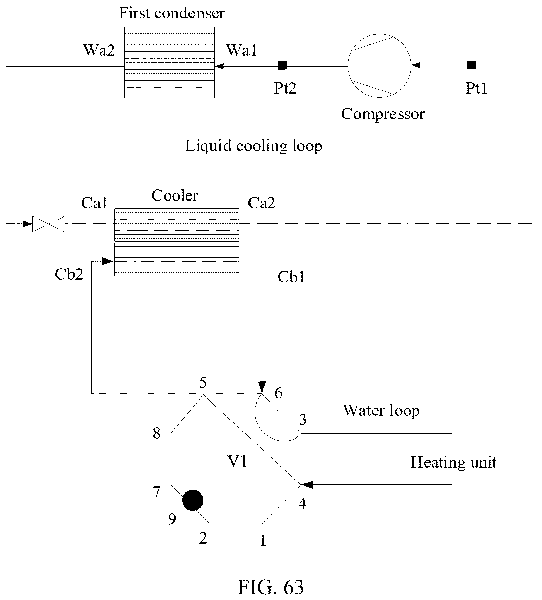

FIG. 63 is a diagram of a structure of a thermal management system according to Embodiment 4 of this application. As shown in FIG. 63, the thermal management system includes a first valve body V1, a water pipeline, a cooler, a compressor, and a heating unit. Specifically, an inlet and an outlet of the water pipeline are separately connected to the first valve body V1. The cooler has a first path and a second path that are isolated from each other. An inlet Ca1 of the first path of the cooler is connected to an outlet of the compressor, and an outlet Ca2 of the first path of the cooler is connected to an inlet of the compressor, to form a first liquid cooling loop. An inlet Cb1 of the second path of the cooler and an outlet Cb2 of the second path of the cooler are separately connected to the first valve body V1. The first valve body V1 may be configured to switch between different connection states. Different connection states may include connecting the second path of the cooler and the water pipeline, to form a first water loop, so that the first water loop and the first liquid cooling loop perform heat exchange. The heating unit may be disposed in the first liquid cooling loop, at the inlet Cb 1 of the second path of the cooler, or on the water pipeline. In the foregoing thermal management system, the heating unit may directly heat the first liquid cooling loop in which the compressor is located, or may heat the second path of the cooler or the water pipeline, to indirectly heat the compressor. In this way, a temperature and a pressure in the compressor can be increased, so that the compressor can also be turned on normally in a low-temperature environment, and the thermal management system can heat a passenger compartment of an electric vehicle.

Specifically, the first valve body V1 may include a first port 1, a second port 2, a fifth port 5, and a sixth port 6. The thermal management system may further include an air conditioner box in the passenger compartment, a first condenser, and a first pump B1. The inlet Cb1 of the second path of the cooler is connected to the fifth port 5 of the first valve body V1, and the outlet Cb2 of the second path of the cooler is connected to the sixth port 6 of the first valve body V1. The first condenser has a first path and a second path that are isolated from each other. The first path of the first condenser is located between the compressor and the first path of the cooler, an inlet Wa1 of the first path of the first condenser is connected to the outlet of the compressor, and an outlet Wa2 of the first path of the first condenser is connected to the inlet Ca1 of the first path of the cooler. The air conditioner box in the passenger compartment has a first path and a second path that are isolated from each other. An inlet Ha1 of the first path of the air conditioner box in the passenger compartment is connected to the outlet of the compressor, and an outlet Ha2 of the first path of the air conditioner box in the passenger compartment is connected to the inlet of the compressor, to form a second liquid cooling loop. The water pipeline includes a first pipeline, and the first pipeline sequentially passes through the first pump B1, the second path of the air conditioner box in the passenger compartment, and the second path of the first condenser. An inlet of the first pump B1 is connected to the second port 2 of the first valve body V1, and an outlet Wb2 of the second path of the first condenser is connected to the first port 1 of the first valve body V1.

In the foregoing embodiment, connecting the second path of the cooler and the water pipeline may specifically include connecting the second path of the cooler and the first pipeline, that is, connecting. In addition, different connection states may further include connecting the first pipeline, so that the first pipeline forms a second water loop by using the first valve body V1, to implement self-circulation. In this way, the second water loop may perform heat exchange with the first liquid cooling loop via the air conditioner box in the passenger compartment.

In addition, the first valve body V1 may further include a third port 3 and a fourth port 4. The thermal management system may further include a second pump B2 and a battery. In addition to the first pipeline, the water pipeline may further include a second pipeline. The second pipeline may sequentially pass through the second pump B2 and the battery, where an inlet of the second pump B2 is connected to the third port 3 of the first valve body V1, an outlet of the second pump B2 is connected to an inlet of the battery, and an outlet of the battery is connected to the fourth port 4 of the first valve body V1.

In the foregoing embodiment, the water pipeline may further include a second three-way valve. The second three-way valve has a first port, a second port, and a third port. The second three-way valve may divide the second pipeline into two branches. Specifically, the first port of the second three-way valve is connected to the outlet of the second pump B2, the second port of the second three-way valve is connected to the inlet of the battery, and the third port of the second three-way valve is connected to the fourth port 4 of the first valve body V1.

In this application, the first pipeline and the second pipeline of the water pipeline may be connected through the first valve body V1, or may be connected through another valve body. For example, in a specific embodiment, the water pipeline may further include a first three-way valve. The first three-way valve has a first port, a second port, and a third port. The first port of the first three-way valve is connected to an inlet Wb1 of the second path of the first condenser, the second port of the first three-way valve is connected to an outlet of the first pump B1, and the third port of the first three-way valve is connected to the inlet of the second pump B2.

In addition, in the foregoing embodiment, a third one-way valve may be disposed between the inlet of the second pump B2 and the inlet Wb1 of the second path of the first condenser. The third one-way valve is used for the inlet of the second pump B2 and the inlet Wb1 of the second path of the first condenser to communicate unidirectionally.

In the foregoing embodiment, when the first valve body V1 is switched to a connection state of connecting the second path of the cooler and the water pipeline, connecting the second path of the cooler and the second pipeline may be specifically included. Certainly, the first valve body V1 may alternatively be switched to another connection state. For example, different connection states may further include separately connecting the first pipeline and the second pipeline to form a third water loop. In the connection state, the first pipeline and the second pipeline may circulate separately, and the first pipeline and the second pipeline may be connected through the first three-way valve, so that the third water loop performs heat exchange with the first liquid cooling loop via the air conditioner box in the passenger compartment. Alternatively, the first pipeline and the second pipeline may be directly connected through the first valve body V1, that is, different connection states may further include connecting the first pipeline and the second pipeline, to form a fourth water loop, so that the fourth water loop performs heat exchange with the first liquid cooling loop via the air conditioner box in the passenger compartment.

The first valve body V1 may further include a seventh port 7, an eighth port 8, and a ninth port 9. The thermal management system may further include a third pump B3 and an electric-drive apparatus. The water pipeline may further include a third pipeline. The third pipeline passes through the electric-drive apparatus and the third pump B3, where an inlet of the electric-drive apparatus is connected to the seventh port 7 of the first valve body V1 and/or the ninth port 9 of the first valve body V1, an outlet of the electric-drive apparatus is connected to an inlet of the third pump B3, and an outlet of the third pump B3 is connected to the eighth port 8 of the first valve body V1.

In the foregoing embodiment, when the heating unit is disposed on the third pipeline, the water pipeline may further include a third three-way valve. The third three-way valve has a first port, a second port, and a third port. The first port of the third three-way valve is connected to the seventh port 7 of the first valve body V1 or the ninth port 9 of the first valve body V1. The second port of the third three-way valve is connected to the inlet of the electric-drive apparatus, the third port of the third three-way valve is connected to an inlet of the heating unit, and an outlet of the heating unit is connected to the inlet of the third pump B3.

In addition, the water pipeline may further include a thermal management assembly in a front compartment, an inlet of the thermal management assembly in the front compartment may be connected to the seventh port 7 of the first valve body V1, and an outlet of the thermal management assembly in the front compartment is connected to the inlet of the electric-drive apparatus.

In the foregoing embodiment, when the first valve body V1 is switched to a state of connecting the second path of the cooler and the water pipeline, connecting the second path of the cooler and the third pipeline may be specifically included, so that the third pipeline performs heat exchange with the first liquid cooling loop via the second path of the cooler. Alternatively, the connection state may include connecting the second path of the cooler, the second pipeline, and the third pipeline, so that the three pipelines are connected, and a circulation is implemented.

In Embodiment 4, an evaporator may be disposed in the first path of the air conditioner box in the passenger compartment, and a heater core may be disposed in the second path of the air conditioner box in the passenger compartment. Alternatively, an evaporator may be disposed in the first path of the air conditioner box in the passenger compartment, and a second condenser may be disposed in the second path of the air conditioner box in the passenger compartment.

Based on a same technical concept, this application provides an electric vehicle. The electric vehicle includes a controller and the thermal management system in Embodiment 4. The controller is connected to the first valve body V1 of the thermal management system. The controller is configured to control the first valve body V1 to switch to different connection states, so that the thermal management system runs in any one of the following modes: the passenger compartment is separately heated, the battery is separately heated, and the passenger compartment and the battery are simultaneously heated. According to the design, the electric vehicle can freely switch to any one of the following modes: the passenger compartment is separately heated, the battery is separately heated, and the passenger compartment and the battery are simultaneously heated. This helps heat the passenger compartment in a low-temperature environment, and improves driving experience of a user.

The following uses an example in which the heating unit is disposed in the first liquid cooling loop, the second liquid cooling loop, or the first pipeline to describe switching of the first valve body V1 between different connection states.

As shown in FIG. 15, when an external ambient temperature of the electric vehicle is excessively low, the first valve body V1 may be switched to a connection state in a low-temperature start phase (M11), that is, the first port 1 and the second port 2, and the seventh port 7 and the eighth port 8 of the first valve body V1 respectively communicate with each other. In this case, the heating unit may include the heater independently disposed at the outlet Ca2 of the first path of the cooler, and heat the first cooling medium flowing out from the outlet Ca2 of the first path of the cooler, and the compressor is turned on at a low rotation speed. At this time, a temperature of the passenger compartment is gradually increased. As an inlet pressure of the compressor is gradually increased to above 1 atmospheric pressure, the rotation speed of the compressor may be gradually increased. In this phase, the mode in which the passenger compartment is separately heated can be implemented. Alternatively, the heating unit may include a compressor motor and a motor controller that are connected. The compressor may include a compressor body and a scroll disposed on the compressor body. The compressor motor is connected to the scroll.

In the foregoing low-temperature start phase (M11), the temperature of the passenger compartment gradually increased. When the temperature of the passenger compartment is greater than a specific temperature, the first valve body V1 may be switched from the connection state in M11 to a connection state in a stable phase (M12). As shown in FIG. 16 to FIG. 19, the connection state of the first valve body V1 in the stable phase (M12) may be the same as the connection state of the low-temperature start phase (M11). The heating unit may be disposed at the outlet Ca2 of the first path of the cooler, or disposed at the inlet of the compressor, or disposed at the inlet Ha1 of the first path of the air conditioner box in the passenger compartment. As shown in FIG. 20 to FIG. 22, the first valve body V1 may be switched from the connection state in M11 to another connection state in the stable phase (M12). That is, the first port 1 and the second port 2, the third port 3 and the sixth port 6, the fourth port 4 and the fifth port 5, and the seventh port 7 and the eighth port 8 of the first valve body V1 respectively communicate with each other. The heating unit may be disposed between the inlet of the compressor and the outlet Wa2 of the first path of the first condenser, or disposed at the inlet of the compressor, or disposed between the first pump B1 and the inlet Hb1 of the second path of the air conditioner box in the passenger compartment.

As shown in FIG. 23, when the refrigerant system fails, the heating unit may be disposed between the first pump B1 and the inlet Hb1 of the second path of the air conditioner box in the passenger compartment. The first valve body V1 may be switched to a state in which the first port 1 communicates with the second port 2; or, as shown in FIG. 24, the first valve body V1 may also be switched to a state in which the first port 1 communicates with the third port 3, and the second port 2 communicates with the fourth port.

As shown in FIG. 25, in a process in which heating of the refrigerant system fails, when a temperature of the passenger compartment reaches a predetermined temperature, a heating mode is in a stable state. In this case, the first valve body V1 may be switched to a state in which the first port 1 communicates with the second port 2, the fifth port 5 communicates with the eighth port 8, and the sixth port 6 communicates with the seventh port 7. The heating unit may be disposed at the outlet Ca2 of the first path of the cooler.

In a low temperature condition, when the heating unit is disposed at the outlet Ca2 of the first path of the cooler, as shown in FIG. 27 to FIG. 29, the first valve body V1 may be switched to a state in which the first port 1 communicates with the second port 2, the third port 3 communicates with the sixth port 6, the fourth port 4 communicates with the fifth port 5, and the seventh port 7 communicates with the eighth port 8; or, as shown in FIG. 30, the first valve body V1 may alternatively be switched to a state in which the first port 1 communicates with the second port 2, the third port 3 communicates with the fourth port 4, the fifth port 5 communicates with the eighth port 8, and the sixth port 6 communicates with the seventh port 7.

In an extremely low temperature environment, when the heating unit is disposed at the outlet Ca2 of the first path of the cooler, as shown in FIG. 31, the first valve body V1 may be switched to a state in which the first port 1 communicates with the third port 3, and the second port 2 communicates with the fourth port 4; or, as shown in FIG. 32, the first valve body V1 may alternatively be switched to a state in which the first port 1 communicates with the second port 2, and the third port 3 communicates with the fourth port 4.

As shown in FIG. 33, when the external ambient temperature of the electric vehicle is excessively low, the first valve body V1 may further be switched to a state in a low-temperature start phase (M21), that is, no two ports communicate with each other. In this case, the heating unit is disposed at the outlet Ca2 of the first path of the cooler. A solenoid valve V2 is opened and V3 is closed. The high-temperature first cooling medium from the compressor enters the second condenser, and then after entering the second liquid storage tank through the one-way valve CV2, passes through a throttle valve and enters the cooler. After being heated by the heater, the first cooling medium enters the compressor through Pt1. When the temperature of the passenger compartment reaches a specific temperature, the thermal management system reaches the stable phase (M22). In this case, the state of the first valve body V1 remains unchanged.

In an extremely low temperature environment, when the heating unit is disposed at the outlet Ca2 of the first path of the cooler, as shown in FIG. 36 and FIG. 28, the first valve body V1 may be switched to the state in which the first port 1 communicates with the third port 3, and the second port 2 communicates with the fourth port 4; or, as shown in FIG. 37, the first valve body V1 may be switched to the state in which the first port 1 communicates with the second port 2, and the third port 3 communicates with the fourth port 4.

In a driving process, the thermal management system may also perform heating. As shown in FIG. 39 to FIG. 41, the first valve body V1 may be switched to a state in which the first port 1 communicates with the second port 2, the third port 3 communicates with the sixth port 6, and the fourth port 4 communicates with the fifth port 5. As shown in FIG. 42, the first valve body V1 may be switched to the state connecting which the first port 1 communicates with the second port 2, and the third port 3 communicates with the fourth port 4.

When the heater is in a different location, the heater may still heat the passenger compartment in the stable phase. As shown in FIG. 43 to FIG. 46, the first valve body V1 may be switched to a state in which no two ports communicate with each other.

The following uses an example in which the heating unit is disposed on the second pipeline to describe switching of the first valve body V1 between different connection states.

In a low-temperature environment, as shown in FIG. 47, the first valve body V1 may be switched to the state in which the first port 1 communicates with the third port 3, and the second port 2 communicates with the fourth port 4. Alternatively, as shown in FIG. 48 and FIG. 49, the first valve body V1 may be switched to the state in which the first port 1 communicates with the second port 2, the third port 3 communicates with the sixth port 6, and the fourth port 4 communicates with the fifth port 5.

When the refrigerant system fails, the thermal management system may heat the passenger compartment. As shown in FIG. 50, the first valve body V1 may be switched to a state in which the first port 1 communicates with the third port 3, and the fourth port 4 communicates with the fifth port 5. The thermal management system may heat the battery. The first valve body V1 may be switched to the state in which the third port 3 communicates with the sixth port 6, and the fourth port 4 communicates with the fifth port 5.

As shown in FIG. 53, FIG. 57, and FIG. 58, the first valve body V1 may be switched to the state in which no two ports communicate with each other. When the first condenser stops working, the first cooling medium flowing out from the outlet of the compressor may flow into the second condenser. In the air conditioner box in the passenger compartment, a low-temperature and low-pressure first cooling medium in the evaporator performs heat exchange with the high-temperature and high-pressure first cooling medium in the second condenser, so that air blown out from the air conditioner box in the passenger compartment can be maintained at a relatively suitable temperature.

As shown in FIG. 55, when the refrigerant system fails, the heater heats the third cooling medium in the battery heat exchange loop, to implement heating for the battery. The first valve body V1 may be switched to the state in which the third port 3 communicates with the sixth port 6, and the fourth port 4 communicates with the fifth port 5.

As shown in FIG. 56, when the refrigerant loop fails, the thermal management system may heat the passenger compartment. The first valve body V1 may be switched to the state in which the first port 1 communicates with the third port 3, and the second port 2 communicates with the fourth port 4.

The following uses an example in which the heating unit is disposed on the third pipeline to describe switching of the first valve body V1 between different connection states.

As shown in FIG. 59, in a low-temperature environment, the thermal management system may heat the passenger compartment of the electric vehicle. In this case, the first valve body V1 may be switched to a state in which the first port 1 communicates with the second port 2, the fifth port 5 communicates with the eighth port 8, and the sixth port 6 communicates with the seventh port 7. Alternatively, as shown in FIG. 60, the first valve body V1 may be switched to a state in which the sixth port 6 communicates with the seventh port 7, and the fifth port 5 communicates with the eighth port 8, or a state in which the sixth port 6 communicates with the seventh port 7, the sixth port 6 communicates with the ninth port 9, and the fifth port 5 communicates with the eighth port 8. Alternatively, as shown in FIG. 61, the first valve body V1 may be switched to a state in which the first port 1 communicates with the second port 2, the fifth port 5 communicates with the eighth port 8, and the sixth port 6 communicates with the ninth port 9. As shown in FIG. 62, the first valve body V1 may be switched to a state in which the fifth port 5 communicates with the eighth port 8, and the sixth port 6 communicates with the ninth port 9.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A thermal management system, wherein the thermal management system comprises a water pipeline, a first valve body, a cooler, a compressor, and a heating unit, wherein
an inlet and an outlet of the water pipeline are separately connected to the first valve body;
the cooler has a first path and a second path that are isolated from each other; an inlet of the first path of the cooler is connected to an outlet of the compressor, and an outlet of the first path of the cooler is connected to an inlet of the compressor, to form a first liquid cooling loop; and an inlet and an outlet of the second path of the cooler are separately connected to the first valve body;
the first valve body is configured to switch between different connection states, wherein the different connection states comprise connecting the second path of the cooler and the water pipeline to form a first water loop, so that the first water loop and the first liquid cooling loop perform heat exchange; and
the heating unit is disposed in the first liquid cooling loop, at the inlet of the second path of the cooler, or on the water pipeline.

2. The thermal management system according to claim 1, wherein the first valve body comprises a first port, a second port, a fifth port, and a sixth port; and the thermal management system further comprises an air conditioner box in a passenger compartment, a first condenser, and a first pump;
the inlet of the second path of the cooler is connected to the fifth port of the first valve body, and the outlet of the second path of the cooler is connected to the sixth port of the first valve body;
the first condenser has a first path and a second path that are isolated from each other, the first path of the first condenser is located between the compressor and the first path of the cooler, an inlet of the first path of the first condenser is connected to the outlet of the compressor, and an outlet of the first path of the first condenser is connected to the inlet of the first path of the cooler;
the air conditioner box in the passenger compartment has a first path and a second path that are isolated from each other; and an inlet of the first path of the air conditioner box in the passenger compartment is connected to the outlet of the compressor, and an outlet of the first path of the air conditioner box in the passenger compartment is connected to the inlet of the compressor, to form a second liquid cooling loop; and
the water pipeline comprises a first pipeline, wherein the first pipeline sequentially passes through the first pump, the second path of the air conditioner box in the passenger compartment, and the second path of the first condenser; and an inlet of the first pump is connected to the second port of the first valve body, and an outlet of the second path of the first condenser is connected to the first port of the first valve body.

3. The thermal management system according to claim 2, wherein the different connection states further comprise connecting the first pipeline to form a second water loop, so that the second water loop performs heat exchange with the first liquid cooling loop via the air conditioner box in the passenger compartment.

4. The thermal management system according to claim 2 or 3, wherein the first valve body further comprises a third port and a fourth port; and the thermal management system further comprises a second pump and a battery; and
the water pipeline further comprises a second pipeline, wherein the second pipeline sequentially passes through the second pump and the battery, an inlet of the second pump is connected to the third port of the first valve body, an outlet of the second pump is connected to an inlet of the battery, and an outlet of the battery is connected to the fourth port of the first valve body.

5. The thermal management system according to claim 4, wherein the water pipeline further comprises a second three-way valve, and the second three-way valve has a first port, a second port, and a third port; and
the first port of the second three-way valve is connected to the outlet of the second pump, the second port of the second three-way valve is connected to the inlet of the battery, and the third port of the second three-way valve is connected to the fourth port of the first valve body.

6. The thermal management system according to claim 4 or 5, wherein the water pipeline further comprises a first three-way valve, the first three-way valve has a first port, a second port, and a third port, the first port of the first three-way valve is connected to an inlet of the second path of the first condenser, the second port of the first three-way valve is connected to an outlet of the first pump, and the third port of the first three-way valve is connected to the inlet of the second pump.

7. The thermal management system according to claim 6, wherein a third one-way valve is disposed between the inlet of the second pump and the inlet of the second path of the first condenser, and the third one-way valve is used for the inlet of the second pump and the inlet of the second path of the first condenser to communicate unidirectionally.

8. The thermal management system according to claim 7, wherein the connecting the second path of the cooler and the water pipeline comprises: connecting the second path of the cooler and the second pipeline;
the different connection states further comprise separately connecting the first pipeline and the second pipeline to form a third water loop, so that the third water loop performs heat exchange with the first liquid cooling loop via the air conditioner box in the passenger compartment; or
the different connection states further comprise connecting the first pipeline and the second pipeline to form a fourth water loop, so that the fourth water loop performs heat exchange with the first liquid cooling loop via the air conditioner box in the passenger compartment.

9. The thermal management system according to any one of claims 4 to 8, wherein the first valve body further comprises a seventh port, an eighth port, and a ninth port; and the thermal management system further comprises a third pump and an electric-drive apparatus; and
the water pipeline further comprises a third pipeline, wherein the third pipeline passes through the electric-drive apparatus and the third pump, an inlet of the electric-drive apparatus is connected to the seventh port of the first valve body and/or the ninth port of the first valve body, an outlet of the electric-drive apparatus is connected to an inlet of the third pump, and an outlet of the third pump is connected to the eighth port of the first valve body.

10. The thermal management system according to claim 9, wherein when the heating unit is disposed on the third pipeline, the water pipeline further comprises a third three-way valve, and the third three-way valve has a first port, a second port, and a third port; and
the first port of the third three-way valve is connected to the seventh port of the first valve body or the ninth port of the first valve body; the second port of the third three-way valve is connected to the inlet of the electric-drive apparatus; the third port of the third three-way valve is connected to an inlet of the heating unit; and an outlet of the heating unit is connected to the inlet of the third pump.

11. The thermal management system according to claim 10, wherein the water pipeline further comprises a thermal management assembly in a front compartment, an inlet of the thermal management assembly in the front compartment is connected to the seventh port of the first valve body, and an outlet of the thermal management assembly in the front compartment is connected to the inlet of the electric-drive apparatus.

12. The thermal management system according to claim 10, wherein the connecting the second path of the cooler and the water pipeline comprises:
connecting the second path of the cooler and the third pipeline; or connecting the second path of the cooler, the second pipeline, and the third pipeline.

13. An electric vehicle, comprising a controller and the thermal management system according to any one of claims 1 to 12, wherein
the controller is connected to a first valve body of the thermal management system, and the controller is configured to control the first valve body to switch to a different connection state, so that the thermal management system runs in any one of the following modes: a passenger compartment is separately heated, a battery is separately heated, and the passenger compartment and the battery are simultaneously heated.

14. A thermal management system, comprising a thermal system loop and a heater, wherein the heater is disposed in the thermal system loop, wherein
the thermal system loop comprises a compressor, a cooler, and an air conditioner box in a passenger compartment; the cooler has a first path, and the air conditioner box in the passenger compartment has a first path; an outlet of the compressor is connected to an inlet of the first path of the cooler and an inlet of the first path of the air conditioner box in the passenger compartment; and an inlet of the compressor is connected to an outlet of the first path of the cooler and an outlet of the first path of the air conditioner box in the passenger compartment; and
the thermal system loop is provided with a first cooling medium, wherein the first cooling medium circulates between the compressor and the first path of the cooler and between the compressor and the first path of the air conditioner box in the passenger compartment; and the heater is configured to heat the first cooling medium.

15. The thermal management system according to claim 14, wherein the thermal system loop further comprises a first throttle valve, the first throttle valve is connected between the outlet of the first path of the air conditioner box in the passenger compartment and the inlet of the compressor, and the first throttle valve is used for the outlet of the first path of the air conditioner box in the passenger compartment and the inlet of the compressor to communicate with or not communicate with each other.

16. The thermal management system according to claim 14 or 15, wherein the heater is an independently disposed heating apparatus;
the heating apparatus is disposed between the cooler and the compressor, an inlet of the heating apparatus is connected to the outlet of the first path of the cooler, and an outlet of the heating apparatus is connected to the inlet of the compressor; or the heating apparatus is disposed at the inlet of the compressor, an inlet of the heating apparatus is connected to the outlet of the first path of the cooler and the outlet of the first path of the air conditioner box in the passenger compartment, and an outlet of the heating apparatus is connected to the inlet of the compressor.

17. The thermal management system according to claim 14 or 15, wherein the heater is disposed on the compressor; the heater comprises a compressor motor and a motor controller that are connected to each other; the compressor comprises a compressor body and a scroll disposed on the compressor body; and the compressor motor is connected to the scroll.

18. The thermal management system according to claim 14 or 15, wherein the thermal system loop further comprises a first condenser; the first condenser has a first path; an inlet of the first path of the first condenser is connected to the outlet of the compressor; and an outlet of the first path of the first condenser is connected to the inlet of the first path of the cooler and the inlet of the first path of the air conditioner box in the passenger compartment.

19. The thermal management system according to claim 18, wherein the air conditioner box in the passenger compartment further has a second path; the first path of the air conditioner box in the passenger compartment and the second path of the air conditioner box in the passenger compartment are isolated from each other; an evaporator is disposed in the first path of the air conditioner box in the passenger compartment; a heater core is disposed in the second path of the air conditioner box in the passenger compartment; the first condenser further has a second path; and the first path of the first condenser and the second path of the first condenser are isolated from each other;
the thermal management system further comprises a first valve body, wherein the first valve body comprises a first path, and the first path of the first valve body has a first port and a second port;
the thermal system loop further comprises a first pump; the second port of the first valve body is connected to an inlet of the first pump, an outlet of the first pump is connected to an inlet of the heater core, an outlet of the heater core is connected to an inlet of the second path of the first condenser, and an outlet of the second path of the first condenser is connected to the first port of the first valve body; and
the thermal system loop is further provided with a second cooling medium, and the first pump is configured to drive the second cooling medium to circulate between the second path of the first condenser and the heater core.

20. The thermal management system according to claim 19, wherein the thermal system loop further comprises a first liquid storage tank, an inlet of the first liquid storage tank is connected to the outlet of the first path of the first condenser, and an outlet of the first liquid storage tank is connected to the inlet of the first path of the cooler and an inlet of the evaporator.

21. The thermal management system according to claim 19 or 20, wherein the thermal system loop further comprises a gas-liquid separator, an inlet of the gas-liquid separator is connected to the outlet of the first path of the cooler and an outlet of the evaporator, and an outlet of the gas-liquid separator is connected to the inlet of the compressor.

22. The thermal management system according to claim 18, wherein the air conditioner box in the passenger compartment further has a second path; the first path of the air conditioner box in the passenger compartment and the second path of the air conditioner box in the passenger compartment are isolated from each other; an evaporator is disposed in the first path of the air conditioner box in the passenger compartment, and a second condenser is disposed in the second path of the air conditioner box in the passenger compartment; and an inlet of the second condenser is connected to the outlet of the compressor, and an outlet of the second condenser is connected to the inlet of the first path of the cooler and an inlet of the evaporator;
the first condenser further has a second path, and the first path of the first condenser and the second path of the first condenser are isolated from each other;
the thermal management system further comprises a first valve body, wherein the first valve body comprises a first path, and the first path of the first valve body has a first port and a second port;
the thermal system loop further comprises a first pump; the second port of the first valve body is connected to an inlet of the first pump, an outlet of the first pump is connected to an inlet of the second path of the first condenser, and an outlet of the second path of the first condenser is connected to the first port of the first valve body; and
the thermal system loop is further provided with a second cooling medium, and the first pump is configured to drive the second cooling medium to circulate in the second path of the first condenser.

23. The thermal management system according to claim 22, wherein the thermal system loop further comprises a second liquid storage tank, an inlet of the second liquid storage tank is connected to the outlet of the first path of the first condenser and the outlet of the second condenser, and an outlet of the second liquid storage tank is connected to the inlet of the first path of the cooler and the inlet of the evaporator.

24. The thermal management system according to claim 23, wherein a first one-way valve is disposed between the outlet of the first path of the first condenser and the inlet of the second liquid storage tank, and the first one-way valve is used for the outlet of the first path of the first condenser and the inlet of the second liquid storage tank to communicate unidirectionally; and
a second one-way valve is disposed between the outlet of the second condenser and the inlet of the second liquid storage tank, and the second one-way valve is used for the outlet of the second condenser and the inlet of the second liquid storage tank to communicate unidirectionally.

25. The thermal management system according to any one of claims 19 to 24, wherein an inlet of the heater is connected to the outlet of the first pump, and an outlet of the heater is connected to the inlet of the second path of the first condenser; or
an inlet of the heater is connected to the outlet of the second path of the first condenser, and an outlet of the heater is connected to the inlet of the first pump.

26. The thermal management system according to any one of claims 18 to 24, wherein the heater is disposed between the first condenser and the air conditioner box in the passenger compartment, the inlet of the heater is connected to the outlet of the first path of the first condenser, and the outlet of the heater is connected to the inlet of the first path of the air conditioner box in the passenger compartment; or
the heater is disposed between the first condenser and the compressor, the inlet of the heater is connected to the outlet of the first path of the first condenser, and the outlet of the heater is connected to the inlet of the compressor.

27. The thermal management system according to any one of claims 19 to 25, wherein the thermal management system further comprises a battery heat exchange loop, and the battery heat exchange loop comprises a battery and a second pump;
the first valve body further comprises a second path and a third path; the second path of the first valve body has a third port and a sixth port; and the third path of the first valve body has a fourth port and a fifth port;
the third port of the first valve body is connected to an inlet of the second pump, an outlet of the second pump is connected to an inlet of the battery, and an outlet of the battery is connected to the fourth port of the first valve body;
the cooler further has a second path, and the first path of the cooler and the second path of the cooler are isolated from each other; the fifth port of the first valve body is connected to an inlet of the second path of the cooler, and an outlet of the second path of the cooler is connected to the sixth port of the first valve body; and
the second pump is configured to drive a third cooling medium to circulate between the battery heat exchange loop and the second path of the cooler.

28. The thermal management system according to claim 27, wherein the first valve body further comprises a fourth path and a fifth path; the fourth path of the first valve body has the first port and the third port; and the fifth path of the first valve body has the second port and the fourth port.

29. The thermal management system according to claim 27 or 28, wherein the inlet of the second pump is connected to the inlet of the second path of the first condenser; a first three-way valve is disposed between the inlet of the second path of the first condenser and the outlet of the first pump; the first three-way valve has a first port, a second port, and a third port; and the first port of the first three-way valve is connected to the inlet of the second path of the first condenser, the second port of the first three-way valve is connected to the outlet of the first pump, and the third port of the first three-way valve is connected to the inlet of the second pump.

30. The thermal management system according to claim 29, wherein a third one-way valve is disposed between the inlet of the second pump and the inlet of the second path of the first condenser, and the third one-way valve is used for the inlet of the second pump and the inlet of the second path of the first condenser to communicate unidirectionally.

31. An electric vehicle, comprising a controller and the thermal management system according to any one of claims 14 to 30, wherein the controller is connected to the thermal management system, and the controller is configured to control the thermal management system to run in a mode in which a passenger compartment is separately heated.

32. The electric vehicle according to claim 31, wherein the thermal management system further comprises a first valve body and a battery heat exchange loop; the controller is connected to the first valve body; and the controller is configured to control ports of the first valve body to communicate or not communicate with each other, so that the thermal management system runs in any one of the following modes: the passenger compartment is separately heated, a battery is separately heated, and the passenger compartment and the battery are simultaneously heated.

33. A thermal management system, comprising a thermal system loop, a first valve body, a battery heat exchange loop, and a heater, wherein the heater is disposed in the battery heat exchange loop;
the first valve body comprises a second path and a third path; the second path of the first valve body has a third port and a sixth port; and the third path of the first valve body has a fourth port and a fifth port;
the thermal system loop comprises a compressor and a cooler; the cooler has a first path and a second path that are isolated from each other; an inlet of the first path of the cooler is connected to an outlet of the compressor, and an outlet of the first path of the cooler is connected to an inlet of the compressor; an inlet of the second path of the cooler is connected to the fifth port of the first valve body, and an outlet of the second path of the cooler is connected to the sixth port of the first valve body; and the thermal system loop is provided with a first cooling medium, and the first cooling medium circulates between the compressor and the first path of the cooler;
the battery heat exchange loop comprises a second pump, a second three-way valve, and a battery; the second three-way valve has a first port, a second port, and a third port; an inlet of the second pump is connected to the third port of the first valve body, an outlet of the second pump is connected to the first port of the second three-way valve, the second port of the second three-way valve is connected to an inlet of the battery, and the third port of the second three-way valve and an outlet of the battery are connected to the fourth port of the first valve body; and the second pump is configured to drive a third cooling medium to circulate between the battery heat exchange loop and the second path of the cooler; and
the heater is configured to heat the third cooling medium, so that the third cooling medium is capable of performing heat exchange with the first cooling medium in the cooler when circulating in the battery heat exchange loop, to heat the first cooling medium.

34. The thermal management system according to claim 33, wherein an inlet of the heater is connected to the third port of the second three-way valve, and an outlet of the heater is connected to the fourth port of the first valve body;
an inlet of the heater is connected to the third port of the second three-way valve and the outlet of the battery, and an outlet of the heater is connected to the fourth port of the first valve body; or
an inlet of the heater is connected to the fifth port of the first valve body, and an outlet of the heater is connected to the inlet of the second path of the cooler.

35. The thermal management system according to claim 33 or 34, wherein the first valve body further comprises a first path, and the first path has the first port and the second port;
the thermal system loop further comprises a first condenser, an air conditioner box in a passenger compartment, and a first pump; and the first condenser has a first path and a second path that are isolated from each other, and the air conditioner box in the passenger compartment comprises an evaporator and a first heater core;
an inlet of the first path of the first condenser is connected to the outlet of the compressor, an outlet of the first path of the first condenser is connected to the inlet of the first path of the cooler and an inlet of the evaporator, and an outlet of the evaporator is connected to the inlet of the compressor; and the second port of the first valve body is connected to an inlet of the first pump, an outlet of the first pump is connected to an inlet of the first heater core, an outlet of the first heater core is connected to an inlet of the second path of the first condenser, and an outlet of the second path of the first condenser is connected to the first port of the first valve body; and
the thermal system loop is further provided with a second cooling medium, and the first pump is configured to drive the second cooling medium to circulate between the second path of the first condenser and a second path of the air conditioner box in the passenger compartment.

36. The thermal management system according to claim 35, wherein the thermal system loop further comprises a first liquid storage tank, an inlet of the first liquid storage tank is connected to the outlet of the first path of the first condenser, and an outlet of the first liquid storage tank is connected to the inlet of the first path of the cooler and the inlet of the evaporator.

37. The thermal management system according to claim 35, wherein the thermal system loop further comprises a gas-liquid separator, an inlet of the gas-liquid separator is connected to the outlet of the first path of the cooler and the outlet of the evaporator, and an outlet of the gas-liquid separator is connected to the inlet of the compressor.

38. The thermal management system according to claim 33 or 34, wherein the first valve body further comprises a first path, and the first path has the first port and the second port;
the thermal system loop further comprises a first condenser, an air conditioner box in a passenger compartment, and a first pump; and the first condenser has a first path and a second path that are isolated from each other, and the air conditioner box in the passenger compartment comprises an evaporator and a second condenser;
the outlet of the compressor is connected to an inlet of the first path of the first condenser and an inlet of the second condenser, an outlet of the first path of the first condenser is connected to the inlet of the first path of the cooler and an inlet of the evaporator, an outlet of the second condenser is connected to the inlet of the first path of the cooler and the inlet of the evaporator, and an outlet of the evaporator is connected to the inlet of the compressor; and the second port of the first valve body is connected to an inlet of the first pump, an outlet of the first pump is connected to an inlet of the second path of the first condenser, and an outlet of the second path of the first condenser is connected to the first port of the first valve body; and
the thermal system loop is further provided with a second cooling medium, and the first pump is configured to drive the second cooling medium to circulate in the second path of the first condenser.

39. The thermal management system according to claim 38, wherein the air conditioner box in the passenger compartment further comprises a second heater core, an inlet of the second heater core is connected to the outlet of the first pump, and an outlet of the second heater core is connected to the inlet of the second path of the first condenser.

40. The thermal management system according to claim 38 or 39, wherein the thermal system loop further comprises a second liquid storage tank, an inlet of the second liquid storage tank is connected to the outlet of the first path of the first condenser and the outlet of the second condenser, and an outlet of the second liquid storage tank is connected to the inlet of the first path of the cooler and the inlet of the evaporator.

41. The thermal management system according to claim 40, wherein a first one-way valve is disposed between the outlet of the first path of the first condenser and the inlet of the second liquid storage tank, and the first one-way valve is used for the outlet of the first path of the first condenser and the inlet of the second liquid storage tank to communicate unidirectionally; and
a second one-way valve is disposed between the outlet of the second condenser and the inlet of the second liquid storage tank, and the second one-way valve is used for the outlet of the second condenser and the inlet of the second liquid storage tank to communicate unidirectionally.

42. An electric vehicle, comprising a controller and the thermal management system according to any one of claims 33 to 41, wherein
the controller is connected to a first valve body of the thermal management system; and the controller is configured to control ports of the first valve body to communicate or not communicate with each other, so that the thermal management system runs in any one of the following modes: a passenger compartment is separately heated, a battery is separately heated, and the passenger compartment and the battery are simultaneously heated.

43. A thermal management system, comprising a thermal system loop, a first valve body, an electric-drive heat dissipation loop, and a heater, wherein the heater is disposed in the electric-drive heat dissipation loop;
the first valve body comprises a tenth path, a ninth path, and a twelfth path, the tenth path of the first valve body has a fifth port and an eighth port, the ninth path of the first valve body has a sixth port and a seventh port, and the twelfth path of the first valve body has a sixth port and a ninth port;
the thermal system loop comprises a compressor and a cooler; the cooler has a first path and a second path that are isolated from each other; an inlet of the first path of the cooler is connected to an outlet of the compressor, and an outlet of the first path of the cooler is connected to an inlet of the compressor; an inlet of the second path of the cooler is connected to the fifth port of the first valve body, and an outlet of the second path of the cooler is connected to the sixth port of the first valve body; and the thermal system loop is provided with a first cooling medium, and the first cooling medium circulates between the compressor and the first path of the cooler;
the electric-drive heat dissipation loop comprises an electric-drive apparatus, a third pump, a water tank, and a third three-way valve; an inlet of the electric-drive apparatus is connected to the seventh port of the first valve body and the ninth port of the first valve body, an outlet of the electric-drive apparatus is connected to the water tank and an inlet of the third pump, and an outlet of the heater is connected to the inlet of the third pump; and the third pump is configured to drive a fourth cooling medium to circulate between the electric-drive heat dissipation loop and the cooler;
the third three-way valve has a first port, a second port, and a third port; the first port of the third three-way valve is connected to the ninth port of the first valve body, or the first port of the third three-way valve is connected to the seventh port of the first valve body; the second port of the third three-way valve is connected to the inlet of the electric-drive apparatus; and the third port of the third three-way valve is connected to an inlet of the heater; and
the heater is configured to heat the fourth cooling medium, so that the fourth cooling medium is capable of performing heat exchange with the first cooling medium in the cooler when circulating between the electric-drive heat dissipation loop and the cooler, to heat the first cooling medium.

44. The thermal management system according to claim 43, wherein the electric-drive heat dissipation loop further comprises a thermal management assembly in a front compartment; an inlet of the thermal management assembly in the front compartment is connected to the seventh port of the first valve body, and an outlet of the thermal management assembly in the front compartment is connected to the inlet of the electric-drive apparatus; and
the second port of the third three-way valve is connected to the inlet of the thermal management assembly in the front compartment; or the second port of the third three-way valve is connected to the outlet of the thermal management assembly in the front compartment and the inlet of the electric-drive apparatus.

45. An electric vehicle, comprising a controller and the thermal management system according to claim 43 or 44, wherein the controller is connected to the thermal management system, and the control apparatus is configured to control ports of the first valve body to communicate or not communicate with each other, so that the thermal management system runs in a mode in which a passenger compartment is separately heated.
